(19) Europäisches Patentamt / European Patent Office / Office européen des brevets

(11) **EP 3 730 265 B1**

(12) **EUROPEAN PATENT SPECIFICATION**

(45) Date of publication and mention
of the grant of the patent:
**17.07.2024 Bulletin 2024/29**

(21) Application number: **18887830.0**

(22) Date of filing: **18.04.2018**

(51) International Patent Classification (IPC):
**B29C 48/88** (2019.01)  **B29C 48/92** (2019.01)
**B29C 48/08** (2019.01)  **B29C 48/305** (2019.01)
**B29C 48/14** (2019.01)  **B29C 48/25** (2019.01)
**B29C 43/46** (2006.01)

(52) Cooperative Patent Classification (CPC):
**B29C 48/08; B29C 48/305; B29C 48/914;**
**B29C 48/9165; B29C 48/92;** B29C 43/46;
B29C 48/142; B29C 48/251; B29C 2948/92542

(86) International application number:
**PCT/JP2018/015955**

(87) International publication number:
**WO 2019/116600 (20.06.2019 Gazette 2019/25)**

(54) **COOLING ROLL AND METHOD FOR PRODUCING THERMOPLASTIC RESIN SHEET USING SAME**

KÜHLWALZE UND VERFAHREN ZUR HERSTELLUNG EINER THERMOPLASTISCHEN HARZFOLIE DAMIT

ROULEAU DE REFROIDISSEMENT ET MÉTHODE DE PRODUCTION DE FEUILLE DE RÉSINE THERMOPLASTIQUE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2017 JP 2017239839**

(43) Date of publication of application:
**28.10.2020 Bulletin 2020/44**

(73) Proprietor: **Koka Chrome Industry Co., Ltd.**
**Tokyo 123-0865 (JP)**

(72) Inventors:
• **TAIRA Susumu**
**Tokyo 123-0865 (JP)**
• **FUKUSHIMA Noboru**
**Tokyo 123-0865 (JP)**
• **TSUNASHIMA Kenji**
**Tokyo 123-0865 (JP)**

(74) Representative: **Dehns**
**St. Bride's House**
**10 Salisbury Square**
**London EC4Y 8JD (GB)**

(56) References cited:
EP-A1- 0 122 721   EP-A2- 1 156 522
EP-A2- 1 273 427   WO-A1-95/01081
JP-A- 2000 296 528   JP-A- 2010 242 217
JP-A- H0 248 922   JP-A- S6 034 826
JP-B1- S 508 743   US-A- 5 616 263
US-A- 6 069 346

**Description**

Technical Field

The present invention relates to a cooling roll that is suitable for manufacturing a resin sheet made of a thermoplastic resin having a volume resistivity value of $10^9$ $\Omega$cm or less in a molten state, particularly a polyamide-based resin, a polyester-based resin, or a saponified ethylene-vinyl acetate copolymer-based (abbreviated as "EVOH-based" hereinafter) resin, and a method for manufacturing a thermoplastic resin sheet using the cooling roll. More specifically, the present invention relates to a cooling roll that is suitable for manufacturing of a resin sheet in which crystallization is suppressed by utilizing an electrostatic force to enable a thermoplastic resin sheet extruded from a mouthpiece to come into intimate contact with the surface of the cooling roll and then rapidly cooling the thermoplastic resin sheet, and suitable for manufacturing of a resin sheet with a smooth and beautiful external appearance and a favorable thickness uniformity, and a method for manufacturing the resin sheet.

Background Art

As a method for cooling and solidifying a molten thermoplastic resin sheet using a cooling roll coated with a conductive metal such as hard chrome plating, the following method is known and is employed in many production sites (Patent Document 1). That is, a resin sheet is manufactured using a method (referred to as "electrostatic pinning method" hereinafter) including: providing a pinning electrode formed of a wire, a blade, or the like that extends in the width direction of the molten resin sheet above the air face of the molten resin sheet, which is a surface on a side opposite to the surface in intimate contact with the cooling roll; injecting charged ions generated by applying a high voltage to the electrode into the molten resin sheet and thereby electrifying the molten resin sheet; and cooling and solidifying the molten resin sheet that has been in intimate contact with the surface of the cooling roll due to a Coulomb force acting between the charges applied to the molten resin sheet and the surface of the cooling roll. In this method, the optimum volume resistivity value of a molten thermoplastic resin is limited to a considerably narrow range from $10^7$ $\Omega$cm to $10^8$ $\Omega$cm. Accordingly, this method is a very effective means for obtaining an intimate contact state of a sheet made of a specific resin such as polyethylene terephthalate (PET) or polyethylene naphthalate (PEN) that can satisfy such a condition. However, with this method, strong adhesion cannot be achieved in a resin sheet made of a polyamide-based resin, an EVOH-based resin, or the like having a volume resistivity value in a range from $10^4$ $\Omega$cm to $10^6$ $\Omega$cm, which is a range of the case of electric conductors, in a molten state, for the following reasons.
(1) With the electrostatic pinning method, space charges generated near the electrode by electric discharge have no directivity and are radially radiated around the wire electrode, and therefore, the amount of charges supplied to the molten resin sheet is very small. Charges other than those supplied to the molten resin sheet are discharged into air, and thus the amount of charges supplied to the molten resin sheet is less than the amount needed to achieve the intimate contact state of the molten resin sheet. (2) Since the molten resin sheet has a volume resistivity value in a range of the case of electric conductors, charges injected in the electrostatic pinning method are likely to be dissipated to the mouthpiece, and in addition, charges are likely to flow to the surface of the cooling roll made of a good conductor when a molten resin sheet comes into contact with the surface of the cooling roll. Thus, the amount of charges becomes insufficient, and the electrostatic adhesion between the resin sheet and the cooling roll is impaired.
Furthermore, with the electrostatic pinning method, a high voltage is applied to the pinning electrode, and therefore, there is a problem in that discharge sparks are likely to be made between the pinning electrode and the molten resin sheet, or are likely to be made when a molten resin sheet comes into contact with the conductive surface of the cooling roll, and thus the cooling roll and the surface of the mouthpiece are damaged.
Due to the insufficient adhesion due to these problems, the electrostatic pinning method is disadvantageous in that it is not possible to sufficiently prevent accompanying air flow from entering between the molten resin sheet and the cooling roll, which results in occurrence of crater-like surface defects on the surface of the obtained resin sheet, as well as oligomers generated from the surface of the molten resin sheet attach to the surface of the cooling roll in a short period of time in a space between the cooling roll and the molten resin sheet.
That is, when used as a method for obtaining the intimate contact state of a resin sheet made of a polyamide-based resin, an EVOH-based resin, or the like having a small volume resistivity value in a molten state, the electrostatic pinning method cannot provide a high-quality resin sheet and is not suitable for high-speed and high-efficiency mass production.
Various means for solving such problems of the electrostatic pinning method have been proposed. Examples of the proposals include: an air knife method in which compressed air is blown on an intimate contact point of a molten resin sheet to bring the molten resin sheet into intimate contact with a cooling roll (Patent Document 2); a method in which electrostatic adhesion is increased by increasing an electric current density using streamer corona discharge and thus the amount of charges applied to a molten resin sheet is increased (Patent Document 3); a method in which an electrical insulating coating is provided on the surface of a cooling roll made of a metal to prevent charges from leaking from a molten resin sheet to the cooling roll, and thus adhesion is increased when electrostatic pinning is performed using a molten resin sheet made of polyamide or the like having a low volume resistivity value (Patent Document 4); a method in which an electrical insulating coating is provided on the surface of a cooling roll made of a metal in the same manner as in the above-mentioned method and charges are directly applied to the electrical insulating coating from a pinning electrode to electrify the electrical insulating coating, and thus an electrostatic force is increased (Patent Documents 5 to 7); a method in which the application of charges to a molten resin sheet from a pinning electrode and the application of charges opposite in polarity to the charges applied to the molten resin sheet to the surface of the electrical insulating coating are performed together (Patent Documents 8 to 10); a method in which a semiconductor layer is formed on the surface of a cooling roll made of a metal to prevent charges from dissipating to the surface of the roll and charges are applied to a molten resin sheet from a pinning electrode (Patent Documents 11 and 12); and a method in which a high voltage is applied to an electrode provided inside a cooling roll to bring a molten resin sheet into intimate contact with the surface of the cooling roll (Patent Documents 13 and 14). EP 0 122 721 A1 and EP 1 273 427 A2 disclose further methods of cooling a thermoplastic film by applying electrostatic adhesion due to Coulomb force which enables electrostatic adhesion to almost all types of thermoplastic resins independent of their volume resistivity values.

Citation List

Patent Documents

Patent Document 1: JP S37-6142B
Patent Document 2: JP S37-8978B
Patent Document 3: JP S59-23270B
Patent Document 4: JP H1-46304B
Patent Document 5: JP S48-14784B
Patent Document 6: JP S48-14785B
Patent Document 7: JP S63-7135B
Patent Document 8: JP S48-29311B
Patent Document 9: JP H6-98672B
Patent Document 10: JP 63-11969B
Patent Document 11: JP H11-58498A
Patent Document 12: JP H15-127207A
Patent Document 13: JP S50-8743B
Patent Document 14: JP S63-13815B

Disclosure of Invention

Problem to be Solved by the Invention

The air knife method as disclosed in Patent Document 2 is employed in the formation of a polyamide resin sheet and the like in which the intimate contact state cannot be obtained in the case of using the electrostatic pinning method disclosed in Patent Document 1. In this method, unlike Patent Document 1, charges are not injected using a pinning electrode to which a high voltage is applied, and therefore, trouble caused by discharge sparks, a decline in quality of a sheet, and the like do not occur. However, since adhesion to the surface of the cooling roll is not sufficiently increased by air pressure of compressed air flow, accompanying air flow enters between the surface of the molten resin sheet and the surface of the cooling roll, and thus the cooling efficiency is low, and the maximum sheet formation speed is 30 to 40 m/min, which is a slow production speed. In addition, a large amount of low-molecular-weight components such as oligomers that have volatilized from the molten resin sheet attaches to the surface of the cooling roll while a sheet formation process is performed for 6 to 8 hours, which correspond to a relatively short period of time. Accordingly, a production line needs to be frequently stopped to clean the surface of the cooling roll, leading to a low operating ratio. Thus, the productivity in this method is really poor, and this is a major problem.
With the electrostatic pinning method as disclosed in Patent Document 3 in which an electrification amount is increased by irradiating the molten resin sheet with streamer corona discharge having a high electric current density, a polyamide-based molten resin sheet can be reliably brought into intimate contact with the cooling roll, thus making it possible to forming a sheet at a high speed. However, since a high electric current needs to be applied to generate such streamer corona discharge, there is a risk of an electric shock, and a major problem in ensuring safety of workers is posed. Furthermore, many needle-like electrodes having a sharp tip need to be uniformly lined up in a single row in the width direction of the molten resin sheet to generate such streamer corona, and if low-molecular-weight sublimates such as monomers and oligomers generated from the molten sheet attach to and accumulate on the sharp tips of the needle-like electrodes during a short-term sheet formation process, stable corona discharge cannot be maintained, and in addition, streaky surface defects occur on the surface of the obtained sheet. This method is significantly disadvantageous in that, in order to prevent these problems, it is absolutely necessary to frequently clean the tips of the needle-like electrodes or frequently replace the electrodes with new ones, and the formation of the sheet has to be stopped each time. Moreover, there is a problem in that the sublimates that have accumulated on the tips of the needle-like electrodes fall therefrom and soil the surface of the molten resin sheet. Furthermore, after the sharp needle-like electrodes have been used for a long period of time, the needle tips are slightly worn down, and thus the heights of the needles slightly vary. This poses a critical problem in that it is difficult to control the accuracy of the electrodes for the reason that corona cannot be uniformly generated in the width direction of the sheet, which leads to ununiform adhesion, and the like.

The method as disclosed in Patent Document 4 in which an insulating coating made of aluminum oxide (alumina) or the like is provided on the surface of a cooling roll made of a metal for the purpose of preventing charges from leaking from a molten resin sheet to the surface of the roll and charges are applied to the molten resin sheet using the electrostatic pinning method certainly has an effect of preventing charges from leaking from a molten resin sheet to the surface of the roll in the case where the molten resin sheet has a small volume resistivity value. However, the adhesion between the molten resin sheet and the surface of the roll depends on the amount of antipolar charges that are induced to the surface of the cooling roll by charges applied to the molten resin sheet, but the amount of charges generated by dielectric polarization is small on the surface of the insulating coating, and thus the electrostatic adhesion (Coulomb force) between the charges of the molten resin sheet and the antipolar charges of the surface of the roll is weak. Accordingly, it is necessary to increase an electrification amount of the molten resin sheet as much as possible in order to obtain sufficient adhesion, and thus this method is significantly disadvantageous in that voltage applied to the pinning electrode is 15 to 35 kV, which is greater than or equal to the withstanding voltage of the insulating coating, and spark discharge causes damage to the insulating coating.

In order to avoid this, the method as disclosed in Patent Documents 5 to 7 in which charges are directly applied to the surface of an insulated roll may be performed. However, charge application target is the surface of the insulating coating, and therefore, it is essential to apply a high voltage to increase an electrification amount. Thus, this method has a problem caused by dielectric breakdown that is similar to the problem as mentioned above. Furthermore, there is also a problem in that spark discharge is likely to occur due to peeling electrification when a resin sheet is peeled off from the cooling roll provided with an insulating coating, and charges generated by peeling electrification remain on the surface of the insulating coating on the surface of the cooling roll, thus making it impossible to form a sheet efficiently and stably. That is, the charges of the surface of the insulating coating do not disappear for a long period of time, and thus this method is significantly disadvantageous in that, when the surface of the cooling roll electrified with these charges is moved to the mouthpiece portion, the molten resin sheet cannot come into intimate contact with the cooling roll at all due to electrostatic repellent force because same-polarity charges are applied to the molten resin sheet. Accordingly, it is necessary to remove the charges of the surface of the insulating coating, but only about half of the electrification of the surface of the insulating coating can be removed through electricity removal of a space charge application type. Furthermore, although charges can be removed to some extent with a method in which electricity is removed by directly bringing a conductive brush including carbon fibers or the like into contact with the cooling roll, the brush is damaged due to sliding on the surface of the cooling roll, a portion of the brush comes off, and a fragment thereof or soil attaches to the surface of the cooling roll, which causes a surface defect of the molten resin sheet. Therefore, this method cannot be used in production.

It will be appreciated that the method as disclosed in Patent Documents 8 to 10 in which charges having mutually inverse polarities are respectively applied to the electrical insulating coating on the surface of a cooling roll and a molten resin sheet has a problem similar to the problem as mentioned above.

The method as disclosed in Patent Documents 1 1 and 12 is proposed in which a semiconductor coating having a volume resistivity of $10^7$ $\Omega$cm or more is formed on the surface of a cooling roll made of a metal and a voltage is applied to a molten resin sheet using a pinning electrode to electrify the molten resin sheet. This method enables the electrostatic intimate contact state of a sheet made of a polyamide resin or the like having a small volume resistivity value in a molten state, but the amount of charges generated by dielectric polarization is small on the surface of a cooling roll in the same manner as in Patent Document 3 because the surface of the cooling roll has a large volume resistivity value, and adhesion is still insufficient to form a sheet at a high speed. The semiconductor coating has a low withstanding voltage of 8 kV or less, and therefore, if a high voltage of 10 kV or more is applied to the pinning electrode in order to increase adhesion, dielectric breakdown frequently occurs in the semiconductor coating on the surface of the roll due to spark discharge on the surface of the cooling roll. Accordingly, this semiconductor coating cannot be used in a production apparatus.

The method as disclosed in Patent Documents 13 and 14 is a method in which a voltage is applied to a conductive internal electrode provided inside a cooling roll to bring a molten resin sheet into the state of electrostatic intimate contact with the surface of the cooling roll unlike the method such as the electrostatic pinning method in which charges generated through space discharge are applied to a molten resin sheet, and the method in which charges are directly applied from a pinning electrode to a highly insulating layer provided on the surface of the cooling roll in a similar manner.

Patent Document 13 discloses that, in a state in which an insulating bushing is inserted into a mechanical rotation portion and a core metal itself of a cooling roll is insulated from a ground using an electrical insulating organic coolant (a paraffin/trichlene mixed coolant in this case), charges are applied to the core metal (corresponding to an internal electrode) of the cooling roll to electrify the surface of the conductive roll made of a metal, and thus a molten resin sheet made of polyethylene terephthalate (PET) is brought into the state of electrostatic intimate contact with the cooling roll. However, in general, an electrical insulating organic coolant has a very poor ability to cool a hot molten resin sheet compared with the heat-exchange ability of water, which has favorable thermal conductivity, as well as has a poor ability to restore the temperature of the surface of the cooling roll after the molten resin sheet has been peeled off. Accordingly, the molten resin sheet cannot be sufficiently cooled, the resin sheet formation speed cannot be increased, and only a resin sheet having a high crystallization degree and poor transparency is obtained.

Moreover, with the method disclosed in Patent Document 13, relatively large spark discharge is likely to occur just before the molten resin sheet connected to a ground via a mouthpiece comes close to and comes into contact with the surface of the metal roll to which a high voltage is applied. As a countermeasure to prevent the above-mentioned problem and electric shock, a structure in which a $10^9$-$\Omega$ resistor is connected to the output side of a power source to limit the current supply very strongly is employed, and a voltage applied to the surface of the cooling roll is set to be a low voltage of 1 kV or less. However, the adhesion of the molten resin sheet made of PET is very weak at this level of voltage, and the entrainment of air cannot be prevented, thus posing an important problem in that crater-like defects occurs on the surface and the surface of the molten resin sheet becomes roughened.

Furthermore, when the surface of the cooling roll is made of an electric conductor and a voltage is applied to the electric conductor as in Patent Document 13, even extremely weak adhesion is generated with respect to the molten resin sheet made of PET, which is a highly resistive resistor having a volume resistivity value of $10^7$ $\Omega$cm or more that is higher than that of a semiconductor, because the electric potential difference between the cooling roll and the PET molten resin sheet can be kept. However, in the case of a conductive polyamide-based molten resin sheet having a volume resistivity value of $10^6$ $\Omega$cm or less, an electric current (charge) flows from the cooling roll to the molten resin sheet just after the molten resin sheet has come into contact with the surface of the cooling roll, and the electric potential difference between the cooling roll and the molten resin sheet decreases, leading to the loss of adhesion. Accordingly, with the method as disclosed in Patent Document 13 in which the surface of the cooling roll is conductive and a voltage is applied to the surface of the cooling roll, a polyamide-based molten resin sheet having a low volume resistivity value as well as a conductive molten resin sheet cannot be formed. Due to some major defects described above, the method as disclosed in Patent Document 13 in which the outermost layer has a conductive metal surface and a voltage is applied thereto to electrify it is not suitable as a method for manufacturing a thermoplastic resin sheet.

In Patent Document 14, the method disclosed in Patent Document 13 is improved such that an applied voltage can be increased. An insulating layer is formed on the surface of a cooling roll, an internal electrode layer is formed on the insulating layer, and as the outermost layer formed on the internal electrode layer, a polyamide resin (nylon resin) layer with a thickness of 0.5 mm that has a volume resistivity value of $10^{15}$ $\Omega$cm at 25°C, is highly insulating and high-voltage resistant, and has characteristics of a negative thermosensitive semiconductor. Using highly insulating and high-voltage resistant nylon in the outermost layer makes it possible to prevent spark discharge from occurring between the surface of the cooling roll and the mouthpiece even when applying a very high voltage of 15 to 35 kV to the internal electrode layer. Furthermore, the purpose of using a nylon resin, which is a thermosensitive material, in the outermost layer is to prevent micro-discharge that occurs just before the molten resin sheet comes into contact with the cooling roll, and thereby prevent the electrostatic intimate contact state of the molten resin sheet from being unstable and increase the applied voltage as much as possible, and thus obtain higher electrostatic adhesion.

A nylon resin certainly exhibits very significant thermosensitive properties. Specifically, even when the temperature changes by about 100°C, the volume resistivity value decreases even by a factor of about $10^{-6}$, specifically from $10^{13}$ $\Omega$cm or more to about $10^7$ Qcm. In the case where the volume resistivity value or surface resistivity of the surface of the outermost layer significantly changes as described above due to an increase in temperature caused by contact with the molten resin sheet, such as a case where a nylon resin is used, there may be a possibility that micro-discharge is prevented for some reason or other.

Incidentally, when a highly insulating material such as a nylon resin having a volume resistivity value of $10^{13}$ to $10^{15}$ $\Omega$cm is layered to form the outermost layer, a force to bring a molten polyester resin sheet or the like, which is an attracted substance, into the state of intimate contact with the surface of the outermost layer is an electrostatic force generated by charges that are induced and accumulated between the internal electrode and the molten polyester resin sheet, which is an attracted substance, so as to sandwich the outermost layer, which is a highly insulating layer, therebetween. At this time, an adhesion P (Pa) is called a Coulomb force and is represented by Equation (1). Here, V (V) is the voltage applied to the internal electrode, and $d_C$ (m) is the distance between the internal electrode and the attracted substance. The distance $d_C$ is substantially the same as the thickness of the outermost layer when the attracted substance is in contact with the surface of the outermost layer, $\varepsilon_0$ is the dielectric constant of a vacuum, and $\varepsilon_1$ is the relative dielectric constant of the outermost layer.

$$P=1/2 \cdot \varepsilon_0 \varepsilon_1 \cdot (V/d_C)^2 \qquad (1)$$

Here, the volume resistivity value of the surface portion of the outermost layer in contact with the molten resin sheet decreases due to an increase in temperature caused by heat transmitted from the molten resin sheet. However, a nylon resin constituting the outermost layer has a significantly poor thermoelectric conductivity and the outermost layer has a large thickness of 0.5 mm and thus has high heat-insulating properties. Therefore, it is hypothesized that the temperature of the lower portion of the outermost layer is substantially the same as that of the internal electrode, and the outermost layer maintains the insulating state as a whole.

As is clear from Equation (1), the Coulomb force-type adhesion P is proportional to $V^2$ and inversely proportional to $d_C^2$. Accordingly, in order to increase the adhesion P, it is sufficient that the applied voltage V is increased and the thickness $d_C$ is reduced to increase $V/d_C$. However, if the thickness $d_C$ of the outermost layer is kept small, when the applied voltage V is increased, the withstanding voltage against the applied voltage is insufficient, and dielectric breakdown occurs in the outermost layer. Therefore, the applied voltage cannot be increased, and thus Vide cannot be increased. In Example 1 in Patent Document 14, the thickness of the outermost layer, namely the nylon resin layer, is increased to 0.5 mm for the purpose of increasing the voltage resistance of the outermost layer and further increasing the applied voltage. However, in this case, $d_C$ in Equation (1) increases, and thus Vide decreases. Accordingly, even if the applied voltage is about 15 kV, the voltage is still insufficient and thus the adhesion is weak, so that the molten resin sheet cannot be attracted, and accompanying air flow cannot be suppressed.

Example 1 in Patent Document 14 well exhibits the characteristics of the Coulomb force-type electrostatic force represented by Equation (1) above. Specifically, irrespective of the application of a very high voltage of 15 kV, only weak adhesion is obtained due to a large distance of 0.5 mm between the internal electrode and the molten resin sheet, which is an attracted substance.

Incidentally, the withstanding voltage of a nylon resin is 45 kV/mm. Even if the outermost layer made of a nylon resin having a thickness of 0.5 mm is used, the withstanding voltage is still insufficient to further apply a high voltage of 22.5 kV or more to the internal electrode in order to increase the adhesion. Furthermore, the type of used material and the thickness of the insulating layer located under the internal electrode are not described, and thus the details are not clear. In general, a sprayed ceramics layer made of aluminum oxide or the like is often used as an insulating layer. In this case, the application of a high voltage of 15 kV or more has a risk of breakage of the insulating layer located under the internal electrode because the withstanding voltage of aluminum oxide (alumina) is about 15 kV/mm, and thus aluminum oxide cannot possibly be used in a production machine.

In general, the thermal conductivities of organic resins are much lower than those of metals and ceramics. For example, the thermal conductivities of a nylon resin and iron are 0.4 (W/m·K) and 53 (W/m·K), respectively, and the ratio of the thermal conductivity of a nylon resin to that of iron is 1/133. The nylon resin layer of the outermost layer has a large thickness of 0.5 mm, and this is already problematic in that the capability to cool the molten resin sheet is significantly impaired. In addition, the method disclosed in Patent Document 14 in which the applied voltage is further increased to increase the adhesion poses a problem in that the thickness of the outermost layer needs to be further increased, and thus the capability to cool the molten resin sheet is further impaired.

According to Patent Document 14, as a negative thermosensitive semiconductor material for preventing micro-discharge, "materials are desirable that are characterized in that, when a molten polymer sheet comes into contact therewith, the electric resistance decreases to 1/5 or less, preferably 1/10 or less, and more preferably 1/100 or less, of the electric resistance value before the contact", and "materials having a volume resistivity value of $10^0$ Ωcm or more and $10^{14}$ Ωcm or less in a temperature range from 25°C to 350°C inclusive are desirable", and thus metal-oxide thermistors (NTC thermistors) can also be used instead of resins such as nylon resins and epoxy resins. However, in the specification, the operation temperature range, the settings of the upper and lower limits of the volume resistivity value, the range of the temperature coefficient of the volume resistivity value, the type of metal oxide, and the selection of a material are not technologically and experimentally investigated at all, and the grounds thereof are not shown. Merely an example in which the outermost layer is made of a nylon resin and a comparative example in which the outermost layer is made of a metal are described. In general, most of metal oxides have a negative temperature coefficient, and exhibit thermosensitive semiconductor characteristics. For example, even a 99.9%-pure alumina sintered body, which is most used as a highly insulating oxide ceramics, has a volume resistivity value of $10^{14}$ Ωcm or more at 20°C, and $10^{10}$ to $10^{12}$ SZcm at 300°C. Accordingly, the above-mentioned range of the volume resistivity value and the range of change in the temperature are significantly wide, and the above-mentioned range encompasses those of most of the existing metal oxides. That is, the above-mentioned value range described in Patent Document 14 for preferable negative thermosensitive semiconductor materials also encompasses those of materials that do not exert the effect intended by the invention disclosed in Patent Document 14. Furthermore, regarding the example in which nylon is used as a thermosensitive material, whether or not electric potential fluctuation of the cooling roll, which is considered as the sign of the occurrence of micro-discharge, occurs is merely tested using an oscilloscope, and a change in the temperature of the surface layer made of a nylon resin of the outermost layer in the cooling roll, namely a change in the volume resistivity value, the amount of an electric current, and the like are not investigated. There is merely a description that a nylon resin is preferably used as the material of the outermost layer in order to prevent micro-discharge. In fact, as described later, in a case where the outermost layer is made of alumina, which is a highly insulating substance, when a cooled and solidified resin sheet is peeled off from the surface of the outermost layer, residual inverse charges occur on the surface of the outermost layer due to peeling electrification. The inverse charges cannot be removed in a voltage application state, and therefore, the molten resin sheet is repelled by the inverse charges and cannot be in the state of intimate contact with the outermost layer again. Accordingly, when the operation temperature is 25°C to 100°C, the outermost layer made of alumina cannot be used for the purpose intended in Patent Document 14.

In addition, Patent Document 14 states that a metal oxide-based thermistor can be used for the purpose of preventing micro-discharge. However, existing oxide-based thermistors (NTC thermistor) to be used at a temperature near the normal temperature include only those having a volume resistivity of $10^6$ to $10^7$ $\Omega$cm or less. Patent Document 14 shows no examples in which these metal oxides are used, and whether or not using these metal oxides actually exerts "an effect of preventing micro-discharge due to a decrease in resistance" is not technologically or experimentally investigated. Furthermore, materials having a volume resistivity value of $10^6$ $\Omega$cm or less are classified as conductive materials in the static electricity field. Accordingly, when a high application voltage of 15 kV or more, which is an object of Example 1, is used, spark discharge between the surface of the cooling roll and the mouthpiece cannot be prevented using the thermistor having such insulation performance. When an NTC thermistor having a volume resistivity value similar to those of electric conductors is used in the outermost layer, the intimate contact state of a polyamide-based molten resin sheet and the like having a low volume resistivity value cannot be obtained as in the case of Patent Document 13. It is clear that the method as proposed above in Patent Document 14 in which micro-discharge is prevented using some kind of method to eliminate the instability of adhesion, a voltage applied to the internal electrode is thus increased to a voltage as high as possible in a range from 15 to 35 kV, and thereby adhesion of the molten resin sheet to the surface of the cooling roll is obtained cannot be used in a production apparatus at all from the viewpoint of the adhesion strength, the cooling ability, the sheet quality, the safety, and ease of maintenance.

As described above, methods for forming a sheet in which various method for obtaining an intimate contact state are proposed, but conventional methods have problems as follows.

The following are in the case of the air knife method.

(1) Adhesion is weak, and a sheet cannot be formed at a high speed.
(2) The cooling roll is soiled over time.

The following are in the case of the electrostatic pinning method.

(3) Only when a molten resin sheet has an appropriate volume resistivity value, the pinning method can be applied. In particular, it is difficult to form a sheet from a molten resin sheet having a low volume resistivity value, such as a molten resin sheet made of a polyamide resin.
(4) Because a high voltage is used, the surface of the cooling roll is damaged by discharge sparks.
(5) The obtained resin sheet has discharge scars.
(6) The obtained resin sheet has surface defects caused by peeling electrification.
(7) The inside of the obtained resin sheet is electrified.
(8) There is a safety problem.

The following is in the case of the method in which a voltage is applied to the internal electrode to bring the molten resin sheet into the intimate contact state.

(9) Adhesion is weak, a sheet formation speed is slow, and the intimate contact state is unstable.
(10) When a highly insulating outermost layer is provided, a very high applied voltage is needed to obtain practical adhesion, which is highly risky and is not practical.
(11) When the outermost layer is highly insulating, continuous sheet formation cannot be performed due to the influence of residual charges caused by peeling electrification.

The first object of the present invention is to solve all of the above-mentioned problems of a conventional electrostatic pinning method and all of the quality failures caused thereby and to stabilize high-speed sheet formation using a molten resin sheet having a volume resistivity value of $10^9$ $\Omega$cm or less for a long period of time.

The second object of the present invention is to provide a cooling roll and a method for manufacturing a thermoplastic resin sheet in which an entirely new method for obtaining an electrostatic intimate contact state is used and that can also be applied to a molten resin sheet made of a polyamide resin having a low volume resistivity value and a molten resin sheet made of a thermoplastic resin whose volume resistivity value is not adjusted with an additive or the like and is relatively high, to which a conventional method is difficult to apply.

Means for Solving Problem

A cooling roll of the present invention is for use in a method in which a resin sheet that is made of a molten thermoplastic resin and has a volume resistivity value of $10^9$ $\Omega$cm or less is continuously extruded from a grounded mouthpiece onto a surface of a cooling roll that is continuously rotated, the resin sheet is cooled and solidified while being rotated and transferred in a state of intimate contact with the surface of the cooling roll, and then the cooled and solidified resin sheet is continuously peeled off from the cooling roll to obtain a thermoplastic resin sheet. The cooling roll comprises the features of claim 1.

A method for manufacturing a thermoplastic resin sheet of the present invention includes: a step of continuously extruding a resin sheet that is made of a molten thermoplastic resin and has a volume resistivity value of $10^9$ $\Omega$cm or less from a grounded mouthpiece onto a surface of a cooling roll that is continuously rotated; a step of cooling and solidifying the resin sheet while rotating and transferring the resin sheet in a state of intimate contact with the surface of the cooling roll; and a step of continuously peeling off the cooled and solidified resin sheet from the cooling roll. The cooling roll is the above-mentioned cooling roll of the present invention. The resin sheet is brought into a state of intimate contact with the cooling roll and the cooled and solidified resin sheet is peeled off from the cooling roll while a predetermined direct-current voltage is applied to the internal electrode layer.

Effects of the Invention

With the present invention, the following effects can be obtained.

(1) The adhesion of the molten resin sheet is not affected by the sheet formation speed, and the molten resin sheet comes into highly intimate contact with the cooling roll without entraining accompanying air flow. Therefore, casting at a high speed of 100 m/min or more, which cannot be realized using a conventional method, can be performed.

(2) Molten resin sheets having a wide range of volume resistivity values from that of an electric conductor to $10^9$ $\Omega$cm can be brought into the state of intimate contact with the cooling roll, and thus the present invention can be applied to most types of high-speed sheet formation using a thermoplastic resin. In particular, since the electrostatic pinning method cannot be applied to useful thermoplastic resins such as nylon 6, high-speed sheet formation using these resins is considered to be difficult, but high-speed sheet formation using such thermoplastic resins can be performed.

(3) In the electrostatic pinning method, fine adjustment need to be made to allow the volume resistivity value of a molten resin sheet to fall within a very narrow range from $10^7$ to $10^8$ $\Omega$cm, which is suitable for pinning, using additives. The present invention does not need such an adjustment operation. Accordingly, characteristic degradation caused by the additives does not occur.

(4) Spark discharge toward foreign matter or air bubbles in the molten resin sheet, and abnormal discharge that penetrates the molten resin sheet and reaches the surface of the cooling roll, which are problematic in the electrostatic pinning method, does not occur at all in the present invention.

(5) The cooled and solidified resin sheet can be easily peeled off from the cooling roll without the application of an unreasonable load even with a voltage being applied to the internal electrode.

(6) On the surface of the outermost layer of the cooling roll having a volume resistivity value of $10^7$ to $10^{13}$ $\Omega$cm, charges generated by peeling electrification disappear immediately and do not remain, and therefore, charge removal need not be performed on the surface of the cooling roll, and continuous attraction and continuous peeling is possible even in the state in which a voltage is applied to the internal electrode. No soil such as dirt attaches to the surface of the cooling roll. Furthermore, the inside of the obtained resin sheet is not electrified, and thus the resin sheet can be favorably handled in the subsequent process.

(7) With the electrostatic pinning method, the position of or the distance to the pinning electrode needs to be adjusted every time the sheet formation speed is changed, but such adjustments are not needed in the present invention. Accordingly, it is possible to change the sheet formation speed and the thickness of the molten resin sheet promptly and in real time without stopping the sheet formation.

(8) The molten resin sheet comes into highly intimate contact with the surface of the cooling roll without entraining air and forming a gap between the molten resin sheet and the cooling roll. Accordingly, oligomers are not precipitated on the surface of the cooling roll, and the surface of the cooling roll is always in a clean condition, thus making it possible to perform sheet formation continuously for a long period of time.

(9) The attraction force of the cooling roll of the present invention applied to the molten resin sheet is uniform on the wide range of the surface of the cooling roll, and thus a resin sheet that is not wrinkled and have a favorably uniform thickness, excellent planarity and flatness, excellent luster, and the like is obtained.

(10) A relatively low direct-current voltage of about 0.3 to 6 kV is applied to the internal electrode layer, and the internal electrode is entirely covered by the outermost layer, having a substantive withstanding voltage of 6 kV or more and a volume resistivity value of $10^7$ to $10^{13}$ $\Omega$cm, that is considered as substantially an insulation layer from the viewpoint of a countermeasure against electric leakage Therefore, the present invention is highly safe for human bodies.

Brief Description of Drawings

[FIG. 1] FIG. 1 is a perspective view showing an example of a manufacturing apparatus of a thermoplastic resin sheet in which a cooling roll of the present invention is used.

[FIG. 2] FIG. 2 is a side view of the apparatus shown in FIG. 1.

[FIG. 3] FIG. 3 is a model diagram of the electrostatic intimate contact state of a molten resin sheet due to a JR force in the present invention.

[FIG. 4] FIG. 4 is an equivalent circuit diagram of the electrostatic attraction state of a molten resin sheet due to a JR force.

[FIG. 5] FIG. 5 is a perspective view of another example of a manufacturing apparatus of a thermoplastic resin sheet in which a cooling roll of the present invention is used.

[FIG. 6] FIG. 6A is a model diagram of the intimate contact state of a molten resin sheet, which is a Coulomb force-type attracted substance. FIG. 6B shows an equivalent circuit of FIG. 6A.

[FIG. 7] FIG. 7 is a diagram showing a method for measuring adhesion between a test roll and an attracted film.

[FIG. 8] FIG. 8 is a graph showing the results of the comparison between adhesion by the JR force-type and adhesion by the Coulomb force-type.

[FIG. 9] FIG. 9 is a graph showing the relationship between the electric current density and the applied voltage when a molten resin sheet is attracted with a JR force.

[FIG. 10] FIG. 10 is a diagram showing a method for measuring adhesion between a JR force-type test roll in which a pinning electrode is used together and an attracted film.

[FIG. 11] FIG. 11 is a graph showing the results of the comparison between adhesion in the case where only a JR force-type cooling roll is used and adhesion in the case where a pinning electrode is used together.

Description of the Invention

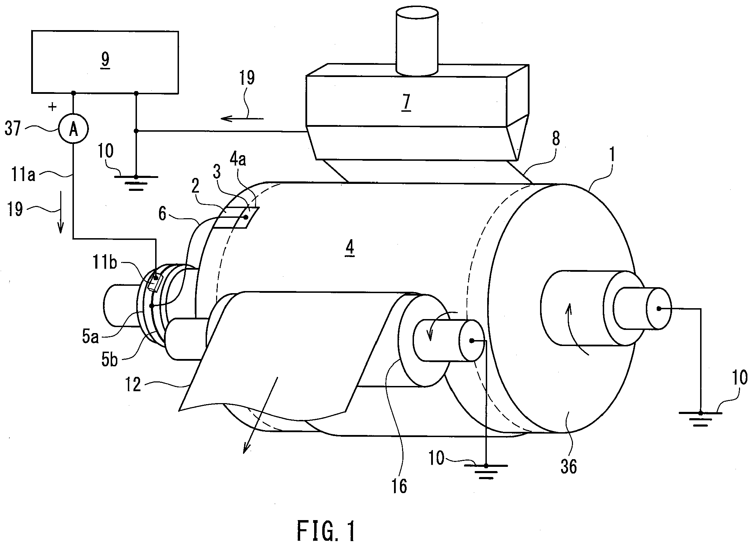

FIG. 1 is a perspective view showing an example of a manufacturing apparatus for conducting a method for manufacturing a thermoplastic resin sheet of the present invention. A molten resin sheet 8 made of a molten thermoplastic resin is extruded from a mouthpiece 7 onto a cooling roll 1. The cooling roll 1 is rotated at a constant rotation speed in a direction indicated by an arrow. The molten resin sheet 8 is rotated together with the cooling roll 1 while being in intimate contact with the outer circumferential surface of the cooling roll 1. The cooling roll 1 is cooled to a temperature that is suitable to cool the molten sheet 8, such as about 25°C, and kept at this temperature. Accordingly, the molten resin sheet 8 is cooled by the cooling roll 1 and solidified. A cooled and solidified resin sheet 12 is peeled off from the cooling roll 1 using a peeling roll 16. That is, the molten resin sheet 8 extruded from the mouthpiece 7 is cooled and solidified on the cooling roll 1 and changes to the resin sheet 12, and the resin sheet 12 is peeled off from the cooling roll 1. There is no limitation on the method for cooling the cooling roll 1, and a known water cooling method can be used, for example.

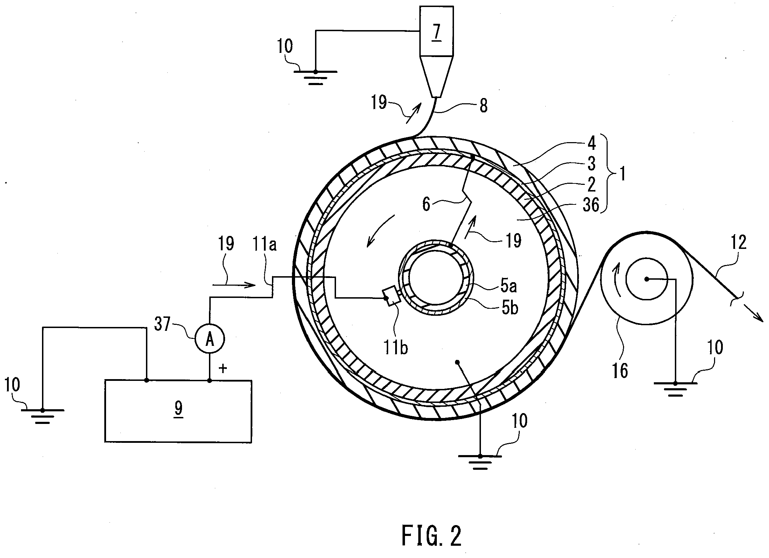

FIG. 2 is a side view of the manufacturing apparatus shown in FIG. 1. The cooling roll 1 includes an outermost layer 4 with which the molten resin sheet 8 comes into intimate contact, a conductive unipolar internal electrode layer 3 that is located on the inner side of the outermost layer 4 and is adjacent thereto, and an insulating layer 2 that is located on the inner side of the internal electrode layer 3 and is adjacent thereto, and the internal electrode layer 3 is completely insulated from a core metal 36 of the cooling roll 1 and an earth by the insulating layer 2.

In general, internal electrodes provided in an attracting substance utilizing a Johnsen-Rahbek effect are classified into two types, namely a unipolar type and a bipolar type, according to a voltage application method. In the unipolar type, only one of a positive (+) simple internal electrode and a negative (-) simple internal electrode is included, and a voltage is applied only between a ground and the simple electrode. Since the attracted substance is connected to the ground, a voltage is substantially applied between the attracted substance connected to the ground and the unipolar internal electrode in this type. In the bipolar type, a bipolar internal electrode in which a positive (+) electrode and a negative (-) electrode are paired and are insulated from each other is included, the electric potential of the negative electrode may be smaller than or equal to that of a ground, the attracted substance is insulated from the ground, and a voltage is applied to the two electrodes. In the present invention, the molten resin sheet 8, which is an attracted substance, is always connected to a ground 10 via the mouthpiece 7, and therefore, the internal electrode layer 3 is of a unipolar type. If the bipolar type is applied to the present invention, charges (electric current) leak to the ground side, and a JR force becomes unstable. The internal electrode layer 3 is continuously and uniformly provided over a range wider than the width of the molten resin sheet 8 in the axial direction of the cooling roll 1 and over the entire circumference of the cooling roll 1 in the rotational direction of the cooling roll 1.

The outermost layer 4 has a volume resistivity value of $10^7$ to $10^{13}$ $\Omega$cm at 25 to 100°C. It is preferable that the volume resistivity value of the outermost layer 4 is substantially non-thermosensitive and is stable toward temperature changes, specifically, a change ratio R100/R25 of the volume resistivity values of the outermost layer 4 at different temperatures is 0.1 to 1.0. Here, the term "change ratio R100/R25 of the volume resistivity values at different temperatures" refers to a ratio R100/R25 of the volume resistivity value at 100°C (R100) to the volume resistivity value at 25°C (R25). Furthermore, the outermost layer 4 preferably has a center line average surface roughness Ra of 0.01 to 0.3 $\mu$m. A region 4a on which the outermost layer 4 is not formed is formed by masking a portion on one end in the width direction of the cooling roll 1 when forming the outermost layer 4, and the insulating layer 2 and the internal electrode layer 3 are exposed from this region 4a.

As shown in FIGS. 1 and 2, a highly insulating ring 5a is provided on the outer circumferential face of one of the two roll shafts protruding from the two ends of the cooling roll 1, and a conductive slip ring 5b is provided on the highly insulating ring 5a. The slip ring 5b and the internal electrode layer 3 exposed from the region 4a are electrically connected to each other via an internal electrode lead wire 6. The entire core metal 36 of the cooling roll 1 is grounded to the ground 10 via the other of the two shafts in order to prevent electrification (charge up). A direct-current power source 9 applies a positive direct-current voltage to the slip ring 5b via an electrode output wire 11a and a carbon brush 11b. The ground terminal of the direct-current power source 9 and the mouthpiece 7 are grounded to the ground 10.

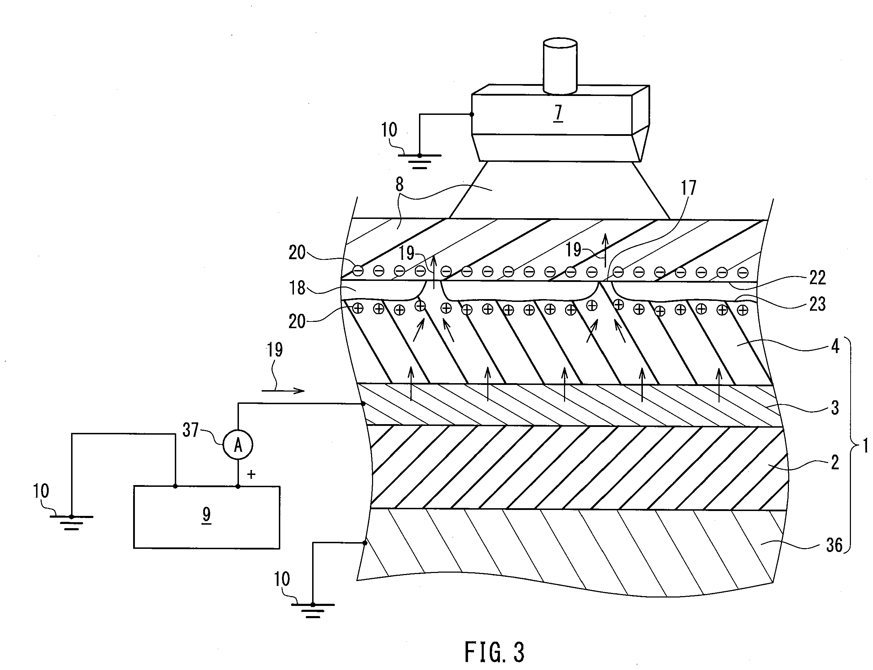

A method for manufacturing a thermoplastic resin sheet of the present invention includes: a step of continuously extruding a molten thermoplastic resin into a sheet-like shape from a mouthpiece 7; a step of cooling and solidify a molten resin sheet 8 made of the thermoplastic resin extruded from the mouthpiece 7 while bringing the molten resin sheet 8 into the state of intimate contact with a cooling roll 1 that is continuously rotated and rotating and transferring the molten resin sheet 8; and a step of continuously peeling off a resin sheet 12 obtained by cooling and solidifying the molten resin sheet 8 from the cooling roll 1. By applying a direct-current voltage to the internal electrode layer 3, an electric current 19 flows from the internal electrode layer 3 via the outermost layer 4 and the molten resin sheet 8 to the mouthpiece 7. As a result, at the contact interface between the outermost layer 4 and the molten resin sheet 8, a minute electric current flows through a minute contact point 17 (see FIG. 3, which will be described later) where the outermost layer 4 and the molten resin sheet 8 are in contact with each other, and voltage drop occurs due to the resistance of a contact interface layer. Thus, an electric potential difference occurs between the surface of the outermost layer 4 and the contact face of the molten resin sheet 8. The outermost layer 4 and the molten resin sheet 8 are opposite to each other with a minute gap 18 (see FIG. 3, which will be described later) being present between the outermost layer 4 and the molten resin sheet 8, and charges having mutually inverse polarities are respectively induced and applied on the faces of the outermost layer 4 and the molten resin sheet 8 that face each other via the minute gap 18 formed therebetween, due to the electric potential difference. Due to an electrostatic force between the charges having mutually inverse polarities, the molten resin sheet 8 is in the state of firm intimate contact with the cooling roll 1 without spark discharge at the moment when the molten resin sheet 8 lands on the surface of the cooling roll 1.

The direct-current voltage applied to the internal electrode layer 3 is preferably 0.3 to 6.0 kV. At this time, the minute electric current flowing to the molten resin sheet 8 in contact with the surface of the cooling roll 1 via the surface of the cooling roll 1 is preferably 0.005 to 6 $\mu$A/cm$^2$ per unit area over the entire contact area where the cooling roll 1 and the resin sheets 8 and 12 are in contact with each other.

The molten resin sheet 8 preferably has a volume resistivity value of $10^9$ $\Omega$cm or less before landing on the cooling roll 1, and the resin sheet 12 preferably has a volume resistivity value of $10^{10}$ $\Omega$cm or more at a point of time when the resin sheet 12 is peeled off from the cooling roll 1.

In the present invention, the adhesion between the molten resin sheet 8 and cooling roll 1 is mainly based on an electrostatic force called a Johnsen-Rahbek force (this adhesion is referred to as a "JR force" hereinafter). FIG. 3 shows the situation in which electrostatic adhesion is generated by a JR force when the molten resin sheet 8 comes into contact with the cooling roll 1.

The outermost layer 4 on the surface of the cooling roll 1 and the molten resin sheet 8 are in contact with each other via the minute contact point 17, and are not in contact and are spaced apart from each other via the minute gap 18 around the minute contact point 17. The minute contact portion 17 and the minute gap 18 are mainly due to a minute protrusion corresponding to the peak in the surface roughness chart of the surface of the outermost layer 4 and a recessed portion corresponding to the valley therein, respectively. A minute electric current 19 flows through the minute contact point 17 where the molten resin sheet 8 and the outermost layer 4 in contact with the internal electrode layer 3 are in contact with each other, due to a direct-current voltage being applied to the internal electrode layer 3, abrupt voltage drop occurs due to a contact resistance 27 (including the resistance of the minute protrusion) of the minute contact point 17, and charges 20 having mutually inverse polarities ("+" and "-" in FIG. 3) are respectively induced and accumulated in the same amount on a face 23 of the outermost layer 4 and a face 22 of the molten resin sheet 8 that are opposite to each other via the minute gap 18 around the minute contact point 17, due to the electric potential difference generated at the minute contact point 17. Strong adhesion (JR force) is generated between the molten resin sheet 8 and the cooling roll 1 due to an electrostatic force between the antipolar charges.

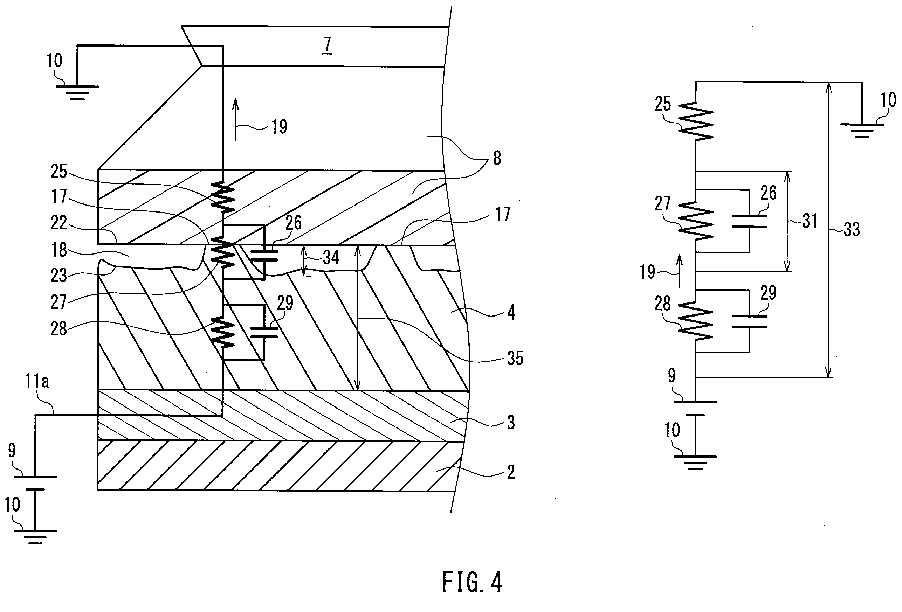

FIG. 4 shows an equivalent circuit in which the molten resin sheet 8 is in the state of intimate contact with the surface of the outermost layer 4 due to a JR force. In FIG. 4, the outermost layer 4 is represented by a parallel circuit including a resistance 28 ($R_{bulk}$) and a capacitor 29 (capacitance $C_{bulk}$) formed of the outermost layer 4 in the thickness direction. The boundary portion between the surface of the outermost layer 4 and the molten resin sheet 8 is represented by a parallel circuit including the contact resistance 27 ($R_{contact}$) of the minute contact point 17 and a capacitor 26 (capacitance $C_{gap}$) formed of the minute gap 18. Furthermore, a resistance 25 ($R_{sheet}$) of the molten resin sheet 8 is also an important constituent element of the circuit. A total resistance R of this equivalent circuit is a series connection of the resistance 28 of the outermost layer 4, the contact resistance 27 of the minute contact point 17 where the surface of the outermost layer 4 and the molten resin sheet 8 are in contact with each other, and the resistance 25 of the molten resin sheet 8. Accordingly, when an applied voltage 33 applied to the entire equivalent circuit by a power source 9 is taken as $V_0$ (V), the minute electric current 19 (I (A)) is represented by Equation (2) below, and it can be understood that the minute electric current 19 is strongly affected by the resistance 25 ($R_{sheet}$) of the molten resin sheet. In the present invention, resistances other than the resistance 25, the resistance 27, and the resistance 28 are considered to be sufficiently smaller than these resistances, and thus is negligible.

$$I = V_0/(R_{bulk} + R_{contact} + R_{sheet}) \qquad (2)$$

The faces facing each other via the minute gap 18 forms the capacitor 26 ($C_{gap}$), and adhesion P (Pa) of the molten resin sheet 8 generated in this capacitor 26 is represented by Approximate Equation (3) based on the equivalent circuit shown in FIG. 4, where $V_{gap}$ (V) is an electric potential difference 31 generated in the minute gap 18, $d_{gap}$ (m) is a distance 34 inside the minute gap 18, and $\varepsilon_0$ is the dielectric constant of the air layer inside the minute gap 18.

$$P = \alpha \varepsilon_0/2 \cdot (V_{gap}/d_{gap})^2 \qquad (3)$$

It should be noted that $\alpha$ is a constant for adjusting the area ratio between the minute contact point 17 and the minute gap 18 and the effective value of the distance 34 ($d_{gap}$) inside the minute gap 18. The actual magnitude of $\alpha$ is as small as about 0.005, but strong adhesion is obtained by the effect caused by the distance 34 inside the minute gap 18 being as small as 0.3 $\mu$m or less. In the state in which the minute electric current 19 flows, charges move to the surface of the outermost layer 4, and therefore, the capacitor 29 ($C_{bulk}$) is not formed of the outermost layer 4 shown in FIG. 4. Accordingly, the capacitor 26 ($C_{gap}$) formed of the minute gap 18 becomes dominant, and thus strong adhesion due to a JR force is generated. Here, the electric potential difference 31 ($V_{gap}$) in Equation (3) is represented by Equation (4) using the minute electric current 19 (I) and the contact resistance 27 ($R_{gap}$) of the minute contact point 17, and it can be understood that a JR force strongly depends on the minute electric current 19 and the contact resistance 27. Furthermore, the contact resistance 27 includes the resistance of the minute protrusion due to the surface roughness of the outermost layer 4, and therefore, a JR force is strongly affected by the volume resistivity value of the outermost layer 4.

$$V_{gap} = I \cdot R_{gap} \qquad (4)$$

More specifically, when the molten thermoplastic resin sheet 8 connected to the ground 10 via the mouthpiece 7 comes into contact with the surface of the electrified outermost layer 4, a closed circuit shown in FIG. 4 having a configuration of ground 10 - direct-current power source 9 - internal electrode layer 3 - outermost layer 4 - contact interface of minute contact point 17 - molten resin sheet 8 - mouthpiece 7 - ground 10 is formed. The minute electric current 19 flows from the internal electrode layer 3 to the mouth piece 7 via the outermost layer 4, the minute contact point 17 where the outermost layer 4 and the molten resin sheet 8 are in contact with each other, and the molten resin sheet 8 in the stated order. At this time, voltage drop occurs due to the contact resistance 27 present at the contact interface between the molten resin sheet 8 and the outermost layer 4, and thus the electric potential difference 31 is generated between the surfaces facing each other via the minute gap 18. The minute gap 18 around the minute contact point 17 forms the capacitor 26 due to the electric potential difference 31, and thus the charges 20 having mutually inverse polarities are induced and accumulated in the same amount. That is, charges having the same polarity as that of the internal electrode layer 3 move to the surface side of the outermost layer 4 of the cooling roll 1 and are accumulated, and charges opposite in polarity thereto are induced on the contact face side of the molten resin sheet 8 that is in contact with the cooling roll 1 and are accumulated. An electrostatic force generated between the charges 20 having mutually inverse polarities that are respectively applied to the surface 23 on the minute gap 18 side of the outermost layer 4 and the surface 22 on the minute gap 18 side of the molten resin sheet 8 is called a JR force. The molten resin sheet 8 is brought into the state of strong electrostatic intimate contact with the surface of the outermost layer 4 due to this JR force.

Even if the distance between the surfaces of the molten resin sheet 8 and the cooling roll 1 is very small, a JR force is not generated when the molten resin sheet 8 is not in contact with the surface of the cooling roll 1 yet, and strong adhesion is generated just after the molten resin sheet 8 comes into contact with the surface of the cooling roll 1 and a minute electric current flows. A JR force is a very strong short-distance force generated only when the minute electric current flows in the contact state, and therefore, accompanying air flow is successively released from the intimate contact start line between the thermally plasticized molten resin sheet 8 and the cylindrical surface of the outermost layer 4 and is not entrained, and thus the molten resin sheet 8 can be in the state of uniform intimate contact with the entire contact face of the cooling roll 1 without forming a gap.

In order to allow the JR force to act at the moment when the molten resin sheet 8 comes into contact with the cooling roll 1, the outermost layer 4 of the cooling roll 1 has a volume resistivity value of $10^7$ to $10^{13}$ $\Omega$cm at 25 to 100°C, and preferably $10^8$ to $10^{12}$ $\Omega$cm. When the outermost layer 4 has a volume resistivity value in this range, even if a high direct-current voltage 33 of about 6 kV at the maximum is applied between the internal electrode layer 3 and the ground 10, the electric current 19 flowing from the internal electrode layer 3 to the surface of the outermost layer 4 can be limited to a minute amount range from 0.005 to 6 $\mu$A/cm$^2$ in terms of the electric current density of the entire contact face where the resin sheets 8 and 12 and the outermost layer 4 are in contact with each other. As a result, the minute electric current 19 flows from the outermost layer 4 to the molten resin sheet 8 via the minute contact point 17, which allows abrupt voltage drop to occur due to a contact resistance 27 (including the resistance of the minute protrusion) of the minute contact point 17, thus making it possible to apply the electric potential difference 31 caused by this voltage drop to the minute gap 18 around the minute contact point 17. While this electric potential difference 31 is generated, the charges 20 having mutually inverse polarities can be respectively induced and accumulated in the same amount on the face 23 of the outermost layer 4 and the face 22 of the resin sheet 8 that are opposite to each other via the minute gap 18 formed between the outermost layer 4 and the sheet 8. In general, the higher the resistance 28 of the outermost layer 4 is and the larger the capacitance 26 is, the more suppressed the dissipation of the electrostatic charges is, and the longer the electrification relaxation time is. The capacitance 26 is increased due to the outermost layer 4 having a properly high volume resistivity value in a range from $10^7$ to $10^{13}$ $\Omega$cm and the distance 34 inside the minute gap 18 being very small. These effects makes it possible to suppress the release and dissipation of the electrostatic charges on the surface of the outermost layer 4, and thus the charges 20 can be applied to the minute gap 18 when the electric potential difference 31 is applied thereto. That is, when the outermost layer 4 has a volume resistivity value of less than $10^7$ $\Omega$cm and more preferably less than $10^8$ $\Omega$cm, the minute electric current 19 is excessively increased, and thus the charges on the surface of the outermost layer 4 immediately leak to the molten resin sheet 8 through the minute contact point 17, leading to shortage of accumulated charges, and thus a JR force becomes ineffective. When the outermost layer 4 has a volume resistivity value of more than $10^{13}$ $\Omega$cm and preferably more than $10^{12}$ $\Omega$cm, the minute electric current 19 does not flow from the outermost layer 4 to the molten resin sheet 8 through the minute contact point 17, and therefore, the electric potential difference 31 necessary to induce and accumulate the charges 20 having mutually inverse polarities in the minute gap 18 cannot be obtained, and thus a JR force is not generated. Furthermore, when the outermost layer 4 is made of a highly insulating material having a volume resistivity value of more than $10^{13}$ $\Omega$cm, the minute electric current 19 is reduced to the level of a leakage electric current, which is negligible. In such a case, electrostatic polarization occurs inside the outermost layer 4, and thus electrostatic charges are accumulated in the capacitor 29 ($C_{bulk}$). Due to these electrostatic charges, an electrostatic force called a Coulomb force with which the internal electrode layer 3 and the molten resin sheet 8 attract each other via the outermost layer 4 having a thickness 35 (dc). The Coulomb force between the molten resin sheet 8 and the internal electrode layer 3, namely the adhesion due to the electrostatic force of the capacitor 29, is represented by Equation (1) above. However, the thickness 35 ($d_C \approx 250$ $\mu$m) of the outermost layer 4 is about 1000 times larger than the distance 34 ($d_{gap} < 0.3$ $\mu$m) inside the minute gap 18, and therefore, the Coulomb force in this case is negligibly weak compared with the JR force. However, regarding the Coulomb force, the action of even extremely weak attraction force as a long-distance force is caused even when the molten resin sheet 8 and the outermost layer 4 are not in contact with each other.

After the molten resin sheet 8 extruded from the mouthpiece 7 first comes into contact with the surface of the continuously rotating cooling roll 1 and is then in the state of intimate contact therewith, the minute electric current 19 always flows to the molten resin sheet 8 via the existing contact region where the outermost layer 4 and the molten resin sheet 8 are in contact with each other. Even after the cooled and solidified resin sheet 12 is peeled off, the electric potential of the surface portion of the outermost layer 4 having the same polarity as that of the internal electrode layer 3 is kept by the charges supplied from the internal electrode layer 3. Therefore, when a new molten resin sheet 8 comes into contact with the surface portion again thereafter, a minute electric current immediately flows from the surface portion to the molten resin sheet 8 and causes the action of a JR force. Thus, the molten resin sheet 8 is immediately brought into the state of intimate contact with the surface portion. Accordingly, the molten resin sheet 8 extruded continuously from the mouthpiece 7 synchronizes with the rotationally moving surface of the cooling roll 1 without delay and is brought into the state of intimate contact therewith, and thus can be continuously transferred. The volume resistivity value of $10^7$ to $10^{13}$ $\Omega$cm is a resistance value at which static electricity is likely to accumulate as well as a resistance value at which charges (electric current) can move when a voltage is applied. Therefore, inverse charges remain on the surface of the outermost layer 4 due to electrification caused by peeling of the resin sheet 12 promptly disappear due to the charges (electric current) that moves from the internal electrode layer 3 as long as a voltage is being applied to the internal electrode layer 3. Accordingly, electricity removal need not be performed on the surface of the outermost layer 4 after the resin sheet 12 is peeled off, and thus a subsequent molten resin sheet 8 can continuously come into intimate contact with the surface of the outermost layer 4 just after the previous instance. In this manner, the resin sheet can continuously come into intimate contact and can be continuously peeled off. Furthermore, the outermost layer 4 has a volume resistivity value that is high enough to suppress spark discharge and electric current concentration caused by surface creepage, and therefore, spark discharge and surface creepage are prevented when the molten resin sheet 8 comes into contact with the outermost layer 4.

The distance 34 ($d_{gap}$) between the outermost layer 4 and the molten resin sheet 8 inside the minute gap 18 is preferably 0.01 to 0.30 $\mu$m, and more preferably 0.03 to 0.20 $\mu$m. When the distance 34 inside the minute gap 18 is less than 0.01 um, and even less than 0.03 $\mu$m, the contact resistance 27 is reduced due to an increase in the contact area of minute contact point 17 of the outermost layer 4 and a decrease in the height of the protrusion, and thus the electric potential difference 31 is reduced. Furthermore, since an area taken up by the minute gap 18 included in the capacitor 20 is also reduced, an area in which charges can be applied is reduced, and thus the adhesion becomes more insufficient. When the distance 34 inside the minute gap 18 is more than 0.30 $\mu$m, and even more than 0.20 $\mu$m, a JR force is reduced by the effect caused by an increase in the distance 34 inside the minute gap 18, and the external appearance quality of the resin sheet 12 is deteriorated due to the surface roughness of the surface of the outermost layer 4, namely the shapes of the minute protrusion 17 and the minute gap 18, being transferred to the surface of the molten resin sheet 8. Since it is difficult to directly measure the distance 34 inside the minute gap 18, the average surface roughness Ra of the surface of the roll outermost layer is used instead of $d_{gap}$ in the calculation of the adhesion P using Equation (3) in the present invention. The correction factor $\alpha$ in Equation (3) is set also in consideration of the correction amount between the distance 34 inside the minute gap 18 and the average surface roughness Ra.

If the distance 34 inside the minute gap 18 and Ra are considered to be approximately in a proportional relationship in a narrow range, for example, the correction factor $\alpha$ can be determined, but there are other unclear influencing factors, and it is difficult to calculate a JR force merely using Equation (3). It is difficult to define an actual distance 34 inside a minute gap and a substantial contact area ratio at the contact interface between two surfaces having a minute uneven structure and to measure an electric potential difference 31, which is a partial voltage of the applied voltage 33, and a contact resistance 27 at the contact interface portion, and an influence of the volume resistivity of the molten resin sheet 8 and an electric phenomenon in a short distance of a submicron level are elucidated only in part. Correction factors relating to all the influences are put together into $\alpha$, which is a slightly rough approximation. When the value of a JR force calculated using Equation (3) in the case where the distance 34 ($d_{gap}$) is considered to be merely equal to the surface roughness Ra is compared with the actually measured values of a JR force in the cases where some types of alternative films, which will be described later, are used, $\alpha$ is a value smaller than 0.005, but a JR force is much stronger than a Coulomb force due to the effect caused by $d_{gap}$ in Equation (3), namely the distance 34 inside the minute gap, being in submicron order and very small.

On the other hand, in the case of a Coulomb force, only a difference between a substantial surface area and the apparent area has an influence on the capacitance, and the actually measured value is larger only by 20 to 50% than the calculated value. Accordingly, adhesion due to a Coulomb force can be relatively accurately calculated using Equation (1) representing a relationship between the applied voltage and the distance (dc).

In order to bring the molten resin sheet 8 having a fluidity into the state of intimate contact with the surface of the outermost layer 4 due to a JR force, the minute contact point 17 and the minute gap 18 (see FIGS. 3 and 4) need to be formed without filling the valley portion included in micron-level unevenness on the surface of the outermost layer 4 with a molten resin. To achieve this, the temperature of the surface of the outermost layer 4 needs to be kept at 25 to 100°C, and preferably 25 to 70°C, at which the molten resin sheet 8 can be quickly cooled.

A molten thermoplastic resin is viscoelastic, and its deformation properties depend on a temperature, an applied pressure, and a deformation speed. When the temperature of the molten resin is high, the viscosity decreases and the fluidity increases, but the elasticity decreases. On the contrary, when the molten resin decreases in temperature, the viscosity increases and the fluidity decreases, but the elasticity increases.

The molten resin sheet 8 that is heated to a temperature higher by several tens of degrees than the melting point and extruded in a highly fluidized state from the mouthpiece moves by 15 to 50 mm in air until it reaches the surface of the outermost layer 4. Due to the molten resin sheet 8 being cooled by air while moving, a skin layer whose temperature is lower than that of the inside of the molten resin sheet 8 on the outermost surface of the resin sheet is formed on the upper most face. This skin layer has a higher viscosity and elasticity than the inside of the molten resin sheet 8. When the molten resin sheet 8 comes into contact with the outermost layer 4, an abrupt decrease in the temperature of the resin sheet 8 starts from the contact face side on which the resin sheet 8 is in contact with the outermost layer 4, and the skin layer becomes thicker with the decrease in temperature, leading to a further decrease in fluidity. Since this skin layer is present, the valley portion in the micro-level unevenness on the surface of the outermost layer 4 cannot be fully filled with the molten resin sheet 8, though the molten resin sheet follows the microscopic shape of the outermost layer 4.

As described above, due to the formation and growth of the skin layer, the molten resin sheet 8 comes into contact with the surface of the outermost layer 4 in the state in which the minute contact point 17 and the minute gap 18 are formed at the contact interface therebetween. Thereafter, even in the process in which the molten resin sheet 8 is cooled and solidified on the surface of the outermost layer 4 of the cooling roll 1, the minute contact point 17 and the minute gap 18 do not disappear. Accordingly, the molten resin sheet 8 is continuously in the state of intimate contact with the surface of the outermost layer 4 of the cooling roll 1 due to a JR force from just after coming into contact with the cooling roll 1 to when being cooled and solidified. It is important to manage the surface temperature of the outermost layer 4 in order to form the minute contact point 17 and the minute gap 18. It is not preferable that the surface temperature of the outermost layer 4 exceeds 100°C because the fluidity of the skin layer increases at the moment when the molten resin sheet 8 comes into contact with the surface of the outermost layer 4, and the minute valley portion on the surface of the outermost layer 4 is filled with the resin, so that the minute gap 18 disappears.

It is preferable that the outermost layer 4 of the cooling roll 1 of the present invention has a volume resistivity value in a range from $10^7 \Omega$ to $10^{13}$ $\Omega$cm at 25 to 100°C, and the outermost layer 4 is made of a substantially non-thermosensitive ceramics-based material that is less likely to change in the volume resistivity value with an increase in temperature. It is preferable that the outermost layer 4 has such a volume resistivity value is preferably made of an oxide-based ceramics-based material. In general, most oxide-based ceramics-based materials have a negative temperature coefficient of resistance, and the volume resistivity value decreases with an increase in temperature. A thermosensitive nylon 6 resin has R100/R25, which is a ratio of the volume resistivity value at 100°C (R100) to the volume resistivity value at 25°C (R25), of $10^{-6}$, an NTC thermistor has R100/R25 of 0.1 or less, and aluminum oxide, which is a typical oxide-based ceramics, has R100/R25 of 0.9 to 1.0. It is preferable that the outermost layer 4 of the present invention has R100/R25 of 0.1 to 1.0. The molten resin sheet 8 is in a high temperature state of about 200 to 300°C until just before coming into contact with the outermost layer 4 of the cooling roll, and is quickly cooled and solidified just after coming into intimate contact with the outermost layer 4, and then moves to the position of the peeling roll 16 while it is being further cooled to a lower temperature. During this process, the temperature of the topmost layer of the outermost layer 4 increases instantaneously and then decreases immediately due to a cooling effect of a cooling medium inside the cooling roll. In the case of common metals and ceramics materials, such a change in temperature of the topmost layer of the outermost layer 4 is considered to be within a range of 100°C even if it is overestimated, and the volume resistivity of the topmost layer of the outermost layer 4 varies with this temperature change. The variation of the volume resistivity value of the topmost layer of the outermost layer 4 corresponds to a variation of the minute electric current 19 by Equation (2) and a variation of the electric potential difference 31 ($V_{gap}$) as shown in Equation (4), and has an influence on the adhesion P (Equation (3)) of the molten resin sheet 8 caused by a JR force. An abrupt change in adhesion of the molten resin sheet 8 that occurs in a short period of time just after the intimate contact state starts may cause deterioration in the surface characteristics of the obtained thermoplastic resin sheet 12, such as surface roughness unevenness, crystallization unevenness, transparency, and wrinkles, and therefore, the smaller the change in the resistivity value of the outermost layer 4 with an increase in temperature is, the better it is.

In general, the temperature of the molten resin sheet 8 is almost always 200°C or higher just before the molten resin sheet 8 comes into contact with the cooling roll, and therefore, the electrostatic intimate contact state of the molten resin sheet due to a JR force is less likely to be affected by the humidity of air, and the electrostatic intimate contact state can be obtained without problem even in an environment of 60 to 70 RH%. However, in a case where the molten resin sheet has a small thickness of a dozen $\mu$m or less and thus has a small heat capacity, a case where the sheet speed is 100/min or more and fast, which leads to a large amount of accompanying air flow, and the like, the surface of the outermost layer 4 may be affected by the atmospheric humidity and moisture may adsorb thereonto. If moisture adsorbs onto the surface of the outermost layer 4, the surface resistance of the outermost layer 4 will decrease, and therefore, if the atmospheric humidity increases, the electrification amount in the minute gap 18 may decrease abruptly. In order to obtain more stable electrostatic adhesion due to a JR force, the atmospheric humidity of a space including the location on the cooling roll 1 at which the molten resin sheet 8 lands is preferably 40 RH% or less, and more preferably 35 RH% or less.

The conditions for the molten resin sheet 8 to come into intimate contact with the surface of the outermost layer 4 due to a JR force can be summarized as listed below.

(1) The molten resin sheet 8, which is an attracted substance, is a semiconductive or conductive molten resin sheet having a volume resistivity of $10^9$ $\Omega$cm or less, is connected to the ground 10 via the grounded mouthpiece 7, and is in contact with the surface of the outermost layer 4.

(2) One pole of the power source 9 is connected to the ground 10 and is connected, via the grounded mouthpiece 7, to the molten resin sheet 8 that is continuously extruded from the mouthpiece 7 in an electric circuit manner.

(3) The outermost layer 4 has a volume resistivity value in a range from $10^7$ to $10^{13}$ $\Omega$cm.

(4) The conductive internal electrode layer 3 is in contact with the outermost layer 4 with no gaps being formed therebetween and is connected to the power source 9 with a wire such that the voltage 33 can be applied, but the internal electrode layer 3 is completely insulated from the ground 10 and the core metal 36 of the cooling roll with the insulating layer 2.

(5) The surface of the outermost layer 4 has a minute surface roughness to an extent that the quality of the external appearance of the sheet is not affected, but the molten resin sheet 8, which is an attracted substance, is substantially in contact with the surface of the outermost layer 4 via only the minute contact point 17, which is an apex of the peak of the surface roughness, and the molten resin sheet 8 and the outermost layer 4 are spaced apart from each other to form the minute gap 18 in the valley portion of the surface roughness. Although the molten resin sheet 8 has a high fluidity, the surface of the molten resin sheet 8 is provided with the skin layer having a high viscosity and a high elasticity generated by the cooling action of air, and the molten resin sheet 8 is in contact with the surface of the outermost layer 4 via the skin layer. Accordingly, the entire minute valley portion on the surface of the outermost layer 4 is not filled with the molten resin sheet 8, and thus the minute contact point 17 and the minute gap 18 can be formed at the contact interface portion.

(6) An electric circuit is formed in which, when the voltage 33 is applied to the internal electrode layer 3, the minute electric current 19 can flow from the minute contact point 17 to the mouthpiece 7 and the ground 10 through the molten resin sheet 8.

(7) When the minute electric current 19 flows through the contact resistance 27 between the outermost layer 4 and the molten resin sheet 8 that are in contact with each other via the minute contact point 17, voltage drop, namely the electric potential difference 31, is generated between the surfaces facing each other with the minute gap 18 corresponding to the valley portion being therebetween.

(8) At the contact interface, numerous minute gaps 18 between the surfaces of the outermost layer 4 and the molten resin sheet 8 that face each other forms the capacitor 26, the electric potential 31 generated due to the voltage drop is applied to the two surfaces, and the charges 20 having inverse polarities corresponding to the capacitor 26 are induced and accumulated in the same amount on the two surfaces between which the minute gaps 18 are present.

Under the conditions (1) to (8), a JR force is generated between the outermost layer 4 and the molten resin sheet 8. At this time, even if the molten resin sheet 8, which is the attracted substance, has a volume resistivity value that is as low as that of an electric conductor, the molten resin sheet 8 can be in the state of intimate contact with the surface of the outermost layer 4 due to a JR force. Since the volume resistivity value of the outermost layer 4 is as high as $10^7$ to $10^{13}$ $\Omega$cm, charges on the surface of the outermost layer 4 facing the minute gap moves slowly and are less likely to be relaxed. This makes it possible to suppress outflow of the charges on the surface side of the outermost layer 4 facing the minute gap to the molten resin sheet 8 via the minute protrusion and the minute contact point and to electrify the surface of the outermost layer 4. When the surface of the outermost layer 4 is electrified, even when the volume resistivity value of the molten resin sheet 8 is as low as that of an electric conductor, charges opposite in polarity to those applied to the outermost layer 4 can accumulate on the surface on the minute gap 18 side of the molten resin sheet 8 through electrostatic induction or dielectric polarization. Accordingly, even when the volume resistivity value of the molten resin sheet 8, which is an attracted substance, is as low as that of an electric conductor, the capacitor 26 is formed between the outermost layer 4 and the molten resin sheet 8 that are opposite to each other via the minute gap 18, thus making it possible to generate a JR force.

A JR force, namely an electrostatic force between positive and negative charges in the same amount located on the two sides of the minute gap 18, is represented by Equation (3) calculated from the capacitance of the minute gap 18 and the electric potential difference 31 ($V_{gap}$) applied to the minute gap 18 in the equivalent circuit shown in FIG. 4. It can be understood from Equation (3) that the strength of the JR force has nothing to do with the thickness 35 of the outermost layer 4 and is determined based on only the electric potential difference 31 generated by the minute electric current 19 and the distance 34 ($d_{gap}$) inside the minute gap 18. Here, the electric potential difference 31 can be considered as a partial voltage of the applied voltage 33 ($V_0$) in the gap 18. That is, it can be understood from this equation that the JR force is proportional to the square ratio between the electric potential difference 31 and the distance 34 $(V_{gap}/d_{gap})^2$, and thus large adhesion can be obtained by applying a low voltage due to the effect caused by the distance 34 between the charges having mutually inverse polarities, namely inside the minute gap, being very small to the same extent as the surface roughness of the outermost layer 4.

The electrostatic intimate contact state by the JR force-type and the electrostatic intimate contact state by the Coulomb force-type differ from each other in the following three points. (1) To cause the action of a JR force, it is essential that the molten resin sheet 8 and the outermost layer surface 4 are in contact with each other and a minute electric current flows continuously. In the Coulomb force-type, the action of a very weak force is caused whether or not they are in contact with each other, but substantially no electric current flows. (2) In the JR force-type, the strength of adhesion is unrelated to the thickness of the outermost layer 4, and strong adhesion is obtained even if the outermost layer 4 has a large thickness. With the Coulomb force-type, adhesion decreases abruptly as the thickness of the outermost layer 4 increases. (3) Adhesion obtained through the JR force-type is much stronger than that obtained through the Coulomb force-type.

In the present invention, a JR force is generated due to voltage drop (electric potential difference 31) generated by the resistance of the minute contact point 17 where the molten resin sheet 8 and the outermost layer 4 are in contact with each other when the minute electric current 19 flows through the minute contact point 17. This minute electric current 19 is determined by the applied voltage 33 $(V_0)$ applied to the internal electrode layer 3, and the total resistance of the resistance 28 $(R_{bulk})$ of the outermost layer 4, the contact resistance 27 $(R_{gap})$ between the molten resin sheet 8 and the surface of the cooling roll 1 and the resistance 25 $(R_{sheet})$ of the molten resin sheet 8. Since the resistance 25 of the molten resin sheet 8 abruptly increases as the molten resin sheet 8 is cooled and solidified on the cooling roll 1 and the temperature thereof decreases, the minute electric current 19 abruptly decreases. However, it is difficult to accurately determine a change in the minute electric current 19 flowing through the minute contact point 17. Therefore, in the present invention, attraction is focused on an electric current density $(A/cm^2)$ obtained by dividing the total electric current flowing from the direct-current power source 9 to the ground 10 via the cooling roll 1, the molten resin sheet 8, and the mouthpiece 7 in the stated order by the entire area in which the cooling roll 1 and the resin sheets 8 and 12 are in contact with each other. In the present invention, an appropriate electric current density is 0.005 to 6 $\mu A/cm^2$ when the direct-current voltage 33 applied to the internal electrode layer 3 is in a range from 0.3 to 6 kV.

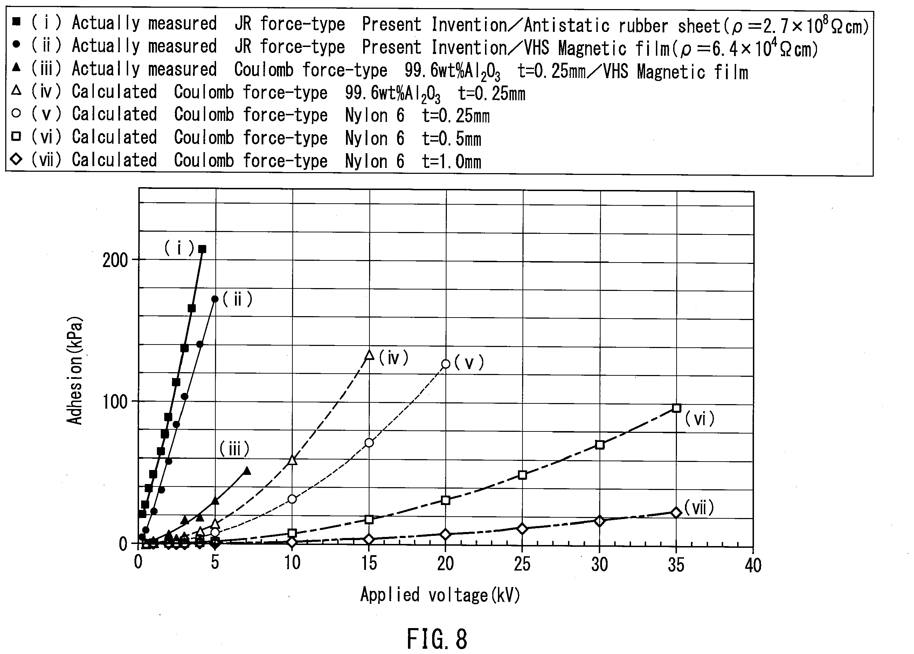

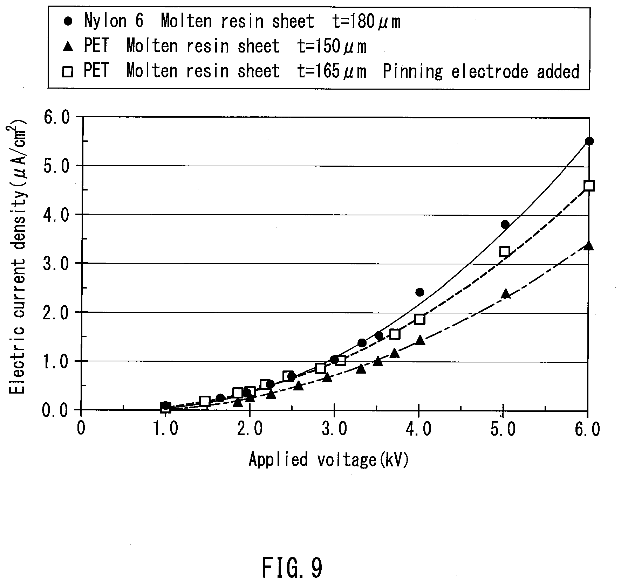

FIG. 9 shows the graph indicating the results from the measurement of the relationship between the electric current density and the applied voltage 33 when molten resin sheets made of PET and nylon 6 are attracted with a JR force. In Examples 1, 2, and 4, which will be described later, preparatory experiments were performed in advance, and total electric current values with respect to the applied voltages were measured using an ammeter 37 with a minimum measurement accuracy of 0.01 mA included in the high-voltage direct-current power source 9 shown in FIG. 1. A value obtained by dividing the measured electric current value by the entire contact area between the cooling roll 1 and the resin sheets 8 and 12 shown in FIG. 1 is taken as the electric current density. The electric current density and the applied voltage is not in a simple linear relationship based on the Ohm's law, but can be considered to be in a substantially linear relationship in a narrow range from 2 to 4 kV. To generate a JR force, it is required that an electric current flows from the internal electrode layer 3 to the molten resin sheet 8 through the outermost layer 4. On the other hand, to generate a Coulomb force, it is required that the outermost layer 4 is made of an insulating material, and the electric current does not flow. When no electric current flows through the outermost layer 4, a capacitor is formed between the internal electrode layer 3 and the molten resin sheet 8 (see Equation (1)). Accordingly, examining the relationship between the applied voltage and the electric current density makes it possible to determine whether or not a JR force is generated between the cooling roll 1 and the molten resin sheet 8. Moreover, as shown in Equations (3) and (4), the strength of the JR force is proportional to the square of the electric current density. Using the value of adhesion due to a JR force measured using alternative films shown in FIG. 8, which will be described later, makes it possible to estimate average adhesion of the molten resin sheet 8 during the sheet formation from the applied voltage and the electric current density.

It is important that the molten resin sheet 8 extruded from the mouthpiece 7 in a molten state has a volume resistivity value of $10^9$ $\Omega$cm or less before coming into contact with the cooling roll 1, and the resin sheet 12 has a volume resistivity value of $10^{10}$ $\Omega$cm or more when peeled off from the cooling roll 1. If the molten resin sheet 8 does not have a volume resistivity value of $10^9$ $\Omega$cm or less just before coming into intimate contact with the cooling roll 1, the minute electric current will be insufficient, and the action of a JR force will not be caused. Accordingly, the molten resin sheet 8 cannot come into intimate contact with the cooling roll 1. After the molten resin sheet 8 comes into intimate contact with the cooling roll 1, the temperature of the molten resin sheet 8 abruptly decreases due to the heat being transferred to the cooling roll 1, and the volume resistivity value thereof abruptly increases. When the resin sheet 12 has a volume resistivity value of $10^{10}$ $\Omega$cm or more, the minute electric current 19 decreases to a negligible level, and the electric potential difference 31 correspondingly decreases to a negligible level. The charges 20 (see FIG. 3) generated via the minute gap 18 move from the resin sheet 12 having a high volume resistivity value to the molten resin sheet 8 having a low volume resistivity value. Accordingly, the molten resin sheet 8, which is continuously extruded from the mouthpiece 7, can be in the state of firm intimate contact with the cooling roll 1 due to a JR force while the resin sheet 12 can be easily peeled off from the cooling roll 1 using the peeling roll 16. As described above, it is important that, in the state in which the voltage 33 is applied, the molten resin sheet 8, which is an attracted substance, is cooled and solidified on the cooling roll 1 and changes to the resin sheet 12 through further cooling, while the volume resistivity value continuously increased from $10^9$ Ωcm or less corresponding to a molten state to $10^{10}$ Ωcm or more corresponding to a cold solidified state.

Furthermore, the resin sheet 12 obtained by being peeled off from the cooling roll 1 is not electrified at all, and thus major effects as follows can be obtained. That is, dirt and the like do not attach thereto, the handleability is excellent, and the surface has high-grade quality and properties. Here, although slight peeling electrification occurs on the surface of the resin sheet 12 when the resin sheet 12 is peeled off from the cooling roll 1, the inside is not strongly electrified unlike a conventional electrostatic pinning method in which space charges are injected by a pinning electrode to which a high voltage is applied. Such slight surface electrification is completely removed by passing the obtained resin sheet 12 on the metal surfaces of the grounded peeling roll 16 and a subsequent guide roll (not shown), and thus the resin sheet 12 is not electrified. Although it is determined whether or not the resin sheet 12 is electrified by measuring the electrostatic potential of the resin sheet, this can be easily determined by examining whether or not cigarette ash attaches to the surface of the resin sheet 12 when the resin sheet 12 is held over the cigarette ash. When the cigarette ash does not attach thereto at all, it is determined that the resin sheet 12 is not electrified.

It should be noted that the resin sheet 12 cooled and solidified in the present invention may be peeled off from the surface of the cooling roll 1 and provided as a product as it is, but the characteristics thereof may be improved by subjecting the resin sheet 12 to uniaxial and/or biaxial drawing processing, heat fixation processing, aging processing, and the like. Although a simultaneous biaxial drawing method is preferable as the biaxial drawing from the viewpoint of quality, it will be appreciated that successive biaxial drawing may also be performed.

An example of the attracting substances utilizing a JR force is a stage-type electrostatic chuck used in an electrostatic chuck method to attract and fix a disk-shaped silicon wafer in a semiconductor manufacturing apparatus or a glass substrate (on which a conductive coating for electrostatic attraction is formed) for a liquid crystal display in a liquid crystal manufacturing apparatus. In the electrostatic chuck method, the attracted substance (product) has a plate shape, and sheet processing is performed on the attracted substances one by one. When each of the attracted substances is fixed in an intimate contact state, it takes about several seconds from when a voltage is applied to an internal electrode to when the attracted substance is stably attracted. Furthermore, to peel the processed attracted substance off from an electrostatic chuck, it is necessary to temporarily stop a voltage application to the internal electrode, ground the internal electrode and the attracted substance, and completely remove charges having mutually inverse polarities that had accumulated between the attracted substance and the attraction face (ceramics surface) of the electrostatic chuck. However, it also takes several seconds or longer to do such a process, and therefore, the attracted substance such as a wafer or a glass substrate cannot be removed immediately.

A JR force-type electrostatic chuck cannot attract an insulating substrate, and is used for an attracted substance having a volume resistivity value in a range from that of a conductive attracted substance to about $10^9$ Ωcm. The JR force-type electrostatic chuck utilizes electrification caused by a supply of a minute electric current to a minute gap at a contact interface portion, and therefore, adhesion is much stronger compared with another type of electrostatic chuck called a Coulomb force-type utilizing the capacitance of an insulating layer because a larger amount of charges accumulates and the distance between the charges is as small as the minute gap. However, on the other hand, the JR force-type electrostatic chuck is disadvantageous in that a speed at which charges accumulate in the minute gap at the contact interface portion after voltage application has been started and a speed at which charges having mutually inverse polarities that had accumulated at the contact interface portion are relaxed after the voltage application has been stopped are slow, and it takes time to generate and remove an attraction force, in particular, remove an attraction force.

On the other hand, the present invention uses the electrostatic attraction-type cooling roll 1 based on a JR force, but the attracted substance in the present invention is the molten resin sheet 8 obtained by extruding a molten thermoplastic resin from the mouthpiece 7 and molding it, the molten thermoplastic resin being fluidized by being melted through heating by a melting and extruding apparatus and having a volume resistivity value as low as $10^9$ Ωcm or less, which is suitable for the intimate contact state due to a JR force. In the state in which the voltage 33 is continuously applied to the internal electrode layer 3, the molten resin sheet 8 that is continuously extruded from the mouthpiece 7 in a thermally plasticized state can be in the state of intimate contact with the surface of the cooling roll 1 due to a JR force while synchronizing with the extrusion speed. After the molten resin sheet 8 comes into contact with the surface of the outermost layer 4 of the cooling roll 1 and is in the state of intimate contact with the surface of the outermost layer 4 due to a JR force, the minute electric current 19 always flows through the molten resin sheet 8 that is continuously extruded from the mouthpiece 7, from the internal electrode layer 3 to the mouthpiece 7. The surface of the outermost layer 4 is not affected by peeling electrification and is always electrified to an electric potential having the same polarity as that of the internal electrode layer 3, and therefore, the molten resin sheet 8 can be in the state of intimate contact with the surface of the outermost layer 4 at the moment when it comes into contact therewith. The molten resin sheet 8 is cooled and solidified while being rotated and transferred at a high speed in the state of intimate contact with the surface of the cooling roll 1, decreases in temperature before arriving at the position of the peeling roll 16, and changes to the resin sheet 12 whose volume resistivity value increases to $10^{10}$ Ωcm or more. Accordingly, the resin sheet 12 can be continuously peeled off from the surface of the cooling roll 1 with ease with a voltage being applied to the internal electrode layer 3. Both the process for bringing the resin sheet into the intimate contact state and the process for peeling off the resin sheet have no trouble caused by spark discharge, and the inside of the resin sheet 12 is not electrified after the resin sheet 12 has been peeled off. Utilizing these features makes it possible to use the cooling roll 1 that enables the electrostatic intimate contact state due to a JR force in a roll-to-roll sheet formation apparatus in which a molten thermoplastic resin sheet having a fluidity that is extruded from a mouthpiece comes into intimate contact with the surface of a cooling roll and is thus cooled and solidified, and thus a resin sheet is manufactured.

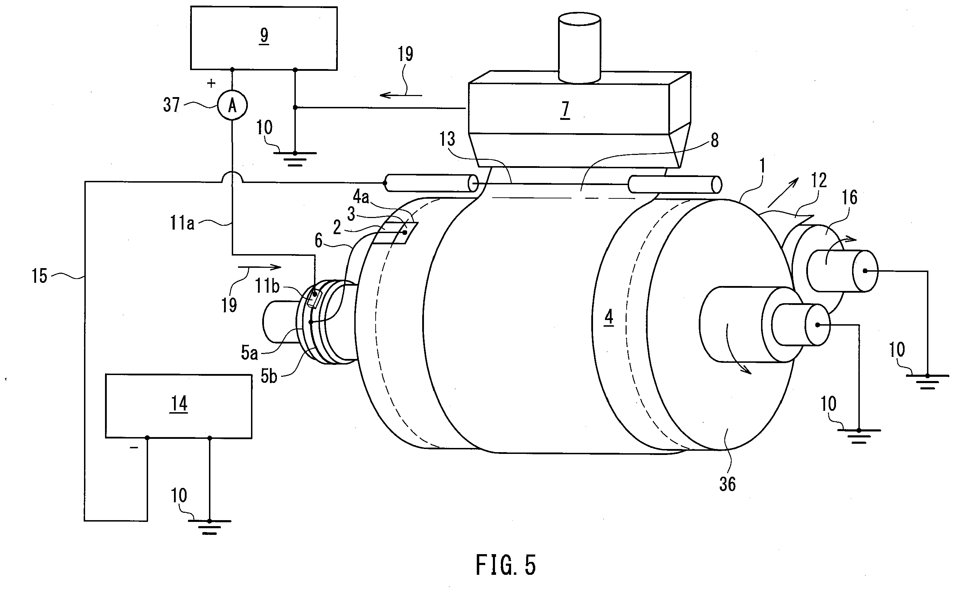

It will be appreciated that a configuration may be employed in which the molten resin sheet 8 comes into intimate contact with the cooling roll 1 only due to a JR, force, but in order to further improve adhesion, an electrostatic pinning method in which a pinning electrode 13 is used can be used together as shown in FIG. 5. The pinning electrode 13 is provided on the air face side of the molten resin sheet 8 that is opposite to the contact face thereof that comes into contact with the surface of the cooling roll 1, and extends in the width direction of the molten resin sheet 8 and is spaced apart from the molten resin sheet 8. A power source 14 for a counter electrode applies, to the pinning electrode 13 via a wire 15 for pinning, a direct-current voltage opposite in polarity to a voltage applied to the internal electrode layer 3 by the direct current power source 9. Accordingly, charges (inverse charges) opposite in polarity to the charges applied to the surface of the outermost layer 4 are applied to a face of the molten resin sheet 8 that is opposite to the face thereof to be in intimate contact with the surface of the cooling roll 1. The direct-current voltage applied by the power source 14 is smaller than that in a common electrostatic pinning method, and is about 5 to 8 kV. The electrostatic pinning method in which this pinning electrode 13 is used is suitable to manufacture a thermoplastic resin sheet having a volume resistivity value of $10^6$ to $10^9$ Ωcm in a molten state, which can be electrified through pinning. It should be noted that the pinning electrode 13 is likely to be soiled by sublimates such as monomers and oligomers generated from the molten resin sheet 8, and therefore, it is preferable to use a wire electrode or tape electrode that can be unwound and wound such that a clean wire surface can be always supplied. It should be noted that the wire electrode preferably has a diameter of about 0.03 to 1.5 mm. It will be appreciated that a portion located outside the portion corresponding to the sheet 8 or a portion that need not be assisted in the pinning electrode 13 may be masked as necessary with an insulating Teflon (registered trademark) tube or the like. Examples of the material of the pinning electrode 13 include amorphous metals containing iron, nickel, cobalt, and the like as a main component, and metals such as tungsten, stainless steel, iron, aluminum, nickel, copper, and copper alloys, and a tungsten wire containing rhenium is preferable because it has a large tensile strength.

The method for obtaining the intimate contact state of the molten resin sheet 8 due to a JR force in which the cooling roll 1 of the present invention is used is a method having excellent safety and maintainability because electrostatic adhesion that is much stronger than a Coulomb force obtained in a conventional electrostatic pinning method can be obtained by applying a relatively low voltage of 0.3 to 6 kV to the internal electrode. On the other hand, with the conventionally performed electrostatic pinning method as disclosed in Patent Documents 4 to 8, charges generated through space discharge by the pinning electrode are applied to a face (air face) of the molten resin sheet on a side opposite to the cooling roll to electrify this face. Accordingly, as the sheet formation speed is faster, that is, the sheet movement speed is faster, the electrification amount of the molten resin sheet per unit area decreases, and thus adhesion decreases. Furthermore, adhesion in the electrostatic pinning method is based on a Coulomb force called an image force acting between charges applied to the molten resin sheet and charges generated on the surface of the cooling roll through electrostatic induction or polarization due to the charges applied to the molten resin sheet. The distance over which the Coulomb force acts is about 50 to 200 μm, which is the same as the thickness of the sheet, or about half thereof, and is much larger than the distance of 0.3 μm or less inside the minute gap 34 over which a JR force acts. Accordingly, adhesion due to the charges applied to the molten resin sheet is much smaller than the JR force. As a result, to obtain adhesion as strong as the JR force in the present invention in the electrostatic pinning method, it is necessary to increase a voltage applied to the pinning electrode to a very high level of 10 to 15 kV, which is dangerous. However, the higher a voltage applied to the pinning electrode is, the more likely it is that spark discharge toward the molten resin sheet or the surface of the cooling roll occurs, and thus there is increasing risk that product defects of the resin sheet occur or the surface of the cooling roll is damaged. It should be noted that the electrostatic pinning method can also be used together in the present invention as shown in FIG. 5, but in the present invention, a voltage applied to the pinning electrode 13 can be reduced to a level that is much lower than a common voltage used in the conventional electrostatic pinning method. Accordingly, the above-described problems of the conventional electrostatic pinning method do not arise in the electrostatic pinning method applied to the present invention.

The cooling roll 1 of the present invention includes the core metal 36 made of a metal, the insulating layer 2 provided on the entire outer circumferential surface of the core metal, and the unipolar internal electrode layer 3 that extends on the substantially entire cylindrical face of the cooling roll without breaks and is provided on the insulating layer 2, and the outermost layer 4 is provided on the internal electrode layer 3. At least one of the insulating layer 2, the internal electrode layer 3, and the outermost layer 4 is constituted by a material formed through a thermal spraying technique or a material through application of a coating material made of an inorganic or organic binder.

The "thermal spraying" as used herein refers to a coating technique in which a coating material is melted or softened through heating and then made into minute particles, the obtained minute particles are accelerated and allowed to collide against the surface of a coating target, and the flattened particles are solidified and accumulated to form a coating. There are various types of thermal spraying, and the types of thermal spraying are classified based on materials for use, the types of heat source, and the like. Examples of the heat source include a combustion gas, electricity, a laser, and others. Examples of the technique using a combustion gas as a heat source include flame thermal spraying, high-speed flame thermal spraying, and detonation thermal spraying. Examples of the technique using electricity as a heat source include arc thermal spraying, plasma thermal spraying, RF plasma thermal spraying, electromagnetic accelerating plasma thermal spraying, water-stabilized plasma thermal spraying, wire explosion thermal spraying, and electrothermally-exploded powder thermal spraying. An example of the technique using a laser as a heat source is laser thermal spraying. Examples of other techniques include laser-plasma composite thermal spraying and cold spraying.

In particular, an atmospheric plasma thermal spraying technique and a water-stabilized plasma thermal spraying technique are suitable for the present invention for the following reasons. That is, (1) substantially all of ceramics and metal materials can be used to form a thermally sprayed coatings, (2) these thermally sprayed coatings have excellent strength, adhesion, and surface smoothness, (3) in particular, ceramics coatings have stable insulating properties and voltage resistance properties, (4) there are various ceramics-based thermal spraying materials for the field of electric insulation and various metal materials with a high melting point, such as Mo and W, for an internal electrode, and so on.

The plasma thermal spraying is a method in which a gas heated by direct-current arc is sprayed from a nozzle, a material is fed into this gas and thus melted, and the molten material is sprayed on a substrate to form a coating. In general, a mixed gas containing argon as a main gas and hydrogen or helium as an auxiliary gas is used as a working gas, and water-cooled nozzle-shaped copper anode and tungsten cathode are used. When arc is generated between the electrodes, the working gas is made into plasma by the arc and ejected from the nozzle as a high-temperature high-speed plasma jet. Powder of a thermal spraying material is injected into this plasma jet, heated and accelerated therein, and then sprayed on a substrate. Examples of the plasma thermal spraying technique include an atmospheric plasma thermal spraying technique, a low-pressure plasma thermal spraying technique, and a water-stabilized plasma thermal spraying technique. All of these techniques has the following features and are thus preferable for the present invention: (1) a thermal spraying material can be selected from a wide range of choices; (2) a raw material can be selected from a wide range of choices; (3) a coating formation speed is high; (4) the dimensions of a raw material subjected to thermal spraying can be selected from a wide range of choices; (5) these techniques can be applied to large-sized parts; (6) a coating can be formed while a raw material is kept at a low temperature; (7) these techniques are dry processes and thus environmental loads are reduced; and so on.

Although classified as plasma thermal spraying, water-stabilized plasma thermal spraying uses water vapor obtained by evaporating cooling water as a working gas, and the electrode structure in this technique are also very different from those in other plasma techniques. A mechanism in which a high-pressure water flow supplied to a torch is made into a cylindrical vortex water flow is used in this technique, and when a voltage is applied between a carbon cathode and a rotating metal anode in this state to forcibly generate direct-current arc, water on the inner surface of the vortex water flow evaporates and decomposes into a plasma state, and plasma arc is continuously generated. This plasma arc is condensed by the rotating cylindrical water flow, and its energy density is increased. Thereby, stable high-temperature high-speed plasma jet flame is ejected from the nozzle due to abrupt thermal expansion of the plasma. The maximum temperature of the plasma jet flame reaches a high temperature of about 30,000°C, and therefore, thermal spraying using ceramics having a high melting point can be easily performed. The water-stabilized plasma thermal spraying technique has the following features: (1) the thermal spraying capacity per unit time is 50 kg at the maximum and is very large; (2) the thickness of a thermally sprayed coating can be increased to about 20 mm; (3) while performing this technique, it is possible to control the temperature of a raw material to be at 200°C or less; and (4) this technique is an optimal approach to perform thermal spraying using a large amount of a ceramics-based material on large-sized members and form a thick coating.

In the present invention, the outermost layer 4 and the insulating layer 2 may be coating layers formed by applying a coating material including an organic binder such as polyimide or an inorganic binder such as aluminum phosphate, a water glass-based binder, or silicone-based binder, and a ceramics-based material added such that a volume resistivity value suitable for the present invention is obtained, as long as the volume resistivity value and the withstanding voltage can be ensured.

Furthermore, when a ceramics-based thermal spraying material is used, it is preferable that a sealing treatment is performed on at least one of the insulating layer 2, the internal electrode layer 3, and the outermost layer 4. An unprocessed thermally sprayed coating is provided with through pores that are formed by minute gaps between thermal spraying particles and coupled with one another, and the through pores makes up about 3 to 10 vol% of the total volume of the thermally sprayed coating. In a normal atmospheric environment, air containing moisture or a liquid infiltrates these pores and the inner walls of the pores adsorb water, and thus the thermally sprayed coating has significantly low insulation resistance and withstanding voltage. By infiltrating the pores of the thermally sprayed ceramics with a sealer and filling the pores with the sealer to eliminate the gaps between the particles, namely the through pores, a ceramics-based material having excellent characteristics can be obtained because the corrosion resistance is improved, the volume resistivity value is uniformly distributed, the electric insulation is improved, the breakdown voltage is improved, the thermal conductivity is improved, the wear resistance is improved, a smooth and highly accurate surface is obtained after polishing due to prevention of coming off of the particles, and so on. Even in the case of a large-sized cooling roll having a diameter of about 2 m, which is actually used, a sealing treatment can be performed after thermal spraying using this ceramics-based material is performed, and thus this is a practical technique. Examples of a raw material used in the sealing treatment include liquid sealers such as a silicone oligomer having a low viscosity (e.g., a viscosity of 8 to 40 mPs at 25°C), an epoxy resin having a low viscosity (e.g., a viscosity of 80 to 400 mPs at 25°C), a polyester resin, an aqueous solution of lithium silicate for forming an organic coating, and a metal alkoxide for an inorganic sol, and these sealers can be used after the viscosity is reduced through dilution using a solvent. In the present invention, a silicone oligomer having a low viscosity and an epoxy resin having a low viscosity are preferable because these have excellent impregnation properties, insulation performance, and voltage resistance. It is preferable that the sealing treatment is performed on the thermally sprayed layer over the entire thickness. It is important to heat and cure a thermally sprayed coating after sealing the pores thereof by infiltrating the pores with a sealer as described above and stabilize the volume resistivity value and voltage resistance of the sealer. If the pores of the thermally sprayed coating are not reliably sealed, the insulating layer 2 and the outermost layer 4 cannot be adjusted to have the intended volume resistivity value and withstanding voltage, and thus the above-mentioned cooling roll cannot deliver its performance.

The outermost layer 4 on which the sealing treatment has been performed has a volume resistivity value of $10^7$ to $10^{13}$ Ωcm at 25 to 100°C, preferably $10^8$ to $10^{12}$ Ωcm, and more preferably $10^9$ to $10^{11}$ Ωcm. The volume resistivity value as small as less than $10^7$ Ωcm is not preferable because the total electric current from the internal electrode layer 3 becomes excessively large, and the charges 20 in the outermost layer 4 flow to the molten resin sheet 8 and do not accumulate, and thus the action of a JR force is not caused. Furthermore, the generation of an excessively large electric current is not preferable because the temperature of the molten resin sheet 8 may increase due to resistance heating before the molten resin sheet 8 comes into contact with the surface of the cooling roll 1. On the other hand, if the volume resistivity value exceeds $10^{13}$ Ωcm, the electric current 19 from the internal electrode layer 3 does not flow. As a result, the action of a JR force is also not caused in this case. That is, if the resistance value is out of the above-described range, the action of a JR force is not caused, and thus the molten resin sheet 8 cannot be in the state of intimate contact with the cooling roll 1.

Furthermore, the outermost layer 4 preferably has a thickness of 50 μm or more, and more preferably 80 to 500 μm. As is clear from Equation (3), the strength of a JR force is unrelated to the thickness of the outermost layer 4 and determined by only the voltage drop 31 in the contact resistance portion, which is a partial voltage of the applied voltage 33, and the distance 34 inside the minute gap. The minimum value of this thickness is the minimum thickness that is required to ensure that the outermost layer 4 is not provided with a pinhole that passes therethrough to the internal electrode layer 3, and the like, and that is a thickness with which voltage resistance against the minimum applied voltage 33 required to provide stable adhesion of the molten resin sheet 8 can be ensured. The maximum value of the thickness is set in consideration of the cooling capability of the cooling roll 1. A higher applied voltage 33 is needed to obtain a stronger JR force strength, and to achieve this, it is necessary to increase the thickness of the outermost layer 4 to increase the withstanding voltage. However, the capability to cool the molten resin sheet 8 is impaired, and therefore, it is not preferable that the outermost layer 4 has a thickness of more than 500 μm.

Regarding the surface roughness of the outermost layer 4 of the cooling roll 1 of the present invention, the center line average surface roughness Ra is 0.01 to 0.3 μm. If it is less than 0.01 μm, the minute gap 18 required for causing a JR force cannot be obtained, and thus adhesion due to a JR force decreases. Moreover, a smooth face with a center line average surface roughness Ra of less than 0.01 μm is difficult to form with the actual ceramics layer polishing technique. Furthermore, the center line average surface roughness Ra of more than 0.3 μm is not preferable because the roughness of the outermost layer 4 is transferred to the molten resin sheet 8.

The outermost layer 4 of the cooling roll of the present invention is a layer made of a ceramics-based material. The ceramics-based material for thermal spraying is aluminum oxide-based, zirconium oxide-based, or magnesium-based ceramics containing a compound selected from titanium oxide, chromium oxide, silicon oxide, manganese oxide, nickel oxide, and iron oxide, or aluminum oxide-based ceramics containing titanium oxide in an amount of 5 to 17 wt%. In addition, aluminum nitride (AlN)-based, silicon carbide (SiC)-based, and silicon nitride ($Si_3N_4$)-based ceramics-based materials for an application method in which an organic or inorganic binder is used can be used.

The cooling roll 1 of the present invention is used to cool the molten resin sheet 8, and therefore, it is desirable that all of the materials of the insulating layer 2, the internal electrode layer 3, and the outermost layer 4 have a high thermal conductivity in order to improve the cooling efficiency. A material that has a high thermal conductivity, can be adjusted to have a volume resistivity value of $10^7$ to $10^{13}$ Ωcm, and has excellent handleability is preferable as a material of the outermost layer 4 of the present invention. A layer formed through a thermal spraying technique using an aluminum oxide-based ceramics-based material containing titanium oxide in an amount of 5 to 17 wt% and preferably 7 to 15 wt% is the most preferable from the viewpoint of the state of intimate contact with the internal electrode layer 2, the denseness, the stability of the volume resistivity value, the handleability, and the like. A layer formed through an application method using an aluminum nitride (AlN)-based ceramics-based material in which an organic or inorganic binder is used is also preferable from the same viewpoint.

Although a conductive paste for firing made of tungsten, molybdenum, high-performance active carbon, copper, or silver can also be used as a material of the internal electrode layer 3, a thermal spraying material for a plasma thermal spraying technique made of tungsten or molybdenum is preferable from the viewpoint of the high thermal conductivity and handleability, and the internal electrode layer 3 preferably has a thickness of 5 to 50 $\mu$m from the practical viewpoint.

The internal electrode layer 3 of the cooling roll 1 of the present invention is a conductive layer that is adjacent to the interior side of the outermost layer 4 and is in contact with the outermost layer 4 with no gaps being formed therebetween. Although the internal electrode layer 3 is connected to the power source 9 with a wire such that the voltage 33 can be applied thereto, the internal electrode layer 3 is completely insulated from the ground 10 and the core metal 36 in the main body of the cooling roll 1 by the adjacent insulating layer 2.

By applying a direct-current voltage to the internal electrode layer 3, the surface of the outermost layer 4 of the cooling roll 1 is electrified. Thus, the minute electric current 19 flows through the minute contact point 17 where the outermost layer 4 and the molten resin sheet 8 are in contact with each other, and the charges 20 having mutually inverse polarities are respectively induced in the outermost layer 4 and the molten resin sheet 8, which are opposite to each other via the minute gap 18 formed between the outermost layer 4 and the molten resin sheet 8. The molten resin sheet 8 comes into intimate contact with the surface of the outermost layer 4 due to an electrostatic force caused by the charges 20 having mutually inverse polarities. The molten resin sheet 8 is in a plasticized state, and therefore, if the internal electrode layer 3 is provided with breaks and dropout portions, adhesion will not be generated at such portions, and thus a pattern corresponding to the breaks are transferred to the obtained resin sheet 12. Accordingly, the internal electrode layer 3 needs to uniformly extend over the entire cylindrical face of the cooling roll 1 so as to cover the entire width of the molten resin sheet 8. As in the case of the present invention, when the molten resin sheet 8, which is an attracted substance, is grounded, adhesion is likely to be unstable in the case of a bipolar electrode. Moreover, in the case of a bipolar electrode, electrodes having various shapes such as a pair of comb-shaped electrodes, a pair of band-shaped electrodes, and a pair of spiral-shaped electrodes can be used, but a pattern corresponding to a gap between such electrodes or the shape of the electrodes are transferred to the resin sheet 12. Therefore, in the present invention, only a unipolar electrode that uniformly extends over the entire cylindrical face of the cooling roll without breaks is employed as the internal electrode layer 3. It should be noted that the two end portions of the cylindrical face of the cooling roll 1 that are out of the range of the intimate contact state of the molten resin sheet 8 is not necessarily provided with the internal electrode layer 3.

In the case where the attracting substance utilizes a JR force, when the attracted substance made of a rigid or elastic material such as a silicon wafer, a glass substrate, or a resin sheet product, the attracted substance is supported by the entire contact face. Accordingly, if an appropriate attraction area is provided, adhesion that is strong enough to fix the main body is obtained even in the case where the applied voltage is as low as about 0.2 to 0.6 kV. However, since the molten resin sheet 8, which is an attracted substance in the present invention, is in a thermally plasticized state in which plastic deformation easily occurs, it is needed that, over the entire contact face where the molten resin sheet 8 and the cooling roll 1 are in contact with each other, uniform and strong adhesion is generated without a portion where the molten resin sheet 8 and the cooling roll 1 are not in intimate contact with each other. In order to obtain a JR force required for obtaining the electrostatic intimate contact state of the molten resin sheet 8, the voltage 33 applied to the internal electrode layer 3 is preferably 0.3 kV or more, and preferably 6 kV or less and more preferably 3.5 kV or less. The higher the applied voltage is, the stronger adhesion due to a JR force is, and if the applied voltage is 0.3 kV or less, adhesion due to a JR force is insufficient. Moreover, the applied voltage of 6 kV or more is larger than or equal to the withstanding voltage of the outermost layer 4, and thus dielectric breakdown may occur.

The insulating layer 2, which is an innermost layer in contact with the core metal 36 of the cooling roll 1 of the present invention preferably has a volume resistivity value of $10^{13}$ $\Omega$cm or more. This is for the purpose of reducing a leakage electric current flowing from the internal electrode layer 3 to the core metal 36 via the insulating layer 2 to a level at which the leakage electric current has no influence. Moreover, the insulating layer 2 preferably has a thickness of 50 to 500 $\mu$m for the following reasons. If the thickness is less than 50 $\mu$m, the withstanding voltage will not be large enough to apply a voltage required to obtain necessary adhesion to the internal electrode layer 3, and if the thickness exceeds 500 $\mu$m, cooling capability essential for a cooling roll cannot be obtained. It is desirable that the insulating layer 3 has a withstanding voltage of 6 kV or more in order to enable a voltage of up to 6 kV to be applied to the internal electrode layer 3.

A highly insulating material for the insulating layer 2 that can achieve this is preferably a thermally sprayed ceramics film made of high-purity alumina with a purity of 99.6% or more or alumina containing titanium oxide in an amount of 2 to 4 wt%, or a coating material made of a ceramics material selected from a magnesium oxide-based ceramics material, a beryllium oxide (BeO)-based ceramics material, an aluminum nitride (AlN)-based ceramics material, a silicon nitride ($Si_3N_4$)-based ceramics material, and the like. In addition, a polymer resin selected from polyimide, polyphenylene oxide, polytetrafluoroethylene (Teflon (registered trademark)), polytrifluorochloroethylene, polyethylene, polypropylene, polystyrene, and the like, or an $SiO_2$-based glass film made of porcelain, enamel, or the like, and the like may also be used. In the present invention, a ceramics thermal spraying material made of high-purity alumina with a purity of 99.6% or more or alumina containing titanium oxide in an amount of 2 to 4 wt% is most preferable from the viewpoint of the insulation performance, the thermal conductivity, the handleability, and the cost. A coating material made of aluminum nitride (AlN) is preferable from the viewpoint of the thermal conductivity.

The thermoplastic resin used in the present invention need only have a volume resistivity value of $10^9$ Ωcm or less in a molten state, and examples thereof include a polyamide-based resin, a saponified ethylene-vinyl acetate copolymer (EVOH)-based resin, and a polyester-based resin. Even if the molten resin sheet 8 has a small volume resistivity value or is an electric conductor, strong electrostatic adhesion is generated. The present invention can also be applied to a conductive molten resin sheet having a volume resistivity value of about $10^3$ to $10^6$ Ωcm or a much smaller volume resistivity value in a molten state, such as a polyamide-based resin sheet or a saponified ethylene-vinyl acetate copolymer-based resin sheet that is conventionally difficult to manufacture utilizing the electrostatic intimate contact state caused in an electrostatic pinning method.

Here, the polyamide-based resin means a sheet made of a polyamide-based resin such as an aliphatic polyamide (e.g., nylon 6, nylon 66, nylon 46, nylon 11, or nylon 12), an alicyclic polyamide having a cyclohexane ring or the like, a polyamide obtained through polycondensation of a nylon salt (e.g., 6T/I or 9T) formed of aliphatic diamine and terephthalic acid and/or isophthalic acid or a nylon salt (e.g., mXD6) formed of xylylene diamine and aliphatic dicarboxylic acid, a copolyamide obtained by copolymerizing a monomer for a homopolyamide and a nylon salt, a mixture of these polyamides, or a mixture of the polyamide and a thermoplastic resin that can be blended with the polyamide, for example. Examples of the thermoplastic resin that can be blended with the polyamide include ethylene-vinyl acetate copolymers, saponified ethylene-vinyl acetate copolymers, ionomer resins, copolymers of ethylene and acrylic acid, methacrylic acid, methyl methacrylate, ethyl acrylate, and the like, and modified polyolefins such as polyethylene, polypropylene, ethylene-vinyl acetate copolymers and the like grafted with an unsaturated carboxylic acid such as maleic anhydride or acrylic acid, or a derivative thereof.

The EVOH-based resin means a sheet made of EVOH having an ethylene group content of 20 to 50 mol% and a saponification degree of 95 mol% or more, or a mixture of such EVOH and a polymer that can be blended with the EVOH, for example. The above-mentioned EVOH is not limited to an ethylene-vinyl acetate binary copolymer, and may also be a saponified copolymer constituted by three or more types of monomers that is obtained by copolymerizing ethylene, vinyl-acetate, and a monomer component that can be copolymerized therewith. Examples of the monomer component that can be copolymerized therewith include olefins such as propylene and isobutylene, unsaturated acids such as crotonic acid, acrylic acid, methacrylic acid, and maleic acid, and esters thereof. Furthermore, examples of a polymer that can be blended with EVOH include the above-mentioned ethylene-vinyl acetate-based saponified copolymers constituted by three or more types of monomers, ionomers, ethylene-vinyl acetate copolymers, and polyamides such as nylon 6.

The polyester-based resin is basically a polycondensate of a polyhydric carboxylic acid and a polyhydric alcohol, and is a compound having an ester bond in the molecule. In the present invention, a saturated polyester resin is preferable. Representative examples of the polyester resin include polyethylene terephthalate PET, polybutylene terephthalate PBT, polyethylene naphthalate PEN, polylactic acid PLA, polyester resins containing cyclohexanedimethanol, polyhydroxyalkanoate PHA, polyhydroxybutyric acid, polybutylene succinate PBS, and copolymers thereof.

The above-mentioned polyamide-based resin sheet, EVOH-based resin sheet, and polyester-based resin sheet encompass not only sheets made of only such a resin but also coextrudates having a multilayer structure including layers made of the above-mentioned polyamide-based resin, EVOH-based resin, and polyester-based resin, and the like on a side that comes into intimate contact with the surface of the cooling roll 1.

Furthermore, various additives such as carbon, metals, conductive compounds, antistatic agents, and metal salts may also be added to the thermoplastic resin. It will be appreciated that, in addition, minute powder of a lubricant, inorganic minute particles, a pigment, or the like can also be added thereto.

The present invention provides not only the method for manufacturing the thermoplastic resin sheet 12 but also a cooling roll 1 suitable for use in this method. That is, the cooling roll 1 is to be used to cool and solidify a molten thermoplastic resin sheet 8 having a volume resistivity value of $10^9$ Ωcm or less that has been melted and extruded from a mouthpiece 7, and the cooling roll 1 includes an outermost layer 4 with which the molten resin sheet 8 comes into intimate contact, a conductive internal electrode layer 3 that is adjacent to the interior side of the outermost layer 4, and an insulating layer 2 that is adjacent to the interior side of the internal electrode layer 3, and is configured such that a predetermined voltage can be applied to the internal electrode layer 3. The outermost layer 4 has a volume resistivity value of $10^7$ to $10^{13}$ Ωcm at 25 to 100°C. It is preferable that the volume resistivity value of the outermost layer 4 is substantially non-thermosensitive, and a change ratio R100/R25 of the volume resistivity values of the outermost layer 4 at different temperatures is 0.1 to 1.0. Here, the term "change ratio R100/R25 of the volume resistivity values at different temperatures" refers to a ratio R100/R25 of the volume resistivity value at 100°C (R100) to the volume resistivity value at 25°C (R25). Furthermore, the outermost layer 4 preferably has a center line average surface roughness Ra of 0.01 to 0.3 μm. Here, the reason why a material whose volume resistivity value is non-thermosensitive, that is, a material in which a decrease in the volume resistivity value due to an increase in the temperature is as small as possible, is used for the outermost layer 4 is that the molten thermoplastic resin sheet 8 in a high temperature state is immediately in the state of intimate contact with the surface of the outermost layer 4 just after coming into contact with the surface, and at this time, the temperature of the outermost layer 4 increases due to heat transfer from the molten resin sheet 8, but when a decrease in the volume resistivity value due to the increase in the temperature is very small, adhesion between the molten resin sheet 8 and the cooling roll 1 during the initial period of the intimate contact state is stabilized.

The method for obtaining an electrostatic intimate contact state due to a JR force in which the cooling roll 1 of the present invention is used can be applied to all molten thermoplastic resin sheets having a volume resistivity value of less than $10^9$ Ωcm, and is characterized in that adhesion hardly varies depending on the material of the molten resin sheet.

Novel significant effects as follows are obtained by using such a new method for obtaining an electrostatic intimate contact state to form a thermoplastic resin sheet through melt extrusion.

1. High-speed casting can be performed.
With the method of the present invention, adhesion of the molten resin sheet 8 is not affected by the rotation speed of the cooling roll 1, namely the sheet formation speed, and the molten resin sheet 8 comes into highly intimate contact with the surface of the cooling roll 1 with accompanying air flow suppressed, thus making it possible to perform high-speed sheet formation at a speed of 100 m/min or more, which cannot be realized using an electrostatic pinning method.

2. The surface of the cooling roll is always kept in a clean condition.
The molten resin sheet 8 is in the state of highly intimate contact with the surface of the cooling roll 1 and no gaps are formed between the molten resin sheet 8 and the surface of the cooling roll 1. Accordingly, precipitation of oligomers on the surface of the cooling roll 1 is suppressed, and the surface of the cooling roll is always in a clean condition, thus making it possible to perform sheet continuously for a long period of time.

3. The position of the application electrode need not be adjusted.
With a conventional electrostatic pinning method, the position of or the distance to the pinning electrode needs to be adjusted every time the sheet formation speed is changed, but such adjustments are not needed. Accordingly, it is possible to change the sheet formation speed and the thickness of the molten resin sheet 8 promptly and in real time without stopping the sheet formation.

4. It is easy to continuously attract and continuously peel off the resin sheet with a voltage being consistently applied.
The molten resin sheet 8 extruded from the mouthpiece 7 is firmly fixed to the surface of the cooling roll 1 in an intimate contact state due to a JR force at the moment when the molten resin sheet comes into contact with the cooling roll 1. Then, the molten resin sheet 8 is quickly cooled and solidified, and is further cooled while moving, and changes to the resin sheet 12. The volume resistivity value of the resin sheet 12 can be increased to a level at which a JR force does not act or is weakened until just before the resin sheet 12 is peeled off using the peeling roll 16 at the latest, thus making it easy to continuously peel off the resin sheet 12 under light load even with a voltage being applied to the internal electrode layer 3.

5. Electricity removal need not be performed on the surface of the cooling roll, and the inside of the obtained resin sheet is not electrified.
In the state in which a voltage is applied to the internal electrode layer 3, inverse charges that are generated on the surface of the outermost layer 4 having a volume resistivity value of $10^7$ to $10^{13}$ Ωcm due to peeling electrification of the resin sheet 12 and remain thereon disappear immediately due to the electric current (charges) supplied from the internal electrode layer 3. Accordingly, Electricity removal need not be performed on the surface of the cooling roll 1, and no soil such as dirt attaches thereto, thus making it possible to use the surface of the cooling roll 1 without performing further processing thereon to attract the molten resin sheet 8 again. Furthermore, the inside of the obtained resin sheet 12 is not electrified unlike the case of the pinning method.

6. Sheets of various thermoplastic resins including a polyamide-based resin can be formed at a high speed.
The present invention utilizes a JR force to obtain an intimate contact state of a molten resin sheet made of a thermoplastic resin having a volume resistivity value in a range between $10^9$ Ωcm or less and that of a conductive substance, and can be particularly used to form a sheet from a molten resin sheet having a volume resistivity value in a range from $10^4$ to $10^7$ Ωcm at a high speed. Specifically, the present invention is effective for polyamide-based resins, saponified ethylene-vinyl acetate copolymer (EVOH)-based resins, polyester-based resins, thermoplastic resins containing carbon, metals, antistatic agents, and various conductive additives, and the like. In particular, sheets made of polyamide-based resins such as nylon 6 are particularly useful and in great demand, but since the polyamide-based resins have a low volume resistivity value in a molten state, an electrostatic pinning method cannot be applied thereto, and thus high-speed sheet formation using these resins is considered to be difficult. However, the method for obtaining an electrostatic intimate contact state due to a JR force in which the cooling roll 1 of the present invention is used enables high-speed sheet formation, and thus productivity is significantly improved.

7. The adjustment of the volume resistivity value using an additive need not be made for sheet formation.

With the electrostatic pinning method, the electrostatic intimate contact state can be obtained only in the case where a molten resin sheet has a volume resistivity value in a very narrow range from $10^7$ to $10^8$ $\Omega$cm. For example, in the case of a molten resin sheet made of PET, which is a typical polyester resin, the volume resistivity value is as high as about $10^9$ $\Omega$cm, and therefore, fine adjustment is made to allow the volume resistivity value to fall within the above-mentioned very narrow range, which is suitable for the electrostatic pinning method, by adding, to the PET resin, alkali metals, alkali earth metals, acetates of metals such as Zn and Mn, various additives, and the like. However, such additives are significantly disadvantageous in that the original characteristics of the resin sheet are impaired as follows: thermal decomposition of a polyester resin is promoted; there is an increasing risk that ark discharge is generated; and the electric characteristics and hydrolysis resistance of the obtained sheet are impaired. With the method for obtaining an electrostatic intimate contact state due to a JR force according to the present invention, the electrostatic intimate contact state can be obtained as long as the molten resin sheet 8 has a volume resistivity value of $10^9$ $\Omega$cm or less, and therefore, additives are not needed, and a thermoplastic resin sheet that has excellent chemical, physical, and mechanical characteristics originating from the raw material resin is obtained.

8. Since a voltage is applied to the internal electrode layer, abnormal discharge toward the surface of the cooling roll does not occur.

The present invention does not provide a method like a conventional method in which space charges generated due to discharge around a pinning electrode to which a high voltage is applied are directly applied to the molten resin sheet 8, but a method in which a high direct-current voltage is applied to the internal electrode layer 3, and charges are supplied via the outermost layer 4, which is a highly resistive resistor, to the contact interface between the surface of the outermost layer 4 and the molten resin sheet 8. This outermost layer 4 has a volume resistivity value of $10^7$ to $10^{13}$ $\Omega$cm. In a highly resistive resistor material having a volume resistivity value in such a range, an electric current and charges move slowly inside the material and on the surface thereof and static electricity is likely to accumulate in the state in which the material is left as it is, but when a voltage is applied thereto, a minute electric current and charges can move. Even when the inside and the surface of such a highly resistive resistor is exposed to high-voltage discharge, a minute electric current flows and discharge energy is dissipated. Thus, spark discharge and surface spark discharge caused by electric current concentration are completely suppressed. Accordingly, spark discharge toward foreign matter or air bubble portions in the molten resin sheet 8, and abnormal discharge that penetrates the molten resin sheet 8 and damages the surface of the cooling roll 1, which are problematic in the electrostatic pinning method, does not occur. Since the applied voltage is 6 kV or less, which is lower than the withstanding voltage of the outermost layer 4, dielectric breakdown does not occur in the outermost layer 4. As a result, a resin sheet having excellent surface quality is obtained, the frequency of maintenance of the cooling roll is reduced, and the operating ratio of the sheet formation apparatus is significantly improved.

9. Adhesion acts on the cooling roll over the entire width thereof, and a thermoplastic resin having excellent characteristics is obtained.

With the conventional electrostatic pinning method, the pinning electrode is arranged extending in parallel with the width direction of the molten resin sheet. At this time, if the electrode spans a range that is wider than the width of the molten resin sheet, spark discharge is likely to occur on the exposed surface of the cooling roll. Therefore, the effective width of the pinning electrode is set to be smaller than the width of the molten resin sheet, and thus charges can be provided to only the interior region of the molten resin sheet excluding the two end portions. Accordingly, the conventional electrostatic pinning method is disadvantageous in that strong adhesion is obtained in a region around the center of the molten resin sheet, but adhesion is weak in the end portions of the sheet due to shortage of charges, and thus the formation of wrinkles, the thickness unevenness, and insufficient cooling are likely to occur due to accompanying air being entrained, and the like. Furthermore, with the electrostatic pinning method, electrostatic force becomes maximum at the position at which the distance between the pinning electrode and the surface of the roll is the smallest, and such a range is narrow. Accordingly, a change in the adhesion has a sharp inclination near the intimate contact start portion, and this may cause wrinkles.

On the contrary, adhesion due to a JR force in the present invention depends on the amount of charges that accumulate at the contact interface layer between the molten resin sheet 8 and the surface of the outermost layer 4, and therefore, the molten resin sheet 8 is in the state of uniform intimate contact with the entire surface with the outermost layer 4, and adhesion is strong. Furthermore, even when the distance between the molten resin sheet 8 and the cylindrical surface of the cooling roll 1 becomes very small, a JR force is not generated when the molten resin sheet 8 is not in contact with the surface of the cooling roll 1 yet, and a minute electric current flows through the contact interface layer just after the molten resin sheet 8 comes into contact with the surface of the cooling roll 1, and thus strong adhesion due to a JR force is generated. As a result, accompanying air flow is likely to be released from the intimate contact start line and is thus less likely to be entrained, and therefore, the molten resin sheet 8 can be in the state of uniform intimate contact with the entire surface of the cooling roll 1 without forming a gap. Accordingly, the resin sheet 12 that is not wrinkled and has a favorably uniform thickness, excellent planarity and flatness, excellent luster, and the like is obtained.

10. The applied voltage is low, and thus safety is ensured.

During the sheet formation, a voltage of 0.3 to 6 kV can be applied to the internal electrode layer 3, but a voltage of 3.5 kV or less is substantially sufficient. Meanwhile, the outermost layer 4 substantially has a withstanding voltage of 6 kV or more, which is sufficiently larger. The outermost layer 4 is made of a ceramics-based material having a volume resistivity value of $10^7$ to $10^{13}$ $\Omega$cm, which may be considered as substantially an insulating material from the viewpoint of a countermeasure against electric leakage. The internal electrode layer 3 is entirely covered by such an outermost layer 4 and is not exposed from the surface of the roll. Accordingly, the cooling roll is highly safe for human bodies and can be handled with security.

Measurement Method

The following are description of methods for measuring physical property values used in the present invention.

1. Center Line Average Roughness Ra

In the case of measuring the surface roughness of a cooling roll, when the measurement can be performed on the cooling roll in a rolled state, the average surface roughness Ra is actually measured using a portable surface roughness meter, whereas when it is difficult to perform the direct measurement on the actual surface, for example, in the case of a large-sized cooling roll having a roll diameter of about 2 m, a replica sample is produced, and the center line average roughness Ra thereof is measured. A replica film #17-1142RFA manufactured by Bioden is used to produce a replica sample. A measurement device according to JIS B 0651 equipped with a sensing pin having a conical shape with a vertex angle of 60 degrees whose spherical tip has a curvature radius of 2 $\mu$m is used. The measurement method is performed according to JIS B 0601-2013, and the measurement is performed under the condition that the cutoff value is set to 0.8 mm. The center line average roughness Ra is thus determined. The measurement is performed using Surfcoder SE1700a manufactured by Kosaka Laboratory Ltd. as the measurement apparatus.

2. Volume Resistivity Value

The volume resistivity value of the outermost layer 4 on the surface of the cooling roll 1 is measured according to JIS C 2141-1992 "Testing methods of ceramic insulators for electrical and electronic application". A main electrode having an outer diameter of 26 mm and a guard electrode having an outer diameter of 48 mm and an inner diameter of 38 mm are cut from a conductive pressure sensitive adhesive sheet, and are attached to a curved plane of the surface of the cooling roll so as to be concentrically arranged according to the three-terminal method in JIS C 2141. A conductive wire to which a terminal for a conductive wire is attached using conductive pressure sensitive adhesive tape is used as a contact between the surface of the main electrode and the surface of the guard electrode. The internal electrode layer 3 of the cooling roll is used as a counter electrode. A value 1 minute after the start of the measurement is employed as the measured value. A direct-current voltage of 500 V is applied between the main electrode, and the internal electrode layer 3 and the guard electrode using a high insulation-resistance meter according to JIS C 1303 (e.g., megohmmeter R-503 manufactured by Kawaguchi Electric Works), and the value I (A) of an electric current flowing through the main electrode and the counter electrode (internal electrode layer 3) at this time is used to determine a volume resistance $R_v$ (=VZI), and a volume resistivity value $\rho_v$ is then calculated based on the following equation.

$$\rho_v \, (\Omega\mathrm{cm}) = R_v \times A/d$$

$$A = \pi \times D^2/4$$

The letters used in the equations are as follows.

V: applied voltage (V)
$R_v$: volume resistance ($\Omega$)

$\rho_v$: volume resistivity value (Qcm)
A: area of main electrode (cm$^2$)
D: outer diameter of main electrode (cm)
$d$: thickness of outermost layer (cm)

It should be noted that the thickness $d$ is measured using a magnetic thickness meter. For example, SWT-8000/8100 manufactured by Sanko Electronic Laboratory, Co., Ltd. is used, a measurement probe has a diameter of 5 mm. It should be noted that it is difficult to directly measure the thickness d of the outermost layer 4 of the cooling roll, the thickness d of the outermost layer 4 may be estimated using the following method based on the shape of the lead terminal of the internal electrode layer 3.

(1) When the surfaces of the insulating layer and the internal electrode layer 3 are exposed from the portion at which the internal electrode lead wire 6 is connected to the internal electrode layer 3, the above-mentioned magnetic thickness meter is used to measure a thickness $d_2$ from the surface of the insulating layer 2, a thickness da from the surface of the internal electrode layer 3, and a thickness $d_4$ from the surface of the outermost layer 4. The thickness $d_2$ is the thickness of the insulating layer 2. The thickness of the internal electrode layer 3 is obtained by subtracting $d_2$ from $d_3$. The thickness of the outermost layer 4 is obtained by subtracting $d_3$ from $d_4$.
(2) When the portion at which the internal electrode lead wire 6 is connected to the internal electrode layer 3 is not exposed from the surface of the cooling roll, the thickness $d_4$ measured from the surface of the outermost layer 4 using the above-mentioned magnetic thickness meter is multiplied by 0.45, and the obtained value is taken as the thickness $d$ of the outermost layer 4.

The volume resistivity value $\rho_v$ of the insulating layer 2 is measured using the internal electrode layer 3 as a measurement electrode and the surface of the core metal 36 of the cooling roll 1 as a counter electrode. A direct-current voltage of 500 V is applied between the internal electrode layer 3 and the core metal 36, and the value I (A) of an electric current flowing at this time is used to determine a volume resistance $R_v$ (=V/I), and this $R_v$ is used to perform calculation based on the following equation.

$$\rho_v\ (\Omega cm) = R_v \times A/d_2$$

$$A = \pi \times D_R \times L$$

The letters used in the equations are as follows.

A: total area of internal electrode (cm$^2$)
V: applied voltage (V)
$R_v$: volume resistance of insulating layer ($\Omega$)
$\rho_v$: volume resistivity value ($\Omega$cm)
$D_R$: outer diameter of cooling roll (cm)
L: length in roll width direction of internal electrode (cm)
$d_2$: thickness of insulating layer 2 (cm)

3. Volume Resistivity Value of Molten Resin

Two electrode plate having the same dimensions (SUS304 thin plate, 20 mm$\times$20 mm$\times$0.5 t; the back face is insulated by a ceramics paint) are inserted into a melting pot made of ceramics with the distance between the electrode being 20 mm, and a resin pellet, which is a measurement target, is added thereto. The pellet is heated to 280°C in a nitrogen gas atmosphere and melted, and kept at this temperature. A voltage of V (V) is applied to the two electrodes using the same high insulation-resistance meter as the high insulation-resistance meter used to measure the volume resistance of the outermost layer 4, and an electric current I (A) is measured at this time. Then, a volume resistance $R_v$ (=VZI) of the molten resin is determined, and a volume resistivity value $\rho_v$ pf the molten resin is calculated based on the following equation.

$$\rho_v\ (\Omega cm) = R_v \times A/D$$

The letters used in the equations are as follows.

$R_v$: volume resistance ($\Omega$)
$\rho_v$: volume resistivity value of molten resin ($\Omega$cm)
A: area of electrode (cm$^2$)
D: distance between electrodes (cm)

Examples

A. Working Examples and Comparative Examples

The present invention will be specifically described by use of working examples and comparative examples, but the present invention is not limited to the examples below.

Working Example 1

After drying, a nylon 6 pellet (Novamid 1020CA manufactured by Mitsubishi Kasei Kogyo) was melted and kneaded at a melting temperature of 275°C using a extruder having a diameter of 180 mm, and was passed through a 10-$\mu$m-cut filtering medium. The obtained molten resin was extruded into a sheet-like shape from a T-die mouthpiece, and a resin sheet 12 having a sheet width of 1200 mm and a sheet thickness of about 180 $\mu$m was manufactured using a cooling roll having an outer diameter of 1500 mm whose surface was kept at 25°C. At this time, the nylon 6 had a volume resistivity value of $10^5$ $\Omega$cm in a molten state.

The cooling roll used here was manufactured as described below. The entire surface of the middle portion of a cylindrical metallic core metal 36 of a cooling roll 1 was sandblasted, and then an 80 wt% Ni/20 wt% Cr alloy was layered thereon through plasma thermal spraying to form a layer having a thickness of 50 $\mu$m as a bonding layer for improving the adhesion of a ceramics layer. Subsequently, aluminum oxide (alumina) (99.6 wt% Al$_2$O$_3$), which is a highly insulating material, was layered on the surface of the bonding layer through plasma thermal spraying to form a layer having a thickness of 250 pm, and then sealing treatment using a low-viscosity epoxy resin was performed on the thermally sprayed alumina layer to form an insulating layer 2 having a volume resistivity value of $10^{14}$ $\Omega$cm or more. An electrode made of tungsten (W) having a thickness of 30 $\mu$m, which is a conductive layer, was formed on the insulating layer 2 through plasma thermal spraying, and was used as an internal electrode layer 3. At this time, portions having a width of 20 mm at the two ends in the width direction of the cooling roll 1 were masked such that the internal electrode layer 3 was not formed on these portions. After the masks at the two ends were removed, an alumina-based ceramics material containing titanium oxide (TiO$_2$) in an amount of 10 wt% and alumina (Al$_2$O$_3$) in an amount of residual 90 wt% was layered on these two end portions and the upper face of the internal electrode layer 3, namely the entire cylindrical face, through plasma thermal spraying to form an outermost layer 4. The sealing treatment using a low-viscosity epoxy resin was performed on the ceramics material layer together with the tungsten layer of the internal electrode layer 3 as described above, and the outermost layer 4 having a volume resistivity value of $5.6 \times 10^{10}$ $\Omega$cm was thus obtained.

The outermost layer 4 was polished using a diamond grindstone such that the residual thickness was 250 $\mu$m and the surface roughness Ra after the polishing was 0.05 $\mu$m. It should be noted that a 20 mm $\times$ 30 mm rectangular region at one end portion of the roll was masked when the outermost layer 4 was formed through thermal spraying, and the internal electrode layer 3 was exposed from a 20 mm $\times$ 10 mm region of the roll end portion after the outermost layer 4 was formed through thermal spraying such that electric connection to the internal electrode layer 3 was enabled. An internal electrode lead wire 6 was connected to the exposed internal electrode layer 3.

Thereafter, a direct-current voltage of (+) 3.5 kV was applied to the internal electrode layer 3. Then, a molten nylon resin sheet 8 was extruded from a mouthpiece 7 onto the surface of the cooling roll rotated at a rotation speed of 100 m/min. The molten nylon resin sheet 8 could be in the state of firm intimate contact with the surface of the cooling roll 1 at the moment when the molten nylon resin sheet 8 came into contact therewith. At this time, a measured electric current value measured using an ammeter 37 included in a high-voltage direct-current power source 9 during the sheet formation was 43 mA, and the calculated electric current density per unit area of the entire area where the nylon resin sheet and the surface of the cooling roll were in intimate contact with each other was 1.5 $\mu$A/cm$^2$, which was a minute electric current density suitable for the generation of a JR force.

That is, the molten nylon resin sheet 8 was in the state of firm intimate contact with the surface of the cooling roll 1 over the entire width due to a Johnsen-Rahbek (JR) force at the moment when it came into contact therewith, and thus accompanying air flow was completely prevented from entering between the molten resin sheet 8 and the surface of the cooling roll 1. Accordingly, a resin sheet 12 having a highly uniform thickness, no surface defects such as craters, no wrinkles, no undulation, and favorable planarity was obtained. With this method, even when such sheet formation was continued for a long period of time of 48 hours or more, sublimates such as oligomers did not attach to the surface of the cooling roll 1, spark did not occur on the surface of the cooling roll 1, it was not necessary to perform electricity removal because the surface of the peeling roll 1 was not electrified, and the handleablitiy of the obtained resin sheet 12 was excellent because the inside thereof was also not electrified. The thus obtained resin sheet 12 was drawn in the two axial directions, namely a vertical direction and a horizontal direction, and heated. Specifically, a simultaneous biaxial drawing machine (LISIM manufactured by Bruckner) was used to draw the resin sheet 12 at a drawing temperature of 85°C such that the lengths in the vertical direction and the horizontal direction were respectively increased by factors of 3.8 and 4.0 and heat it at 210°C. Thus, a biaxially oriented nylon sheet having a thickness of 12 pm, favorable planarity and flatness, and a smooth surface was obtained.

Working Example 2

A sheet was formed under the conditions that the thickness of a formed sheet was 150 pm, the rotation speed of the cooling roll was 120 m/min, and a direct-current voltage (+) of 3.5 kV was applied to the internal electrode layer 3 in the same manner as in Working Example 1, except that PET for a film (IV0.65) (manufactured by Bell Polyester Products, Inc.) having a limiting viscosity (q) of 0.61 was used as a resin raw material. At this time, an electric current applied by the high-voltage direct-current power source 9 during the sheet formation was 29 mA, and the calculated electric current density per unit area of the entire area where the PET resin sheet and the surface of the cooling roll were in intimate contact with each other was 1.0 $\mu$A/cm$^2$, which was suitable for the intimate contact state due to a JR force. The molten resin sheet 8 could also be in the state of firm intimate contact with the surface of the cooling roll 1 due to a JR force. When the sheet formation was continued for 48 hours, there were no problems in handleability and productivity. In addition, the obtained resin sheet 12 had excellent smoothness and a favorably uniform thickness, and the inside thereof was not electrified.

Working Example 3

A sheet was formed under the conditions that the thickness of a formed sheet was 225 pm, the rotation speed of the cooling roll was 80 m/min, and a direct-current voltage of (+) 3.5 kV was applied to the internal electrode layer 3 in the same manner as in Working Example 1, except that a saponified ethylene-vinyl acetate copolymer (EVOH) (Soarnol ET manufactured by The Nippon Synthetic Chemical Industry Co., Ltd.) was used as a resin raw material. This sheet formation was continuously performed for 24 hours. At this time, an electric current applied by the high-voltage direct-current power source 9 during the sheet formation was 53 mA, and the calculated electric current density per unit area of the entire area where the EVOH resin sheet and the surface of the cooling roll were in intimate contact with each other was 1.8 $\mu$A/cm$^2$. The molten resin sheet 8 could also be in the state of firm intimate contact with the surface of the cooling roll 1 due to a JR force. There were no problems in handleability and productivity. In addition, the obtained resin sheet 12 had excellent smoothness and a favorably uniform thickness.

Working Example 4

In addition to applying a direct-current voltage of (+) 3.5 kV to the internal electrode layer 3 of the cooling roll to generate a JR force, a pinning electrode 13 made of a tungsten wire having a diameter of 0.3 mm was additionally installed in the apparatus used in Working Example 2 as shown in FIG. 5, a negative (-) voltage of 8 kV was applied to the pinning electrode 13, and charges were applied from the pinning electrode 13 to a molten resin sheet 8 made of PET. At this time, an electric current applied by the high-voltage direct-current power source 9 during the sheet formation was 38 mA, and the calculated electric current density per unit area of the entire area where the PET resin sheet and the surface of the cooling roll were in intimate contact with each other was 1.3 $\mu$A/cm$^2$. The minute electric current increased by about 30% compared with Working Example 2 due to the assisting effect exerted by the pinning electrode 13. Even when the maximum sheet formation speed was increased to 110 m/min, the sheet formation could be stably performed. When the sheet formation was continuously performed 24 hours under the condition that the thickness of a formed sheet was 165 $\mu$m, the obtained PET resin sheet 12 had favorable planarity and a favorably uniform thickness, and had a smooth surface. It is thus revealed that, when the molten resin sheet 8 is in the state of intimate contact with the surface of the cooling roll due to a JR force, further applying, to the molten resin sheet 8, inverse charges from the pinning electrode 13 to which a voltage having an inverse polarity makes it possible to further increase the adhesion.

Comparative Example 1

The material of the outermost layer of the cooling roll used in Working Examples 1 to 3 was changed to alumina (99.6 wt% $Al_2O_3$), which is a highly insulating material. That is, the alumina, which is a highly insulating material, was layered on the internal electrode layer made of tungsten through a plasma thermal spraying technique to form a layer having a thickness of 350 $\mu$m. Then, the sealing tretment using a low-viscosity epoxy resin was performed on the surface of the highly insulating alumina layer, and a highly insulating outermost layer having a volume resistivity value of $10^{14}$ $\Omega$cm or more was thus obtained. The outermost layer was polished using a diamond grindstone such that the residual thickness was 250 $\mu$m and the surface roughness Ra after the polishing was 0.06 $\mu$m. It should be noted that, in the same manner as in Working Example 1, a portion of the internal electrode layer was masked when the outermost layer was formed through thermal spraying, and a 10 mm $\times$ 20 mm rectangular region was exposed from the roll end portion such that electric connection was enabled.

An attempt was made to form a sheet in the same manner as in Working Example 1 by bringing a molten resin sheet made of nylon 6, which is the same as that in Working Example 1, under the conditions that the maximum sheet formation speed was 40 m/min and a direct-current voltage of (+) 6 kV was applied to the internal electrode layer. However, a newly extruded molten resin sheet made of nylon 6 was repelled by charges caused by peeling electrification and remained on the surface of the highly insulating outermost layer, and was not in the intimate contact state, and therefore, continuous sheet formation became impossible immediately. While a voltage was being applied to the internal electrode layer, the charges caused by peeling electrification could not be removed even when electrification removal was performed using a grounded carbon brush. When the voltage application to the internal electrode layer was stopped and the residual charges on the surface of the outermost layer were measured, inverse charges of (-) 3.5 kV accumulated. When electrification removal was performed using a carbon brush while the voltage application to the internal electrode layer was stopped, the inverse charges caused by peeling electrification could be removed until the surface electric potential was substantially zero. When a voltage of (+) 6 kV was applied to the internal electrode layer again in this state and a molten resin sheet made of nylon was cooled in an intimate contact state, the intimate contact state was obtained during only the initial period. Once peeling was performed, residual inverse charges were immediately generated on the surface of the outermost layer due to peeling electrification, and the molten resin sheet was repelled by the residual charges. Accordingly, the intimate contact state could not be obtained again, and thus the sheet formation could not be continued. A method in which a voltage applied to the internal electrode layer is further increased to 15 kV or more, for example to obtain adhesion is conceivable as a countermeasure against the failure of the intimate contact state caused by the residual inverse charges. However, based on past experience that, when a voltage of 8 kV was applied, dielectric breakdown caused by spark discharge occurred in the insulating layer and the outermost layer under the internal electrode layer and damaged them, it was determined that a further increase in the voltage was dangerous, and the sheet formation was stopped. The minimum measurement accuracy of an ammeter included in the high-voltage direct-current power source used to apply a voltage was 0.01 mA or less, but an electric current could not be observed using this ammeter during the sheet formation, and thus the electric current amount was negligible. It was thus revealed that an electrostatic force generated in this cooling roll was of a Coulomb force-type.

As described above, it was revealed that, in the case where the outermost layer was made of highly insulating alumina, when the applied voltage was 6.5 kV or less, adhesion was generated due to a Coulomb force-type electrostatic force during only the initial period of the sheet formation, but inverse charges were generated and remained on the surface of the cooling roll when the resin sheet that had been in the intimate contact state first was peeled off, and thereafter, the molten resin sheet could not be in the state of intimate contact with the outermost layer of the cooling roll under the influence of the inverse charges.

Comparative Example 2

A PET sheet was formed in the same manner as in Working Example 2, except that the outermost layer of the cooling roll used in Working Examples 1 to 3 was changed to a nylon 6 resin layer having a thickness of 0.5 mm.

As a result, irrespective of using nylon 6, which is an insulating material, for the outermost layer, continuous attraction and continuous peeling of the molten resin sheet could be performed, but when a voltage applied to the internal electrode layer was about (+) 6 to 7 kV, the adhesion of the molten resin sheet was very small, insufficient, and unstable even in the case where the sheet formation speed was about 20 m/min. When visual observation was performed, micro-discharge did not seem to occur near the position at which the molten resin sheet came into contact with the surface of the cooling roll. At this time, the minimum measurement accuracy of the ammeter 37 included in the high-voltage direct-current power source 9 used to apply a voltage to the internal electrode layer was 0.01 mA or less, but an electric current could not be observed using this ammeter during the sheet formation. In order to conduct an experiment in which a much higher voltage is applied, a $10^9$-$\Omega$ resistor was connected to the output terminal of the direct-current power source 9 such that a discharge spark electric current could be limited for the purpose of preventing the insulating layer 2 of the cooling roll from being damaged when applying a high voltage and securing safety, and thus a configuration in which a high voltage can be applied to the internal electrode layer via the resistor was obtained. When the applied voltage was increased to 15 kV or more as described above, an intimate contact state was temporarily obtained, but when the sheet formation speed was increased to 20 m/min in addition thereto, the intimate contact state became unstable again. When the applied voltage was further increased to 25 kV, the intimate contact state was slightly stabilized, but an electric current could not be observed using the ammeter included in the high-voltage direct-current power source even in the state in which the molten resin sheet made of PET comes into contact with the surface of the cooling roll and in the state of intimate contact therewith. In addition, the adhesion of the molten resin sheet was not very strong even in the case where the applied voltage was 25 kV, an air layer was entrained between the surface of the cooling roll and the molten resin sheet, crater-like surface defects occurred on the entire surface of the obtained resin sheet, and the transparency was poor due to insufficient cooling. Furthermore, when the sheet formation speed was gradually increased to 40 m/min, the intimate contact state became unstable again. The applied voltage was further increased to 35 kV to obtain much stronger adhesion, but micro-discharge occurred near the surface of the cooling roll, and the intimate contact state of the PET molten resin sheet remained unstable. Although the resistor for limiting a spark electric current was attached, there was a concern that dielectric breakdown occurred in the insulating layer 2 under the internal electrode layer, and thus the continuous sheet formation was immediately stopped. Even in the case where the intimate contact state was obtained, a minute electric current at a level that can be observed was not generated, and adhesion was weak even when a very high voltage of 15 kV or more was applied. It was thus determined that the electrostatic adhesion generated by the cooling roll in which a nylon 6 layer having a thickness of 0.5 mm was used as the outermost layer was the Coulomb force-type. It was revealed that, with the method for obtaining an electrostatic intimate contact state in which the insulating layer is made of nylon 6, a very high applied voltage was required to obtain strong adhesion, but the adhesion and the cooling capability were insufficient to prevent crater-like surface defects and to obtain transparency.

Comparative Example 3

The material of the outermost layer of the cooling roll used in Working Examples 1 to 3 was changed to alumina containing titanium oxide in an amount of 20 wt% ($Al_2O_3$/20 wt% $TiO_2$). That is, the alumina containing titanium oxide in an amount of 20 wt% as the material of the outermost layer was layered on the internal electrode layer made of tungsten through a plasma thermal spraying technique to form a layer having a thickness of 400 $\mu$m. Then, the sealing treatment using a low-viscosity epoxy resin was performed on the surface of the outermost layer. The outermost layer was polished using a diamond grindstone such that the residual thickness was 300 $\mu$m and the surface roughness Ra after the polishing was 0.06 $\mu$m. It was confirmed that the outermost layer had a volume resistivity value of $1.5 \times 10^6$ $\Omega$cm by performing a measurement after the polishing. A PET molten resin sheet was formed in the same manner as in Comparative Example 2, except that the sheet formation speed was 15 m/min. At this time, when a positive electrode was applied to the internal electrode layer and was increased to +0.5 kV, an electric current during the sheet formation exceeded 100 mA, which is the limit electric current of the direct-current high-voltage power source. Thus, an interlock was activated and the power source stops. Accordingly, a sheet could not be formed. To address this, a $10^6$-$\Omega$ resistor was connected to the output of the power source for the purpose of controlling the electric current to be smaller than or equal to the limit electric current of the power source, and a voltage was applied to the internal electrode layer via the resistor. Then, when a voltage was set to 0.25 kV again and an electric current was reduced to 25 mA, the molten resin sheet was in the state of intimate contact with the surface of the cooling roll though the adhesion was weak. Since the adhesion was insufficient, air was entrained between the molten resin sheet and the cooling roll. Thus, the obtained resin sheet had many crater-like surface defects and had poor transparency. Furthermore, when the sheet formation speed was increased to more than 15 m/min, the sheet formation immediately became unstable. However, if the applied voltage was further increased, an electric current vertically oscillated and became unstable, and thus the adhesion also became unstable. Accordingly, the voltage was not further increased, and the sheet formation was stopped. As a result, when the outermost layer had a volume resistivity of $10^6$ $\Omega$cm or less, it was difficult to balance the applied voltage and the electric current density within a range suitable for the generation of a JR force. It was thus revealed that a JR force was not generated normally, and this cooling roll could not be used to cool the molten resin sheet in the method for obtaining an electrostatic intimate contact state.

Tables 1 and 2 show the configurations of the cooling rolls, the methods for obtaining an intimate contact, the sheet formation speeds, the problems of the sheet formation, the physical properties of the obtained thermoplastic resin sheets, and the like of Working Examples 1 to 4 and Comparative Examples 1 to 3.

Table 1

|  | Work. Ex. 1 | Work. Ex. 2 | Work.Ex. 3 | Work. Ex. 4 |
|---|---|---|---|---|
| Structure of cooling roll | Roll core metal / Insulating layer / Electrode layer / Ceramics material layer of the present invention | | | |

(continued)

| | | Work. Ex. 1 | Work. Ex. 2 | Work.Ex. 3 | Work. Ex. 4 |
|---|---|---|---|---|---|
| Voltage application type (charge supply target) | | Internal electrode of cooling roll | | | Internal electrode / pinning electrode |
| Outermost layer | Material | 10 wt%$TiO_2$/$Al_2O_3$ | | | |
| | Volume resistivity value ($\Omega$cm) | $5.6 \times 10^{10}$ | | | |
| | R100/R25 | 0.3 | | | |
| | Surface roughness Ra ($\mu$m) | 0.05 | | | |
| | Thickness ($\mu$m) | 250 | | | |
| Internal electrode layer | Material | Tungsten (W) | | | |
| | Thickness ($\mu$m) | 30 | | | |
| Insulating layer | Material | 99.6 wt% $Al_2O_3$ | | | |
| | Volume resistivity value ($\Omega$cm) | $\geq 10^{14}$ | | | |
| | Thickness ($\mu$m) | 250 | | | |
| Molten resin | Type of molten resin sheet | Nylon 6 | PET | EVOH | PET |
| | Volume resistivity value ($\Omega$cm) | $10^5$ | $10^9$ | $10^4$ | $10^9$ |
| Applied voltage vs electric current | Applied voltage (kV) | 3.5 | - | - | - |
| | Minute electric current (mA) | 43 | 29 | 53 | 38 |
| | Electric current density ($\mu$A/cm$^2$) | 1.5 | 1.0 | 1.8 | 1.3 |
| Principle of adhesion generation | | JR force | JR force | JR force | JR force + pinning |
| Casting speed (m/min) | | 100 | 120 | 80 | 110 |
| Thickness of resin sheet ($\mu$m) | | 180 | 150 | 225 | 165 |
| Intimate contact state | Intimate contact state of molten resin sheet | A: intimate contact over the entire width | A | A | A |
| Handleability | Response to change in cooling roll speed | A: no | A | A | A |
| Maintenance | Spark problem | A: no | A | A | A |
| | Electricity removal from cooling roll | A: unnecessary | A | A | A |
| | Countermeasure against dirt for cooling roll | A: no | A | A | A |
| | Soil on cooling roll | A: no | A | A | A |
| | Handling | A: safe | A | A | A |

(continued)

|  |  | Work. Ex. 1 | Work. Ex. 2 | Work.Ex. 3 | Work. Ex. 4 |
|---|---|---|---|---|---|
| Physical properties | Obtained sheet characteristics | A: favorable thickness uniformity, planarity, and smoothness | A | A | A |
| Legends: A: Excellent, B: Good, C: Unstable, D: Poor | | | | | |

Table 2

| | | Comp. Ex. 1 | Comp. Ex 2 | Comp. Ex. 3 |
|---|---|---|---|---|
| Structure of cooling roll | | Roll core metal / Insulating layer / Electrode layer / Highly insulating ceramics layer | Roll core metal / Insulating layer / Electrode layer / Highly insulating thermosensitive layer | Roll core metal / Insulating layer / Electrode layer / Conductive ceramics layer |
| Voltage application type (charge supply target) | | Internal electrode of cooling roll | | |
| Outermost layer | Material | 99.6 wt% $Al_2O_3$ | Nylon 6 | 20 wt% $TiO_2/Al_2O_3$ |
| | Volume resistivity value ($\Omega$cm) | $\geq 10^{14}$ | $10^{15}$ | $10^6$ |
| | R100/R25 | 0.9 to 1.0 | $10^{-7}$ | 0.3 |
| | Surface roughness Ra ($\mu$m) | 0.06 | 0.06 | 0.06 |
| | Thickness ($\mu$m) | 250 | 500 | 300 |
| Internal electrode layer | Material | Tungsten (W) | | |
| | Thickness ($\mu$m) | 30 | | |
| Insulating layer | Material | 99.6 wt % $Al_2O_3$ | | |
| | Volume resistivity value ($\Omega$cm) | $\geq 110^{14}$ | | |
| | Thickness ($\mu$m) | 250 | | |
| Molten resin | Type of molten resin sheet | Nylon 6 | PET | PET |
| | Volume resistivity value ($\Omega$cm) | $10^5$ | $10^9$ | $10^9$ |
| Applied voltage vs electric current | Applied voltage (kV) | 6 | 35 | 0.25 |
| | Minute electric current(mA) | <0.01 | <0.01 | >>100 |
| | Electric current density ($\mu$A/cm$^2$) | - | - | - |
| Principle of adhesion generation | | Coulomb force | Coulomb force | - |
| Casting speed (m/min) | | 40 | 40 | 15 |
| Thickness of resin sheet ($\mu$m) | | - | - | - |

(continued)

| | | Comp. Ex. 1 | Comp. Ex 2 | Comp. Ex. 3 |
|---|---|---|---|---|
| Intimate contact state | Intimate contact state of molten resin sheet | D: no intimate contact | C: unstable | C: unstable |
| Handleability | Response to change in cooling roll speed | B: unnecessary | B: unnecessary | B: unnecessary |
| Maintenance | Spark problem | B: no | B: minute electric current is generated at high voltage | D: yes |
| | Electricity removal from cooling roll | D: no electricity removal due to strong peeling electrification | D: peeling electrification | D: no continuous sheet formation |
| | Countermeasure against dirt for cooling roll | D: no continuous sheet formation | D: dirt attached | |
| | Soil on cooling roll | | D: easily soiled | |
| | Handling | | D: danger of high voltage | |
| Physical properties | Obtained sheet characteristics | | D: crater like defects | |
| Legends: A: Excellent, B: Good, C: Unstable, D: Poor | | | | |

B. Measurement of Adhesion of Resin Sheet Due to JR Force and Coulomb Force Using Test Roll

Although it is important to quantitatively measure the magnitude of force that is applied between the molten resin sheet and the surface of the cooling roll that are in intimate contact with each other, the adhesion of the molten resin sheet in a thermally plasticized state cannot be measured. Therefore, in order to quantitatively compare the strength of adhesion generated by a JR force-type cooling roll according to the present invention and the strength of adhesion generated by a Coulomb force-type cooling roll, a test roll into which a JR force-type attraction mechanism was incorporated and a test roll into which a Coulomb force-type mechanism for obtaining an electrostatic intimate contact state was incorporated were used to measure adhesion thereof against an alternative sheet having a volume resistivity value close to that of a molten resin sheet. Regarding the Coulomb force-type cooling roll, changes in adhesion depending on a difference in the applied voltage and a difference in the thickness of the outermost layer were calculated using Equation (1).

1. Outline of Test

Electrostatic attracting substances that exert attraction due to a voltage being applied to a unipolar internal electrode layer are classified into the following two types based on the volume resistivity value of the outermost layer on the internal electrode layer.

1) JR force-type: a ceramics-based material having a volume resistivity value of $10^7$ to $10^{13}$ $\Omega$cm is used.
2) Coulomb force-type: a highly insulating material having a volume resistivity value of $10^{13}$ $\Omega$cm or more is used.

Test rolls of these two types for measuring an attraction force were produced using the cooling roll as a model, and the adhesion of an alternative sheet was evaluated using a method described later. The following is the description of the alternative sheet: (1) commercially available magnetic film for the VHS system was used as an alternative to the polyamide-based (nylon 6) molten resin sheet 8, and (2) a commercially available antistatic rubber sheet was used as an alternative to the PET molten resin sheet 8. The magnetic film for the VHS system had a configuration in which one face of 11-$\mu$m PET film was coated with a magnetic substance to form a layer having a thickness of 4 to 6 $\mu$m, and the back face had an antistatic finish. The magnetic substance coated portion had a volume resistivity value of $6.4 \times 10^4$

$\Omega$cm, which is substantially the same as the volume resistivity value of a molten polyamide-based (nylon 6) resin sheet, and thus this magnetic substance coated face was used as an intimate contact face. The antistatic rubber sheet was made of commercially available carbon-containing NBR black rubber, had a thickness of 1 mm, and had a volume resistivity value of $2.7 \times 10^8$ $\Omega$cm, which is substantially the same as that of a molten PET resin sheet. The VHS film is thin and thus the tensile strength is insufficient. Accordingly, when a JR force is measured, the VHS film is stretched and broken. The NBR black rubber sheet is also stretched and thus the measured value of a JR force is smaller. Accordingly, two pieces of pressure sensitive adhesive tape made of PE having a thickness of 100 $\mu$m was attached to a face on a side opposite to the attraction face for the purpose of reinforcement such that breakage or stretching did not occur.

In both cases of the JR force-type and the Coulomb force-type, if moisture adsorbs onto the surface of the roll and the surface of the alternative sheet due to the humidity of air, the adhesion will decrease. To avoid this, the measurement was performed at a room temperature of 25°C and a humidity of 40 RH% or lower, and the alternative sheet was placed on a silicone rubber heater and heated to and kept at 90 to 100°C until just before being brought into contact with the roll. Before the temperature decreased, the alternative sheet was brought into contact with the surface of the test roll and then brought into the intimate contact state. In the measurement using the alternative sheet, the alternative sheet is in the intimate contact state basically based on the same mechanism as the case of the adhesion of the molten resin sheet 8, and thus adhesion due to a JR force and adhesion due to a Coulomb force can be evaluated.

2. Measurement Method

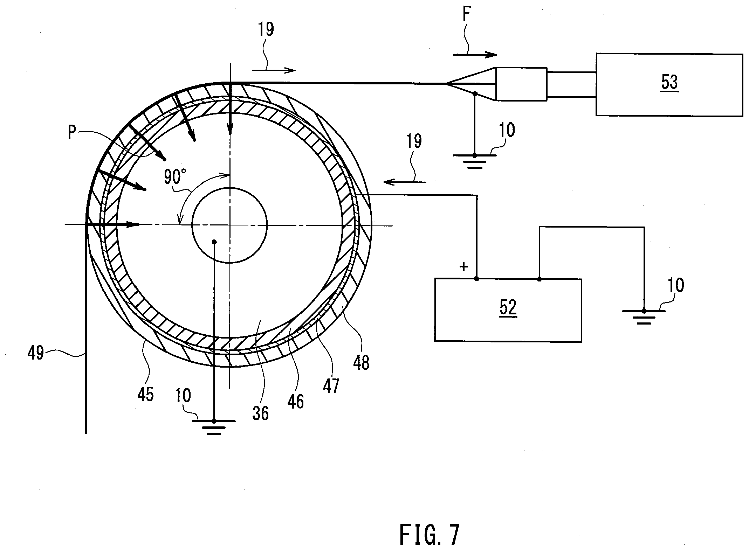

FIG. 7 shows a method for measuring adhesion.

In the state in which a direct-current voltage was applied to an internal electrode layer 47 using a direct-current high-voltage power source 52, the magnetic substance coated face of magnetic film 49 was brought into contact with the surface of an outermost layer 48 of a test roll 45, and the magnetic film was wound around the test roll 45 with an angle range of $\pi/2$ (90°) and brought into intimate contact with the surface of the outermost layer 48. Then, a static friction force F (N) was measured using a force gauge 53, and adhesion P (Pa) was calculated using Equation (5) below.

$$P = F/(S \times \mu) \qquad (5)$$

In this equation, S is the contact area (m$^2$) where the magnetic film 49 and the surface of the outermost layer 48 are in contact with each other, $\mu$ is the static friction coefficient between the magnetic substance coated face of the magnetic film 49 and the surface of the outermost layer 48. The static friction coefficient $\mu$ was separately measured using the relationship between the tension of the alternative sheet 49 and a load based on the Eider's belt theory in a setting similar to that shown in FIG. 7. In the state in which a direct-current voltage was not applied, the alternative sheet 49 was wound at a winding angle of $\pi/2$ (90°), and a weight W (N) was hung down from an end portion of the alternative sheet 49 on a side opposite to the force gauge 53. Tension T (N) was measured at this time. The friction coefficient $\mu$ was calculated from the measured value using Equation (6) below.

$$\mu = 1/(\pi/2) \cdot \ln(T/W) \qquad (6)$$

In the Coulomb force-type test roll in which the outermost layer 48 is made of a highly insulating substance, when the magnetic film 49 is peeled off from the test roll after the static friction force F has been measured, charges (-) opposite in polarity to the internal electrode 47 (+) accumulate on the surface of the outermost layer 48, that is, so-called peeling electrification occurs. The polarity of these antipolar charges is the same as that of the charges accumulating on the film 49, and in the state in which a voltage is applied to the internal electrode 47, electricity cannot be removed using even a grounded electricity removing brush, and the strength does not change. Accordingly, when an attempt is made to measure the static friction force F again, the film 49 is repelled by these charges, and the film 49 is not in the intimate contact state thereafter. A method for removing electricity on the surface of the roll as described below was used together as a method in which the influence of the peeling electrification is eliminated and the static friction force F is repeatedly measured.

1) After the static friction force is measured, the film 49 is peeled off the surface of the roll.
2) After the application of a voltage to the internal electrode 47 is stopped, the ground 10 is connected to the internal electrode 47.
3) An electricity removing brush connected to the ground 10 is brought into contact with the surface of the roll, and thus negative charges on the surface of the roll are removed.

4) An electrostatic potential measurement machine is used to confirm that the electric potential of the surface of the outermost layer 48 of the test roll is in a range from -0.02 kV to +0.02 kV inclusive.

5) The ground is disconnected from the internal electrode 47, and a predetermined voltage is applied to the internal electrode 47 again.

6) A film 49 for measurement that was separately subjected to electricity removal processing is brought into contact with the surface of the outermost layer 48 again, and brought into the intimate contact state.

7) The force gauge 53 is used to pull the film 49 in the tangential direction using the method shown in FIG. 7, and the static friction force F at the moment when the film 49 slides on the surface of the roll is measured.

On the other hand, the JR force-type test roll does not have such a problem of peeling electrification, and electricity removal processing need not be performed. Even if the magnetic film 49 was brought into the intimate contact state and peeled off continuously and repeatedly in the state in which a voltage was applied to the internal electrode 47, peeling electrification did not remain on the surface of the test roll, and therefore, the static friction force F could be continuously measured without performing electricity removal processing as mentioned above on the surface of the roll.

The static friction force F to the antistatic rubber sheet caused by the JR force-type test roll 45 was measured without using the above-mentioned method for removing electricity on the surface of the roll in the same manner as in the case of the magnetic film.

3. Types of Test Roll and Measurement Conditions

Table 3 shows the configurations of the test rolls, and Table 4 shows the configurations of the alternative sheets.

Table 3

| Type of test roll | | Coulomb force-type | JR force-type |
|---|---|---|---|
| Shape of test roll | | Diameter: 150 mm Middle portion width: 270 mm | |
| Material of test roll core metal | | STKM13A | |
| Outermost layer | Material | 99.6 wt% $Al_2O_3$ | 10 wt% $TiO_2$ / $Al_2O_3$ |
| | Formation method | Plasma thermal spraying | |
| | Thickness | 250 $\mu$m | 250 $\mu$m |
| | Volume resistivity value | > $10^{14}$ $\Omega$cm | $5.6 \times 10^{10}$ $\Omega$cm |
| Internal electrode layer | Material | Tungsten (W) | |
| | Formation method | Plasma thermal spraying | |
| | Thickness | 30 $\mu$m | |
| Insulating layer | Material | 99.6 wt% $Al_2O_3$ | |
| | Formation method | Plasma thermal spraying | |
| | Residual thickness after polishing | 280pm | 280pm |
| | Volume resistivity value | > $10^{14}$ $\Omega$cm | |
| Sealing treatment | | Low-viscosity epoxy resin | |
| Outermost layer polishing method | | Diamond grindstone polishing | |
| Outermost layer surface roughness (Ra) | | 0.06 $\mu$m | 0.05 $\mu$m |
| Static friction coefficient for alternative sheet ($\mu$) | VHS magnetic film | 0.317 | 0.333 |
| | Antistatic rubber sheet | - | 0.315 |

Table 4

| Measurement target | Molten nylon 6 sheet alternative | Molten PET sheet alternative |
|---|---|---|
| Alternative sheet | Magnetic film for VHS system | Antistatic rubber sheet |
| Sheet width | 28 mm | 50 mm |
| Sheet thickness | 16 $\mu$m | 1 mm |
| Sheet volume resistivity value ($\rho$) | $6.4 \times 10^4$ Qcm | $2.7 \times 10^8$ |
| Contact area between sheet and roll | 28.2 cm$^2$ | 58.9 cm$^2$ |
| Applied voltage | Direct-current voltage (+) is applied to internal electrode | |
| Roll surface temperature | 25°C | |
| Measurement environment | 25°C, 40RH%or less humidity | |

The test roll 45 is made of STKM13A and is shaped such that the diameter is 150 mm, a middle portion has a width of 270 mm, and two shafts have a diameter of 25 mm and a length of 75 mm. The inside of the roll 45 has a single tube structure in which cooling water can be used, and the roll 45 includes a core metal 36, an insulating layer 46, an internal electrode layer 47, and an outermost layer 48. In this test, adhesion was measured using the alternative sheets, and therefore, cooling water was not used. The roll was not rotated and was fixed. The layers 46, 47, and 48 of the JR force-type test roll are substantially the same as those of the cooling roll 1 of Working Example 1. Regarding the Coulomb force-type test roll, the outermost layer 48 is a plasma thermally sprayed layer made of alumina (99.6% Al$_2$O$_3$), which is the same insulating material as that used in Comparative Example 1, and the other layers are substantially the same as those of the JR force-type test roll.

4. Measurement Results

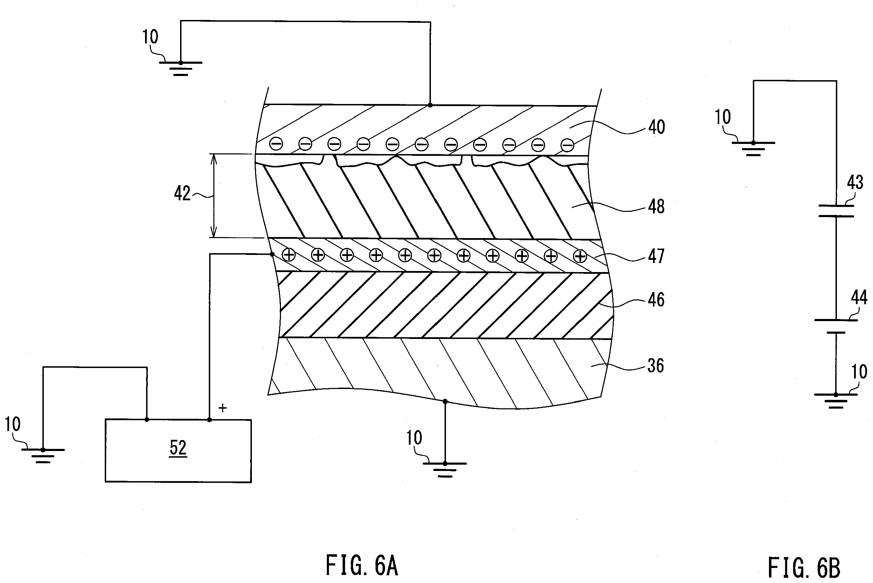

The actually measured values of adhesion generated by the JR force-type test roll in which the outermost layer 48 is a thermally sprayed Al$_2$O$_3$/10% TiO$_2$ film that is equivalent to the outermost layer of the present invention (i, ii), and the actually measured values of adhesion generated by the Coulomb force-type test roll in which the outermost layer 48 is a highly insulating thermally sprayed 99.6% Al$_2$O$_3$ film (iii) are plotted in the graph shown in FIG. 8. Both of the outermost layers 48 of the two test rolls have a thickness of 250 $\mu$m. It can be understood from this graph that the adhesion generated by the JR force-type test roll was very high and was 6.5 times or larger than the adhesion generated by the Coulomb force-type test roll, and very strong adhesion was obtained using a low voltage of 0.3 to 5 kV or lower.
Furthermore, an equation for calculating the adhesion P (Pa) was derived from the equivalent circuit showing the state in which the alternative sheet is attracted to the Coulomb force-type test roll, and the influence of the thickness 42 (dc (m)) of the outermost layer 48 on the adhesion of the alternative sheet was evaluated. FIG. 6A shows a model diagram illustrating the charge distribution state in the state in which the Coulomb force-type attracting substance attracts a semiconductive or conductive attracted substance 40 (corresponding to the alternative sheet), and FIG. 6B shows the equivalent circuit thereof. In this model, the outermost layer 48 is made of a highly insulating material and has a volume resistivity value of more than 10$^{13}$ $\Omega$cm, and a minute electric current (not shown) is as small as a level of leakage electric current and is thus negligible when an applied voltage 44 is smaller than about 35 kV. The resistance of the attracted substance 40 is much smaller than that of the outermost layer 48 and is thus negligible, and therefore, it is not shown in the equivalent circuit shown in FIG. 6B. When an electric current in the equivalent circuit is small enough to be negligible, dielectric polarization (not shown) occurs in the highly insulating substance of the outermost layer 48 due to the voltage 44 applied to the internal electrode 47, inverse charges are induced on the bottom face of the attracted substance 40 due to this polarization, and the internal electrode 47 and the attracted substance 40 form a capacitor 43 with the outermost layer 48 being located therebetween. In the case of the Coulomb force-type attracting substance shown in FIGS. 6A and 6B, it may be considered that the distance between the internal electrode 47 and the attracted substance 40 is substantially equal to the thickness 42 of the outermost layer 48, and the area of the capacitor is also substantially equal to the apparent contact area (i.e., facing area) of the attracted substance 40 with respect to the outermost layer 48, and therefore, if the dielectric constant of the outermost layer 48 is determined, Equation (1) below showing the adhesion P in the Coulomb force-type attracting substance 40 can be derived from the capacitor (capacitance) of the capacitor 43 and a voltage applied to the internal electrode 47.

36

$$P=1/2 \cdot \varepsilon_0 \varepsilon_r \cdot (V/d_C)^2 \qquad (1)$$

In this equation, $\varepsilon_0$ is the dielectric constant of a vacuum and its value is $8.85 \times 10^{-12}$ (F/m), and $\varepsilon_l$ is the relative dielectric constant of the dielectric substance of the outermost layer 48. $\varepsilon_l$ is 8.4 in the case of the thermally sprayed alumina (99.6% $Al_2O_3$) film, and 4.5 in the case of nylon 6. These physical property values are used to calculate the adhesion (Coulomb force) values in the cases where a thermally sprayed alumina film having a thickness of 0.25 mm and nylon 6 films having thicknesses of 0.25 mm, 0.5 mm, and 1 mm are used as the outermost layer 48 using Equation (1) when the applied voltage is in a range from 0.3 to 35 kV. The results are also shown in the graph shown in FIG. 8. From the comparison between the actually measured value (iii) and the calculated value (iv) of the adhesion when a thermally sprayed alumina film having a thickness of 0.25 mm is used as the outermost layer 48, it can be understood that this equation is substantially appropriate. An equation for calculating the adhesion in the case of a JR force is Equation (3) described above, but at present, the ratio between the areas of the minute contact point 17 and the minute gap 18, the conversion factor for converting the surface roughness to the minute gap, the contact resistance 27 ($R_{gap}$), and the electric potential difference 31 ($V_{gap}$) are not measured yet, and a constant a for adjusting an effective value is not determined. Accordingly, in the case of a JR force, only the actually measured values are shown in the graph.

It can be understood from the graph shown in FIG. 8 that the adhesion generated by the Coulomb force-type test roll is weak, and a high voltage needs to be applied to obtain practical adhesion. In order to enable a high voltage to be applied, the thickness 42 (dc) of the outermost layer 48 needs to be increased to ensure the withstanding voltage. However, it can be understood that, when the thickness is increased, the distance 42 between the internal electrode 47 and the attracted substance 40 is increased, and the adhesion generated by the Coulomb force-type test roll abruptly decreases. Eventually, it can be understood that, in the case of the Coulomb force-type test roll in which the outermost layer 48 is made of an insulating substance, a high voltage is required for the intimate contact state of the attracted substance 40, but such a thickness that can ensure the withstanding voltage is required to enable a high voltage to be applied, and as a result, practical adhesion cannot be obtained. It can be understood from the graph shown in FIG. 8 that, in the case of the Coulomb force-type test roll (vi) in which a nylon 6 layer having a thickness of 0.5 mm is used as the insulating layer for the outermost layer, practical adhesion cannot be obtained even when the voltage is increased to 15 kV, and adhesion that is equivalent to the actually measured values (i) and (ii) at 3 kV in the case of a JR force cannot be obtained only when a high voltage of 35 kV, which is not practical and is dangerous, is applied. In the case of a nylon 6 layer having a thickness of 1 mm (vii), necessary adhesion cannot be obtained even when the voltage is increased to 35 kV.

Furthermore, it is fatal that, in the case of the Coulomb force-type test roll in which a film made of a highly insulating ceramics material, such as a thermally sprayed alumina film, is used as the outermost layer 48, inverse charges due to peeling electrification that occurs when the attracted substance 40 is peeled off remains on the surface of the outermost layer 48. These inverse charges cannot be removed in the state in which a voltage is applied to the internal electrode 47, and therefore, the attracted substance cannot be continuously brought into the intimate contact state and peeled off.

It can be understood from the description above that both of the Coulomb force-type cooling rolls based on, out of the methods in which a voltage is applied to a conductive electrode inside a cooling roll, the method as disclosed in Patent Document 14 in which the outermost layer is made of a nylon resin and the method in which the outermost layer is made of an insulating ceramics material are not suitable as a cooling roll to be used in a melt extrusion method for forming a thermoplastic resin sheet.

C. Measurement of Adhesion of Resin Sheet Using JR Force-type Test Roll in Combination with Pinning Electrode

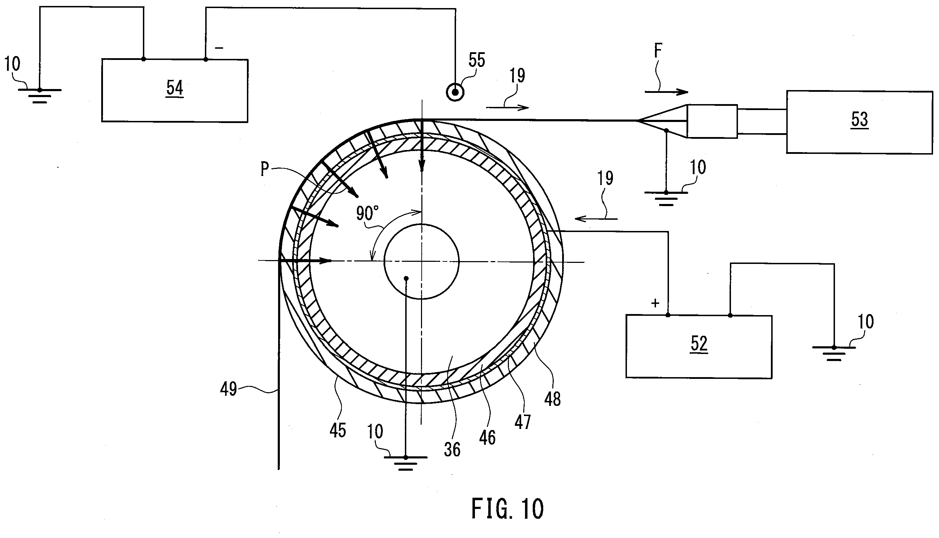

In the adhesion testing method using the JR force-type test roll used in Test B (FIG. 7), a pinning electrode 55 made of a rhenium-tungsten wire having a diameter of 0.3 mm was further installed at a position 7 mm away from an attracted film 49 above the air face of the attracted film 49 as shown in FIG. 10. A voltage opposite in polarity to the internal electrode layer 47 of (-) 8 kV was applied to the pinning electrode 55 using a direct-current high-voltage power source for pinning 54, and thus inverse charges were allowed to accumulate on the air face of the attracted film 49. The same rubber sheet and magnetic film as those in Test B were used as the attracted film 49. Adhesion was measured in the same manner as in Test B while a voltage applied to the internal electrode layer 47 of the JR force-type test roll 45 was changed from (+) 0.25 kV to (+) 3.5 kV.

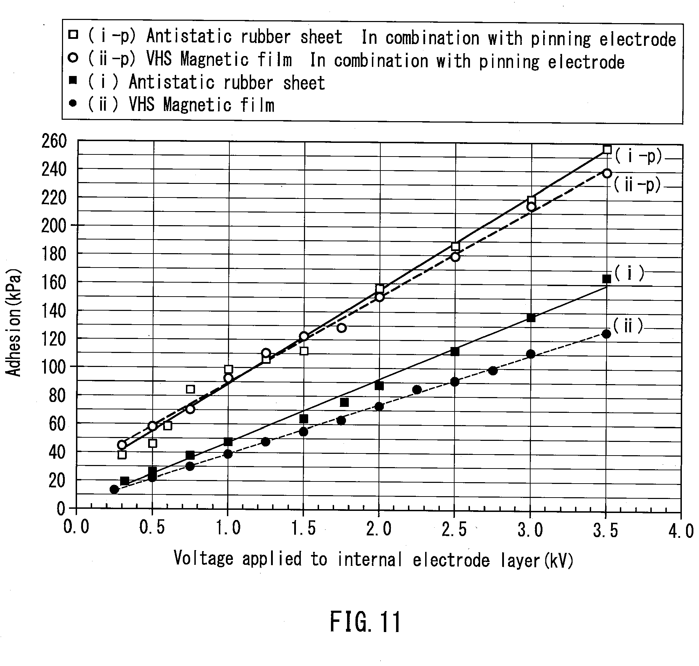

FIG. 11 shows the results. The actually measured values (i-p) and (ii-p) respectively indicate the measurement results from the rubber sheet and the magnetic film in the case where the pinning electrode 55 was used in combination. For reference, the actually measured values (i) and (ii) (corresponding to the actually measured values (i) and (ii) shown in FIG. 8, respectively) obtained from the rubber sheet and the magnetic film in the case where the pinning electrode was not used are also shown. As is clear from the comparison between the actually measured value (i-p) and the actually measured value (i) and the comparison between the actually measured value (ii-p) and the actually measured value (ii), in both of the cases of the rubber sheet and the magnetic film, larger adhesion was obtained in the case where the JR force-type cooling roll and the pinning electrode were used together compared with the case where only the JR force-type cooling roll was used. As the applied voltage increased, an increasing amount of adhesion in the case where the pinning electrode was used in combination from that in the case where only the JR force-type cooling roll was used increased. When a voltage applied to the internal electrode layer 47 was set to zero, the value of adhesion for the magnetic film measured using only the pinning electrode 55 was 30 kPa. On the contrary, when the applied voltage was 3.5 kV, an increasing amount of adhesion for the magnetic film in the case where the JR force-type cooling roll and the pinning electrode were used in combination (actually measured value (ii-p)) from that in the case where only the JR force-type cooling roll was used (actually measured value (ii)) was 115 kPa, which is 3.8 times larger than 30 kPa. That is, adhesion in the case where the JR force-type cooling roll and the pinning electrode were used in combination is much larger than the simple total of adhesion generated by the JR force-type cooling roll and adhesion generated by the pinning electrode. In addition, the increasing amount of adhesion due to the synergetic effect is proportional to a voltage applied to the internal electrode layer.

It is revealed from the description above that, using the JR force-type cooling roll and the pinning electrode together makes it possible to perform casting of a thermoplastic resin sheet utilizing an electrostatic intimate contact state due to stronger adhesion.

List of Reference Numerals

1. Cooling roll
2. Insulating layer
3. Internal electrode layer
4. Outermost layer (Ceramics-based material layer)
5a. Highly insulating ring
5b. Slip ring for connecting internal electrode
6. Internal electrode lead wire
7. Mouthpiece
8. Molten resin sheet
9. High-voltage direct-current power source for JR force
10. Ground
11a. Electrode output wire
11b. Carbon brush
12. Cooled and solidified thermoplastic resin sheet
13. Pinning electrode
14. High-voltage direct-current power source for pinning (counter electrode)
15. Wire for pinning
16. Peeling roll
17. Minute contact point
18. Minute gap
19. Minute electric current
20. Charge having inverse polarity
22. Face of roll for cooling molten resin sheet
23. Surface of outermost layer (uppermost face of cooling roll)
25. Resistance of molten resin sheet ($R_{sheet}$)
26. Capacitor of minute gap ($C_{gap}$)
27. Contact resistance of minute contact portion ($R_{gap}$)
28. Resistance of outermost layer ($R_{bulk}$)
29. Capacitor of outermost layer ($C_{bulk}$)
31. Voltage drop at contact interface between molten rein sheet and ceramics material layer ($V_{gap}$)
33. Total applied voltage ($V_0$)
34. Height of minute gap ($d$)
35. Thickness of outermost layer
36. Core metal
37. Ammeter of direct-current high-voltage power source
38. Internal electrode

40. Attracted substance
42. Thickness of outermost layer (insulating substance) (de)
43. Capacitor (C)
44. Applied voltage (V)
45. Test roll
46. Lower insulating layer
47. Internal electrode
48. Outermost layer
49. Attracted film
52. Direct-current high-voltage power source for JR force
53. Force gauge
54. Direct-current high-voltage power source for pinning
55. Pinning electrode

**Claims**

1. A cooling roll (1) for manufacturing a thermoplastic resin sheet, for use in a method in which a resin sheet that is made of a molten thermoplastic resin (8) and has a volume resistivity value of $10^9$ Ωcm or less is continuously extruded from a grounded mouthpiece (7) onto a surface of a cooling roll that is continuously rotated, the resin sheet is cooled and solidified while being rotated and transferred in a state of intimate contact with the surface of the cooling roll, and then the cooled and solidified resin sheet (12) is continuously peeled off from the cooling roll to obtain a thermoplastic resin sheet, the cooling roll comprising:

   an outermost layer (4) with which the resin sheet (8, 12) comes into intimate contact;
   a conductive unipolar internal electrode layer (3) that is adjacent to an interior side of the outermost layer (4); and
   an insulating layer (2) that is adjacent to an interior side of the internal electrode layer (3),
   wherein the cooling roll (1) is configured such that a predetermined voltage can be applied to the internal electrode layer (3),
   the outermost layer (4) is made of a ceramics-based material and has a volume resistivity value of $10^7$ to $10^{13}$ Ωcm at 25 to 100°C,
   the cooling roll (1) is designed to generate an electrostatic force with which the resin sheet (8, 12) in contact with the outermost layer (4) is brought into a state of intimate contact with the outermost layer (4) in a state in which the predetermined voltage is applied to the internal electrode layer (3),
   wherein the electrostatic force is mainly based on the Johnsen-Rahbek effect and the cooling roll (1) is cooled by a cooling medium inside the cooling roll (1).

2. The cooling roll (1) according to claim 1,

   wherein at least one of the insulating layer (2), the internal electrode layer (3), and the outermost layer (4) is constituted by a material formed through a thermal spraying technique or a material including one of an inorganic binder and an organic binder, and
   wherein a sealing treatment is performed on at least one of the insulating (2) layer, the internal electrode layer (3), and the outermost layer (4).

3. The cooling roll according to claim 1 or 2, wherein the outermost layer (4) has a center line average surface roughness Ra of 0.01 μm to 0.3 μm.

4. The cooling roll according to any one of claims 1 to 3, wherein the volume resistivity value of the outermost layer (4) is substantially non-thermosensitive and a change ratio R100/R25 of the volume resistivity value at different temperatures is 0.1 to 1.0, where the change ratio R100/R25 of the volume resistivity values at different temperatures refers to a ratio R100/R25 of the volume resistivity value at 100°C (R100) to the volume resistivity value at 25°C (R25).

5. The cooling roll according to any one of claims 1 to 4,

   wherein the ceramics-based material is alumina-based ceramics, zirconium oxide-based ceramics or magnesium-based ceramics containing a compound selected from titanium oxide, chromium oxide, silicon oxide, manganese oxide, nickel oxide, and iron oxide, or aluminum oxide-based ceramics containing titanium oxide in an amount of 5 to 17 wt%,
wherein the insulating layer (2) includes at least one high insulating material selected from an aluminum oxide-based ceramics material, an aluminum oxide-based ceramics material containing titanium oxide in an amount of 2 to 4 wt%, a magnesium oxide-based ceramics material, a beryllium oxide-based ceramics material, an aluminum nitride-based ceramics material, a silicon nitride-based ceramics material, porcelain, and enamel, and
wherein the internal electrode layer (3) is made of a conductive material including tungsten or molybdenum.

6. A method for manufacturing a thermoplastic resin sheet comprising:

a step of continuously extruding a resin sheet that is made of a molten thermoplastic resin (8) and has a volume resistivity value of $10^9$ $\Omega$cm or less from a grounded mouthpiece (7) onto a surface of a cooling roll (1) that is continuously rotated;
a step of cooling and solidifying the resin sheet while rotating and transferring the resin sheet in a state of intimate contact with the surface of the cooling roll; and
a step of continuously peeling off the cooled and solidified resin sheet (12) from the cooling roll,
wherein the cooling roll (1) is the cooling roll according to any one of claims 1 to 5, and
the resin sheet is brought into a state of intimate contact with the cooling roll (1) and the cooled and solidified resin sheet (12) is peeled off from the cooling roll (1) while a predetermined direct-current voltage is applied to the internal electrode layer (3).

7. The method for manufacturing a thermoplastic resin sheet according to claim 6,
wherein, by applying the direct-current voltage to the internal electrode layer, the surface of the outermost layer (4) is electrified, a minute electric current flows through a minute contact point where the outermost layer (4) and the resin sheet are in contact with each other, charges having mutually inverse polarities are respectively induced in the outermost layer (4) and the resin sheet, which are opposite to each other via a minute gap formed between the outermost layer (4) and the resin sheet, and the resin sheet is brought into a state of intimate contact with the cooling roll due to an electrostatic force generated by the charges having mutually inverse polarities.

8. The method for manufacturing a thermoplastic resin sheet according to claim 6 or 7,
wherein adhesion of the resin sheet (8, 12) for the cooling roll (1) is mainly caused by the Johnsen-Rahbek force.

9. The method for manufacturing a thermoplastic resin sheet according to any one of claims 6 to 8,
wherein a humidity in a space including a location on the cooling roll (1) at which the resin sheet (8, 12) lands is controlled to be 40 RH% or less.

10. The method for manufacturing a thermoplastic resin sheet according to any one of claims 6 to 9,
wherein charges opposite in polarity to the direct-current voltage applied to the internal electrode layer (3) is applied to an air face of the resin sheet (8, 12) on a side opposite to a face that is to be in intimate contact with the cooling roll (1).

11. The method for manufacturing a thermoplastic resin sheet according to any one of claims 6 to 10,
wherein a direct-current voltage of 0.3 to 6.0 kV is applied to the internal electrode layer (3).

12. The method for manufacturing a thermoplastic resin sheet according to any one of claims 6 to 11,
wherein a minute electric current flowing to the resin sheet (8, 12) in contact with the surface of the cooling roll (1) via the surface of the cooling roll is 0.005 to 6 $\mu$A/cm$^2$ per unit area over an entire contact area where the cooling roll (1) and the resin sheet (8, 12) are in contact with each other.

13. The method for manufacturing a thermoplastic resin sheet according to any one of claims 6 to 12, further comprising

a step of conveying the resin sheet (8, 12) peeled off from the cooling roll (1) on a grounded peeling roll 16 made of a metal,
wherein the resin sheet (8, 12) is not electrified after passing the peeling roll (16) made of a metal.

14. The method for manufacturing a thermoplastic resin sheet according to any one of claims 6 to 13,
wherein the thermoplastic resin is a polyamide-based resin, a saponified ethylene-vinyl acetate copolymer-based resin, or a polyester-based resin.

**15.** The method for manufacturing a thermoplastic resin sheet according to any one of claims 6 to 14,
wherein the thermoplastic resin contains carbon, a metal, a conductive compound, an antistatic agent, or a metal
salt as an additive.

**Patentansprüche**

**1.** Kühlwalze (1) zur Herstellung einer thermoplastischen Harzfolie zur Verwendung in einem Verfahren, bei dem eine
Harzfolie, die aus einem geschmolzenen thermoplastischen Harz (8) besteht und einen Volumenwiderstandswert
von $10^9$ Ωcm oder weniger aufweist, kontinuierlich aus einem geerdeten Mundstück (7) auf eine Oberfläche einer
Kühlwalze, die kontinuierlich gedreht wird, extrudiert wird, die Harzfolie gekühlt und verfestigt wird, während sie
gedreht und in einem Zustand engen Kontakts mit der Oberfläche der Kühlwalze transportiert wird, und dann die
gekühlte und verfestigte Harzfolie (12) kontinuierlich von der Kühlwalze abgezogen wird, um eine thermoplastische
Harzfolie zu erhalten, wobei die Kühlwalze umfasst:

eine äußerste Schicht (4), mit der die Harzfolie (8, 12) in engen Kontakt kommt;
eine leitfähige unipolare Innenelektrodenschicht (3), die an eine Innenseite der äußersten Schicht (4) angrenzt;
und
eine Isolierschicht (2), die an eine Innenseite der Innenelektrodenschicht (3) angrenzt,
wobei die Kühlwalze (1) so konfiguriert ist, dass eine vorbestimmte Spannung an die Innenelektrodenschicht
(3) angelegt werden kann,
die äußerste Schicht (4) aus einem keramikbasierten Material besteht und einen Volumenwiderstandswert von
$10^7$ bis $10^{13}$ Ωcm bei 25 bis 100 °C aufweist,
die Kühlwalze (1) dazu ausgelegt ist, eine elektrostatische Kraft zu erzeugen, mit der die mit der äußersten
Schicht (4) in Kontakt stehende Harzfolie (8, 12) in einem Zustand, in dem die vorbestimmte Spannung an der
Innenelektrodenschicht (3) anliegt, in einen Zustand engen Kontakts mit der äußersten Schicht (4) gebracht wird,
wobei die elektrostatische Kraft hauptsächlich auf dem Johnsen-Rahbek-Effekt basiert und die Kühlwalze (1)
durch ein Kühlmedium im Inneren der Kühlwalze (1) gekühlt wird.

**2.** Kühlwalze (1) nach Anspruch 1,

wobei mindestens eine der Isolierschicht (2), der Innenelektrodenschicht (3) und der äußersten Schicht (4) aus
einem durch eine thermische Spritztechnik gebildeten Material oder einem Material besteht, das eines von
einem anorganischen Bindemittel und einem organischen Bindemittel beinhaltet, und
wobei eine Versiegelungsbehandlung an mindestens einer der Isolierschicht (2), der Innenelektrodenschicht
(3) und der äußersten Schicht (4) durchgeführt wird.

**3.** Kühlwalze nach Anspruch 1 oder 1, wobei die äußerste Schicht (4) eine durchschnittliche Mittenlinienoberflächenrauhigkeit Ra von 0,01 μm bis 0,3 μm aufweist.

**4.** Kühlwalze nach einem der Ansprüche 1 bis 3,
wobei der Volumenwiderstandswert der äußersten Schicht (4) im Wesentlichen nicht wärmeempfindlich ist und ein
Änderungsverhältnis R100/R25 des Volumenwiderstandswertes bei verschiedenen Temperaturen 0,1 bis 1,0 beträgt, wobei sich das Änderungsverhältnis R100/R25 der Volumenwiderstandswerte bei verschiedenen Temperaturen auf ein Verhältnis R100/R25 des Volumenwiderstandswertes bei 100 °C (R100) zum Volumenwiderstandswert
bei 25 °C (R25) bezieht.

**5.** Kühlwalze nach einem der Ansprüche 1 bis 4,

wobei das keramikbasierte Material eine aluminiumdioxidbasierte Keramik, zirkonoxidbasierte Keramik oder
magnesiumbasierte Keramik, die eine Verbindung enthält, ausgewählt aus Titanoxid, Chromoxid, Siliziumoxid,
Manganoxid, Nickeloxid und Eisenoxid, oder aluminiumoxidbasierte Keramik ist, die Titanoxid in einer Menge
von 5 bis 17 Gew.-% enthält,
wobei die Isolierschicht (2) mindestens ein hochisolierendes Material beinhaltet, ausgewählt aus einem aluminiumoxidbasierten Keramikmaterial, einem aluminiumoxidbasierten Keramikmaterial, das Titanoxid in einer
Menge von 2 bis 4 Gew.-% enthält, einem magnesiumoxidbasierten Keramikmaterial, einem berylliumoxidbasierten Keramikmaterial, einem aluminiumnitridbasierten Keramikmaterial, einem siliziumnitridbasierten Keramikmaterial, Porzellan und Emaille, und

wobei die Innenelektrodenschicht (3) aus einem leitfähigen Material besteht, das Wolfram oder Molybdän beinhaltet.

6. Verfahren zur Herstellung einer thermoplastischen Harzfolie, umfassend:

einen Schritt des kontinuierlichen Extrudierens einer Harzfolie, die aus einem geschmolzenen thermoplastischen Harz (8) besteht und einen Volumenwiderstandswert von $10^9$ $\Omega$cm oder weniger aufweist, aus einem geerdeten Mundstück (7) auf eine Oberfläche einer Kühlwalze (1), die kontinuierlich gedreht wird;
einen Schritt des Kühlens und Verfestigens der Harzfolie, während die Harzfolie in einem Zustand engen Kontakts mit der Oberfläche der Kühlwalze gedreht und transportiert wird; und
einen Schritt des kontinuierlichen Abziehens der gekühlten und verfestigten Harzfolie (12) von der Kühlwalze, wobei die Kühlwalze (1) die Kühlwalze nach einem der Ansprüche 1 bis 5 ist, und
die Harzfolie in einen Zustand engen Kontakts mit der Kühlwalze (1) gebracht wird und die gekühlte und verfestigte Harzfolie (12) von der Kühlwalze (1) abgezogen wird, während eine vorbestimmte Gleichspannung an der Innenelektrodenschicht (3) anliegt.

7. Verfahren zur Herstellung einer thermoplastischen Harzfolie nach Anspruch 6,
wobei durch das Anlegen der Gleichspannung an die Innenelektrodenschicht die Oberfläche der äußersten Schicht (4) elektrifiziert wird, ein winziger elektrischer Strom durch einen winzigen Kontaktpunkt fließt, an dem die äußerste Schicht (4) und die Harzfolie miteinander in Kontakt stehen, Ladungen mit zueinander entgegengesetzten Polaritäten in der äußersten Schicht (4) bzw. der Harzfolie induziert werden, die einander über einen winzigen Spalt gegenüberliegen, der zwischen der äußersten Schicht (4) und der Harzfolie gebildet wird, und die Harzfolie aufgrund einer elektrostatischen Kraft, die durch die Ladungen mit zueinander entgegengesetzten Polaritäten erzeugt wird, in einen Zustand engen Kontakts mit der Kühlwalze gebracht wird.

8. Verfahren zur Herstellung einer thermoplastischen Harzfolie nach Anspruch 6 oder 7,
wobei die Haftung der Harzfolie (8, 12) an der Kühlwalze (1) hauptsächlich durch die Johnsen-Rahbek-Kraft verursacht wird.

9. Verfahren zur Herstellung einer thermoplastischen Harzfolie nach einem der Ansprüche 6 bis 8,
wobei eine Luftfeuchtigkeit in einem Raum, der eine Stelle auf der Kühlwalze (1) beinhaltet, an der die Harzfolie (8, 12) landet, auf 40 % relative Luftfeuchtigkeit oder weniger geregelt wird.

10. Verfahren zur Herstellung einer thermoplastischen Harzfolie nach einem der Ansprüche 6 bis 9,
wobei Ladungen mit einer Polarität, die der an der Innenelektrodenschicht (3) anliegenden Gleichspannung entgegengesetzt ist, auf eine Luftseite der Harzfolie (8, 12) auf einer Seite aufgebracht werden, die einer Seite, die in engem Kontakt mit der Kühlwalze (1) stehen soll, gegenüberliegt.

11. Verfahren zur Herstellung einer thermoplastischen Harzfolie nach einem der Ansprüche 6 bis 10,
wobei an die Innenelektrodenschicht (3) eine Gleichspannung von 0,3 bis 6,0 kV angelegt wird.

12. Verfahren zur Herstellung einer thermoplastischen Harzfolie nach einem der Ansprüche 6 bis 11,
wobei ein winziger elektrischer Strom, der über die Oberfläche der Kühlwalze zur Harzfolie (8, 12) fließt, die mit der Oberfläche der Kühlwalze (1) in Kontakt steht, über eine gesamte Kontaktfläche, an der die Kühlwalze (1) und die Harzfolie (8, 12) miteinander in Kontakt stehen, 0,005 bis 6 $\mu$A/cm$^2$ pro Flächeneinheit beträgt.

13. Verfahren zur Herstellung einer thermoplastischen Harzfolie nach einem der Ansprüche 6 bis 12, weiter umfassend

einen Schritt des Beförderns der von der Kühlwalze (1) abgezogenen Harzfolie (8, 12) auf einer geerdeten Abziehwalze 16, die aus einem Metall besteht,
wobei die Harzfolie (8, 12) nach dem Passieren der aus einem Metall bestehenden Abziehwalze (16) nicht elektrifiziert ist.

14. Verfahren zur Herstellung einer thermoplastischen Harzfolie nach einem der Ansprüche 6 bis 13,
wobei das thermoplastische Harz ein polyamidbasiertes Harz, ein Harz auf Basis eines verseiften Ethylen-Vinylacetat-Copolymers oder ein polyesterbasiertes Harz ist.

15. Verfahren zur Herstellung einer thermoplastischen Harzfolie nach einem der Ansprüche 6 bis 14,

wobei das thermoplastische Harz Kohlenstoff, ein Metall, eine leitfähige Verbindung, ein antistatisches Mittel oder ein Metallsalz als Zusatzstoff enthält.

**Revendications**

1. Rouleau de refroidissement (1) pour fabriquer une feuille de résine thermoplastique, destiné à être utilisé dans un procédé dans lequel une feuille de résine qui est constituée d'une résine thermoplastique fondue (8) et présente une valeur de résistivité volumique inférieure ou égale à $10^9$ $\Omega$cm est continuellement extrudée à partir d'un embout (7) mis à la terre sur une surface d'un rouleau de refroidissement qui tourne en continu, la feuille de résine est refroidie et solidifiée tout en étant tournée et transférée dans un état de contact étroit avec la surface du rouleau de refroidissement, puis la feuille de résine refroidie et solidifiée (12) est décollée en continu du rouleau de refroidissement pour obtenir une feuille de résine thermoplastique, le rouleau de refroidissement comprenant :

   une couche la plus externe (4) avec laquelle la feuille de résine (8, 12) entre en contact étroit ;
   une couche d'électrode interne unipolaire conductrice (3) qui est adjacente à un côté intérieur de la couche la plus externe (4) ; et
   une couche isolante (2) qui est adjacente à un côté intérieur de la couche d'électrode interne (3),
   dans lequel le rouleau de refroidissement (1) est configuré de telle sorte qu'une tension prédéterminée peut être appliquée à la couche d'électrode interne (3),
   la couche la plus externe (4) est constituée d'un matériau à base de céramique et présente une valeur de résistivité volumique allant de $10^7$ à $10^{13}$ $\Omega$cm à une température de 25 à 100°C,
   le rouleau de refroidissement (1) est conçu pour générer une force électrostatique avec laquelle la feuille de résine (8, 12) en contact avec la couche la plus externe (4) est amenée dans un état de contact étroit avec la couche la plus externe (4) dans un état dans lequel la tension prédéterminée est appliquée à la couche d'électrode interne (3),
   dans lequel la force électrostatique est principalement basée sur l'effet Johnsen-Rahbek et le rouleau de refroidissement (1) est refroidi par un milieu de refroidissement à l'intérieur du rouleau de refroidissement (1).

2. Rouleau de refroidissement (1) selon la revendication 1,

   dans lequel au moins l'une parmi la couche isolante (2), la couche d'électrode interne (3) et la couche la plus externe (4) est constituée d'un matériau formé par une technique de pulvérisation thermique ou d'un matériau incluant l'un parmi un liant inorganique et un liant organique, et
   dans lequel un traitement d'étanchéité est effectué sur au moins l'une parmi la couche isolante (2), la couche d'électrode interne (3) et la couche la plus externe (4).

3. Rouleau de refroidissement selon la revendication 1 ou 2, dans lequel la couche la plus externe (4) présente une rugosité de surface moyenne sur la ligne médiane Ra allant de 0,01 $\mu$m à 0,3 $\mu$m.

4. Rouleau de refroidissement selon l'une quelconque des revendications 1 à 3,
   dans lequel la valeur de résistivité volumique de la couche la plus externe (4) est sensiblement non thermosensible et un rapport de variation R100/R25 de la valeur de résistivité volumique à différentes températures est de 0,1 à 1,0, où le rapport de variation R100/R25 des valeurs de résistivité volumique à différentes températures fait référence à un rapport R100/R25 de la valeur de résistivité volumique à 100°C (R100) sur la valeur de résistivité volumique à 25°C (R25).

5. Rouleau de refroidissement selon l'une quelconque des revendications 1 à 4,

   dans lequel le matériau à base de céramique est une céramique à base d'alumine, une céramique à base d'oxyde de zirconium ou une céramique à base de magnésium contenant un composé choisi parmi l'oxyde de titane, l'oxyde de chrome, l'oxyde de silicium, l'oxyde de manganèse, l'oxyde de nickel et l'oxyde de fer, ou une céramique à base d'oxyde d'aluminium contenant de l'oxyde de titane en une quantité allant de 5 à 17 % en poids,
   dans lequel la couche isolante (2) inclut au moins un matériau hautement isolant choisi parmi un matériau céramique à base d'oxyde d'aluminium, un matériau céramique à base d'oxyde d'aluminium contenant de l'oxyde de titane en une quantité allant de 2 à 4 % en poids, un matériau céramique à base d'oxyde de magnésium, un matériau céramique à base d'oxyde de béryllium, un matériau céramique à base de nitrure d'aluminium, un matériau céramique à base de nitrure de silicium, de la porcelaine et de l'émail, et

dans lequel la couche d'électrode interne (3) est constituée d'un matériau conducteur incluant du tungstène ou du molybdène.

6. Procédé de fabrication d'une feuille de résine thermoplastique, comprenant :

une étape d'extrusion en continu d'une feuille de résine qui est constituée d'une résine thermoplastique fondue (8) et présente une valeur de résistivité volumique inférieure ou égale à $10^9$ Ωcm à partir d'un embout (7) mis à la terre sur une surface d'un rouleau de refroidissement (1) qui tourne en continu ;
une étape de refroidissement et de solidification de la feuille de résine tout en faisant tourner et en transférant la feuille de résine dans un état de contact étroit avec la surface du rouleau de refroidissement ; et
une étape de décollage en continu de la feuille de résine refroidie et solidifiée (12) du rouleau de refroidissement, dans lequel le rouleau de refroidissement (1) est le rouleau de refroidissement selon l'une quelconque des revendications 1 à 5, et
la feuille de résine est amenée dans un état de contact étroit avec le rouleau de refroidissement (1) et la feuille de résine refroidie et solidifiée (12) est décollée du rouleau de refroidissement (1) pendant qu'une tension de courant continu prédéterminée est appliquée à la couche d'électrode interne (3).

7. Procédé de fabrication d'une feuille de résine thermoplastique selon la revendication 6,
dans lequel, par l'application de la tension de courant continu à la couche d'électrode interne, la surface de la couche la plus externe (4) est électrifiée, un courant électrique infime circule à travers un point de contact minuscule auquel la couche la plus externe (4) et la feuille de résine sont en contact l'une avec l'autre, des charges présentant des polarités mutuellement inverses sont respectivement induites dans la couche la plus externe (4) et la feuille de résine, qui sont opposées l'une à l'autre via un minuscule espace formé entre la couche la plus externe (4) et la feuille de résine, et la feuille de résine est amenée dans un état de contact étroit avec le rouleau de refroidissement sous l'effet d'une force électrostatique générée par les charges présentant des polarités mutuellement inverses.

8. Procédé de fabrication d'une feuille de résine thermoplastique selon la revendication 6 ou 7,
dans lequel l'adhérence de la feuille de résine (8, 12) sur le rouleau de refroidissement (1) est principalement provoquée par la force de Johnsen-Rahbek.

9. Procédé de fabrication d'une feuille de résine thermoplastique selon l'une quelconque des revendications 6 à 8,
dans lequel l'humidité dans un espace incluant un emplacement sur le rouleau de refroidissement (1) au niveau duquel la feuille de résine (8, 12) atterrit est régulée pour être inférieure ou égale à 40 % HR.

10. Procédé de fabrication d'une feuille de résine thermoplastique selon l'une quelconque des revendications 6 à 9,
dans lequel des charges de polarité opposée à la tension de courant continu appliquée à la couche d'électrode interne (3) sont appliquées à une face à air de la feuille de résine (8, 12) sur un côté opposé à une face qui doit être en contact étroit avec le rouleau de refroidissement (1).

11. Procédé de fabrication d'une feuille de résine thermoplastique selon l'une quelconque des revendications 6 à 10,
dans lequel une tension de courant continu allant de 0,3 à 6,0 kV est appliquée à la couche d'électrode interne (3).

12. Procédé de fabrication d'une feuille de résine thermoplastique selon l'une quelconque des revendications 6 à 11,
dans lequel un courant électrique infime circulant vers la feuille de résine (8, 12) en contact avec la surface du rouleau de refroidissement (1) via la surface du rouleau de refroidissement va de 0,005 à 6 $\mu$A/cm$^2$ par unité de surface sur toute une zone de contact où le rouleau de refroidissement (1) et la feuille de résine (8, 12) sont en contact l'un avec l'autre.

13. Procédé de fabrication d'une feuille de résine thermoplastique selon l'une quelconque des revendications 6 à 12, comprenant en outre

une étape de transport de la feuille de résine (8, 12) décollée du rouleau de refroidissement (1) sur un rouleau de décollage (16) mis à la terre constitué d'un métal,
dans lequel la feuille de résine (8, 12) n'est pas électrifiée après avoir passé le rouleau de décollage (16) constitué d'un métal.

14. Procédé de fabrication d'une feuille de résine thermoplastique selon l'une quelconque des revendications 6 à 13,
dans lequel la résine thermoplastique est une résine à base de polyamide, une résine à base de copolymère éthylène-acétate de vinyle saponifié ou une résine à base de polyester.

15. Procédé de fabrication d'une feuille de résine thermoplastique selon l'une quelconque des revendications 6 à 14, dans lequel la résine thermoplastique contient du carbone, un métal, un composé conducteur, un agent antistatique ou un sel métallique en tant qu'additif.

FIG. 1

FIG. 2

FIG. 3

FIG. 4

FIG. 5

FIG. 6A

FIG. 6B

EP 3 730 265 B1

FIG. 7

■ ( i ) Actually measured   JR force-type   Present Invention／Antistatic rubber sheet($\rho$ =2.7×10$^8$Ωcm)
● ( ii ) Actually measured   JR force-type   Present Invention／VHS Magnetic film($\rho$ =6.4×10$^4$Ωcm)
▲ ( iii ) Actually measured   Coulomb force-type   99.6wt%Al$_2$O$_3$  t=0.25mm／VHS Magnetic film
△ ( iv ) Calculated   Coulomb force-type   99.6wt%Al$_2$O$_3$  t=0.25mm
○ ( v ) Calculated   Coulomb force-type   Nylon 6  t=0.25mm
□ ( vi ) Calculated   Coulomb force-type   Nylon 6  t=0.5mm
◇ ( vii ) Calculated   Coulomb force-type   Nylon 6  t=1.0mm

FIG. 8

Legend:
- ● Nylon 6 Molten resin sheet t=180 $\mu$m
- ▲ PET Molten resin sheet t=150 $\mu$m
- □ PET Molten resin sheet t=165 $\mu$m Pinning electrode added

Y-axis: Electric current density ($\mu$A/cm$^2$)
X-axis: Applied voltage (kV)

FIG. 9

FIG. 10

EP 3 730 265 B1

FIG. 11

EP 3 730 265 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0122721 A1
- EP 1273427 A2
- JP S376142 B
- JP S378978 B
- JP S5923270 B
- JP H146304 B
- JP S4814784 B
- JP S4814785 B
- JP S637135 B
- JP S4829311 B
- JP H698672 B
- JP 63011969 B
- JP H1158498 A
- JP H15127207 A
- JP S508743 B
- JP S6313815 B